# EUROPÄISCHE PATENTSCHRIFT

(11) **EP 4 005 002 B1**
(45) Veröffentlichungstag und Bekanntmachung des Hinweises auf die Patenterteilung: **09.07.2025**
(21) Anmeldenummer: 20754659.9
(22) Anmeldetag: 28.07.2020
(51) Int. Cl.: H01M 10/0587, H01M 10/6555, H01M 50/202, H01M 50/209, H01M 50/218, H01M 50/233, H01M 50/289, H01M 50/291, H01M 50/474, H01M 50/477, H01M 10/04

(54) **GALVANISCHE ZELLEN UND BATTERIEMODULE**
GALVANIC CELLS AND BATTERY MODULES
CELLULES GALVANIQUES ET MODULES DE BATTERIE

(30) Priorität: 29.07.2019 DE 102019211257
(43) Veröffentlichungstag der Anmeldung: 01.06.2022
(73) Patentinhaber: ElringKlinger AG, 72581 Dettingen (DE)
(72) Erfinder: HELDMAIER, Steffen, 72574 Bad Urach (DE); BEZLER, René Colin, 73275 Ohmden (DE); HAULER, Felix, 70794 Filderstadt (DE); WERZ, Ulrich, 72581 Dettingen (DE); SCHULZE, Chris, 72631 Aichtal (DE)
(74) Vertreter: DTS Patent- und Rechtsanwälte PartmbB
(86) Internationale Anmeldenummer: PCT/EP2020/071270
(87) Internationale Veröffentlichungsnummer: WO 2021/018889

(56) Entgegenhaltungen:
- EP-A2- 2 605 306
- WO-A1-2010/130747

## Beschreibung

Die vorliegende Erfindung betrifft galvanische Zellen sowie Batteriemodule, welche galvanische Zellen umfassen.

Batteriemodule umfassen typischerweise eine oder mehrere galvanische Zellen. Derartige galvanische Zellen unterliegen oftmals einem Schwellverhalten, welches unter anderem einerseits auf Alterungseffekten und andererseits auf der Interkalation und De-Interkalation von Ionen in die Elektroden der galvanischen Zellen basiert.

Ein auf einer Alterung der galvanischen Zellen beruhendes Wachstum derselben beruht beispielsweise auf einer Gasbildung aufgrund einer chemischen Zersetzung des Elektrolyts der galvanischen Zellen und/oder auf dem Wachstum einer Grenzflächenschicht auf den Elektroden der galvanischen Zellen, der sogenannten "solid electrolyte interphase" (SEI). Dabei können Wickellagen eines Zellwickels einer galvanischen Zelle sich voneinander ablösen (sogenannte "Delamination"). Ein Ablösen der Wickellagen eines Zellwickels kann beispielsweise durch ein Wachstum der Wickellagen in einer parallel zu einer Stapelrichtung eines Batteriemoduls verlaufenden Richtung und/oder durch ein Wachstum der Wickellagen in einer senkrecht zu einer Stapelrichtung eines Batteriemoduls verlaufenden Richtung hervorgerufen werden.

Der vorliegenden Erfindung liegt die Aufgabe zugrunde, eine galvanische Zelle und/oder ein Batteriemodul, das mehrere galvanische Zellen umfasst, bereitzustellen, welche eine erhöhte Lebensdauer aufweisen und welche insbesondere einfach und kostengünstig herstellbar sind.

In Hinsicht auf diese Aufgabenstellung relevanter Stand der Technik ist zum Beispiel aus den Dokumenten EP 2 605 306 A2 und WO 2010/130747 A1 bekannt.

Diese Aufgabe wird durch die Merkmale des unabhängigen Vorrichtungsanspruchs gelöst.

Vorteilhafte Weiterbildungen sind Gegenstand der Unteransprüche.

Eine erfindungsgemäße galvanische Zelle umfasst vorzugsweise Folgendes:
- einen oder mehrere Zellwickel;
- ein Zellgehäuse, welches einen Aufnahmeraum zur Aufnahme des einen oder der mehreren Zellwickel umfasst,

wobei der eine oder die mehreren Zellwickel in dem Aufnahmeraum des Zellgehäuses aufgenommen sind und
wobei das Zellgehäuse ein oder mehrere Abstandshalterelemente umfasst oder bildet.

Das Zellgehäuse begrenzt insbesondere jeweils einen Aufnahmeraum, in welchem der eine oder die mehreren Zellwickel einer jeweiligen galvanischen Zelle aufgenommen sind.

Die im Rahmen dieser Beschreibung und der beigefügten Ansprüche erwähnten galvanischen Zellen sind insbesondere Sekundärzellen.

Die galvanischen Zellen sind somit vorzugsweise wiederaufladbare galvanische Zellen.

In einem Batteriemodul, insbesondere in einem Zellenstapel, ist vorzugsweise jeweils eine Hauptseite einer galvanischen Zelle und/oder eines Zellgehäuses der galvanischen Zelle einer Hauptseite einer weiteren galvanischen Zelle und/oder eines Zellgehäuses der weiteren galvanischen Zelle zugewandt.

Eine jeweilige galvanische Zelle und/oder ein Zellgehäuse einer jeweiligen galvanischen Zelle umfassen vorzugsweise zwei Hauptseiten und vier Nebenseiten. Vorzugsweise sind die zwei Hauptseiten und/oder jeweils zwei Nebenseiten auf einander abgewandten Seiten einer jeweiligen galvanischen Zelle und/oder eines Zellgehäuses einer jeweiligen galvanischen Zelle angeordnet.

Unter einer Hauptseite einer jeweiligen galvanischen Zelle und/oder eines Zellgehäuses einer jeweiligen galvanischen Zelle wird insbesondere eine Seite verstanden, welche einen größeren Flächeninhalt aufweist als die Nebenseiten einer jeweiligen galvanischen Zelle und/oder eines Zellgehäuses einer jeweiligen galvanischen Zelle.

Die galvanische Zelle umfasst vorzugsweise einen oder mehrere Zellwickel ("jelly rolls").

Beispielsweise ist es denkbar, dass die galvanische Zelle jeweils zwei Zellwickel umfasst.

Günstig kann es sein, wenn Zellwickel der galvanischen Zelle im Wesentlichen parallel zueinander angeordnet sind.

Vorzugsweise sind Mittelebenen zweier parallel zueinander angeordneter Zellwickel jeweils parallel zueinander angeordnet.

Ein jeweiliger Zellwickel der galvanischen Zelle umfasst vorzugsweise zwei Umlenkbereiche, in welchen Wickellagen des jeweiligen Zellwickels umgelenkt sind, wobei die Wickellagen in einem jeweiligen Umlenkbereich eine gemeinsame Wickellinie aufweisen.

Eine Wickelrichtung eines jeweiligen Zellwickels verläuft vorzugsweise senkrecht zu den gemeinsamen Wickellinien der zwei Umlenkbereiche des jeweiligen Zellwickels.

Eine Wickellage umfasst vorzugsweise mehrere Schichten, beispielsweise zwei Elektrodenschichten und zwei Separatorenschichten.

Günstig kann es sein, wenn in einer Wickellage Elektrodenschichten und Separatorenschichten jeweils alternierend angeordnet sind.

Eine Schichtreihenfolge in einer Wickellage eines Zellwickels ist somit vorzugsweise wie folgt: Separatorenschicht, Elektrodenschicht, Separatorenschicht, Elektrodenschicht.

Die Elektrodenschichten umfassen vorzugsweise ein elektrisch leitfähiges Material oder sind aus diesem gebildet, beispielsweise aus Aluminium oder Kupfer.

Die Separatorenschichten umfassen vorzugsweise ein elektrisches Isoliermaterial oder sind aus diesem gebildet, beispielsweise aus Polyethylen und/oder Polypropylen.

Angaben, welche sich auf die Anordnung von Wickellagen eines jeweiligen Zellwickels von galvanischen Zellen beziehen, betreffen im Rahmen dieser Beschreibung und der beigefügten Ansprüche insbesondere einen Neuzustand eines jeweiligen Zellwickels und/oder einer jeweiligen galvanischen Zelle. Dabei ist es insbesondere denkbar, dass über eine Lebensdauer einer galvanischen Zelle oder eines Batteriemoduls, welches mehrere galvanische Zellen umfasst, aufgrund von Alterungserscheinungen geringfügige Abweichungen im Hinblick auf die Anordnung der Wickellagen auftreten können.

Die Wickellinien der zwei Umlenkbereiche eines jeweiligen Zellwickels sind vorzugsweise im Wesentlichen parallel zueinander angeordnet.

Zellwickel einer galvanischen Zelle sind in einem Umlenkbereich vorzugsweise achsensymmetrisch zu der gemeinsamen Wickellinie ausgebildet.

Insbesondere ist es denkbar, dass die Wickellagen des jeweiligen Zellwickels in einem jeweiligen Umlenkbereich in einem senkrecht zu der gemeinsamen Wickellinie genommenen Querschnitt im Wesentlichen halbkreisförmig angeordnet sind.

Günstig kann es sein, wenn die gemeinsame Wickellinie von Wickellagen des jeweiligen Zellwickels in einem jeweiligen Umlenkbereich des Zellwickels in einem senkrecht zu der gemeinsamen Wickellinie genommenen Querschnitt einen gemeinsamen Mittelpunkt von halbkreisförmig angeordneten Wickellagen des Zellwickels bildet.

Ein jeweiliger Zellwickel einer galvanischen Zelle umfasst insbesondere mehrere Wickellagen. Vorzugsweise sind Wickellagen des Zellwickels im Wesentlichen parallel zueinander angeordnet.

Der Zellwickel umfasst vorzugsweise eine Wickellagenbahn, welche die Wickellagen bildet. Vorzugsweise sind die Wickellagen durch Aufwickeln der Wickellagenbahn gebildet.

Insbesondere ist es dabei denkbar, dass eine einzige Wickellagenbahn sämtliche Wickellagen eines jeweiligen Zellwickels umfasst oder bildet.

Wickellagen eines jeweiligen Zellwickels sind in einem zwischen den zwei Umlenkbereichen des Zellwickels angeordneten Zwischenbereich des Zellwickels vorzugsweise im Wesentlichen parallel zu einer Mittelebene des Zellwickels angeordnet.

Günstig kann es sein, wenn ein Zellwickel jeweils zwei Umlenkbereiche umfasst, wobei ein Umlenkbereich jeweils eine gemeinsame Wickellinie aufweist, welche jeweils in der Mittelebene des Zellwickels angeordnet ist.

Eine Stapelrichtung eines Batteriemoduls verläuft vorzugsweise im Wesentlichen senkrecht zu einer Mittelebene von Zellwickeln der galvanischen Zellen des Batteriemoduls.

Günstig kann es sein, wenn Wickellagen eines jeweiligen Zellwickels in dem Zwischenbereich des Zellwickels im Wesentlichen senkrecht zu einer Stapelrichtung des Batteriemoduls und/oder parallel zu einer Mittelebene des Zellwickels angeordnet sind.

In dem jeweiligen Umlenkbereich des Zellwickels sind Wickellagen der Zellwickel vorzugsweise umgelenkt, insbesondere um ungefähr 180°.

Zellwickel einer galvanischen Zelle des Batteriemoduls sind vorzugsweise Flachwickel.

Unter einem Flachwickel wird im Rahmen dieser Beschreibung und der beigefügten Ansprüche insbesondere ein Zellwickel verstanden, welcher mehrere Wickellagen umfasst, die in zwei Umlenkbereichen umgelenkt sind, wobei zwischen den zwei Umlenkbereichen des Zellwickels ein Zwischenbereich des Zellwickels angeordnet ist, in welchem Wickellagen des Zellwickels parallel zu einer Mittelebene des Zellwickels angeordnet sind.

Bei einer Ausgestaltung der galvanischen Zelle ist vorgesehen, dass das Zellgehäuse der galvanischen Zelle an einer Hauptseite des Zellgehäuses, insbesondere an beiden Hauptseiten des Zellgehäuses, jeweils einen oder mehrere Abstandshalterbereiche und einen Mittelbereich umfasst, wobei der eine oder die mehreren Abstandshalterbereiche senkrecht zu einer Mittelebene eines Zellwickels der galvanischen Zelle von dem Mittelbereich weg ragen und jeweils ein Abstandshalterelement bilden.

Insbesondere kann vorgesehen sein, dass das Zellgehäuse der galvanischen Zelle an einer Hauptseite, insbesondere an beiden Hauptseiten, einen oder mehrere Übergangsbereiche umfasst, welche zwischen dem Mittelbereich und dem einen oder den mehreren Abstandshalterbereichen angeordnet sind.

Beispielsweise ist es denkbar, dass der eine oder die mehreren Abstandshalterbereiche eine Oberfläche umfassen, welche im Wesentlichen parallel zu einer Oberfläche des Mittelbereichs eines Zellwickels der galvanischen Zelle angeordnet sind.

Bei einer Ausgestaltung der galvanischen Zelle ist vorgesehen, dass der eine oder die mehreren Zellwickel der galvanischen Zelle zwei Umlenkbereiche umfasst, in welchen Wickellagen des jeweiligen Zellwickels umgelenkt sind, wobei die Wickellagen in einem jeweiligen Umlenkbereich eine gemeinsame Wickellinie aufweisen, und/oder dass der eine oder die mehreren Zellwickel der galvanischen Zelle einen zwischen den zwei Umlenkbereichen angeordneten Zwischenbereich umfassen.

Bei einer Ausgestaltung der galvanischen Zelle ist vorgesehen, dass eine Zellgehäusewandung des Zellgehäuses der galvanischen Zelle in dem Zwischenbereich eines Zellwickels der galvanischen Zelle an dem Zellwickel anliegt.

Günstig kann es insbesondere sein, wenn mindestens ungefähr 70 %, insbesondere mindestens ungefähr 90 %, einer Oberfläche eines Zwischenbereichs eines jeweiligen Zellwickels vollständig an dem Mittelbereich der Zellgehäusewandung anliegt.

Günstig kann es ferner sein, wenn der Mittelbereich der Zellgehäusewandung im Wesentlichen mit seiner vollständigen Oberfläche an einem Zwischenbereich eines jeweiligen Zellwickels anliegt.

Beispielsweise ist es denkbar, dass eine Zellgehäusewandung des Zellgehäuses einer jeweiligen galvanischen Zelle in dem Mittelbereich im Wesentlichen parallel zu einer Mittelebene eines Zellwickels der galvanischen Zelle angeordnet ist.

Bei einer Ausgestaltung der galvanischen Zelle ist vorgesehen, dass eine Zellgehäusewandung des Zellgehäuses der galvanischen Zelle in dem Umlenkbereich eines Zellwickels der galvanischen Zelle nicht an dem Zellwickel anliegt.

Günstig kann es ferner sein, wenn eine Zellgehäusewandung des Zellgehäuses einer jeweiligen galvanischen Zelle in dem einen oder den mehreren Abstandshalterbereichen und/oder in dem einen oder den mehreren Übergangsbereichen nicht an einem Zellwickel der galvanischen Zelle anliegt.

Vorzugsweise ist die Zellgehäusewandung des Zellgehäuses einer jeweiligen galvanischen Zelle in dem einen oder den mehreren Abstandshalterbereichen im Wesentlichen parallel zu einer Mittelebene eines Zellwickels der galvanischen Zelle angeordnet.

Ein oder mehrere Abstandshalterelemente werden insbesondere von einem oder mehreren Vorsprüngen und/oder Erhebungen einer senkrecht zur Stapelrichtung und/oder parallel zu einer Mittelebene eines Zellwickels der galvanischen Zelle verlaufenden Zellgehäusewandung gebildet, welche in der Stapelrichtung des Batteriemoduls und/oder senkrecht zu der Mittelebene des Zellwickels von der Zellgehäusewandung weg ragen.

Bei einer Ausgestaltung der galvanischen Zelle ist vorgesehen, dass der eine oder die mehreren Abstandshalterbereiche an einem Randbereich, insbesondere an einem ringförmig geschlossenen Randbereich, einer jeweiligen Hauptseite des Zellgehäuses einer jeweiligen galvanischen Zelle angeordnet sind.

Beispielsweise ist es denkbar, dass der Mittelbereich einer jeweiligen Hauptseite von einem ringförmig geschlossenen Abstandshalterbereich umgeben ist.

Der Mittelbereich bildet insbesondere eine Vertiefung in einer Hauptseite des Zellgehäuses der galvanischen Zelle.

Ein oder mehrere Abstandshalterelemente sind insbesondere in einem umlaufenden und/oder ringförmig geschlossenen Randbereich von Zellgehäusen zweier benachbarter galvanischer Zellen angeordnet oder gebildet. Vorzugsweise sind das eine oder die mehreren Abstandshalterelemente in einem Randbereich voneinander zugewandten Zellgehäusewandungen der Zellgehäuse zweier benachbarter galvanischer Zellen eines Batteriemoduls angeordnet oder gebildet, welche insbesondere senkrecht zur Stapelrichtung des Batteriemoduls und/oder parallel zu einer Mittelebene eines Zellwickels der galvanischen Zelle angeordnet sind.

Beispielsweise ist es denkbar, dass ein Zellgehäuse einer galvanischen Zelle im Wesentlichen symmetrisch ausgebildet ist, insbesondere im Wesentlichen symmetrisch zu einer senkrecht zu einer Stapelrichtung eines Batteriemoduls und/oder parallel zu einer Mittelebene eines Zellwickels einer galvanischen Zelle angeordneten Symmetrieebene.

Günstig kann es ferner sein, wenn ein Zellgehäuse einer galvanischen Zelle im Wesentlichen symmetrisch zu einer parallel zu einer Stapelrichtung eines Batteriemoduls angeordneten Symmetrieebene ausgebildet ist.

Bei einer Ausgestaltung der galvanischen Zelle ist vorgesehen, dass das Zellgehäuse der galvanischen Zelle an beiden Hauptseiten im Wesentlichen konkav ausgebildet ist

Bei einer Ausgestaltung der galvanischen Zelle ist vorgesehen, dass das Zellgehäuse der galvanischen Zelle an einer Hauptseite im Wesentlichen konkav und an einer Hauptseite im Wesentlichen konvex ausgebildet ist.

Bei einer Ausgestaltung der galvanischen Zelle ist vorgesehen, dass das Zellgehäuse der galvanischen Zelle ein metallisches Material umfasst oder durch dieses gebildet wird, beispielsweise Aluminium.

Das Zellgehäuse der galvanischen Zelle ist vorzugsweise ein sogenanntes "Hard-Case"-Gehäuse.

Günstig kann es insbesondere sein, wenn das Zellgehäuse der galvanischen Zelle mittels eines Umformprozesses hergestellt ist, beispielsweise durch Tiefziehen.

Insbesondere sind durch das Zellgehäuse der galvanischen Zelle gebildete Abstandshalterelemente mittels eines Umformprozesses hergestellt.

Ein Zellgehäuse, welches in einem Umformprozess, beispielsweise durch Tiefziehen, hergestellt ist, weist insbesondere eine im Wesentlichen gleichmäßige Wandstärke auf.

Alternativ dazu ist es denkbar, dass das Zellgehäuse der galvanischen Zelle durch Strangpressen hergestellt ist.

Günstig kann es ferner sein, wenn das Zellgehäuse der galvanischen Zelle durch einen Spritzprozess, beispielsweise durch einen Spritzgussprozess, hergestellt ist, insbesondere aus einem Kunststoffmaterial.

Ein Zellgehäuse, welches durch Strangpressen oder in einem Spritzgussprozess hergestellt ist, kann insbesondere auch eine ungleichmäßige Wandstärke aufweisen.

Beispielsweise ist es denkbar, dass das Zellgehäuse einer jeweiligen galvanischen Zelle ein Kunststoffbauteil, insbesondere ein Kunststoff-Spritzgussbauteil, ist.

Die erfindungsgemäße galvanische Zelle eignet sich insbesondere zur Verwendung in einem Batteriemodul, welches zwei oder mehr als zwei erfindungsgemäße galvanische Zellen umfasst.

Bei einer Ausgestaltung des Batteriemoduls ist vorgesehen, dass Zellgehäuse zweier benachbarter galvanischer Zellen im Bereich der durch das Zellgehäuse der galvanischen Zellen gebildeten Abstandshalterelemente unmittelbar aneinander anliegen.

Günstig kann es insbesondere sein, wenn Zellgehäuse zweier benachbarter galvanischer Zellen nur bereichsweise unmittelbar aneinander anliegen, insbesondere nur im Bereich der durch die Zellgehäuse der galvanischen Zellen gebildeten Abstandshalterelemente.

Unter unmittelbar aneinander anliegenden Zellgehäusen wird im Rahmen dieser Beschreibung und der beigefügten Ansprüche insbesondere verstanden, dass Zellgehäusewandungen der unmittelbar aneinander anliegenden Zellgehäuse entweder in direktem Materialkontakt stehen oder dass lediglich eine Klebefolie und/oder eine Isolationsfolie zwischen den zwei unmittelbar aneinander anliegenden Zellgehäusen angeordnet ist, welche den direkten Materialkontakt der Zellgehäusewandungen verhindert.

Bei einer Ausgestaltung des Batteriemoduls ist vorgesehen, dass Zellgehäuse zweier benachbarter galvanischer Zellen derart ausgebildet sind, dass Zellgehäusewandungen der zwei benachbarten galvanischen Zellen mittels der durch die Zellgehäuse gebildeten Abstandshalterelemente in einem zumindest abschnittsweise, vorzugsweise in einem ringförmig geschlossenen, durch die Abstandshalterelemente begrenzten Zwischenraum voneinander beabstandet angeordnet sind.

Die Zellgehäusewandungen der zwei benachbarten galvanischen Zellen liegen in dem Zwischenraum vorzugsweise nicht aneinander an.

Vorzugsweise begrenzen die Mittelbereiche und/oder die Übergangsbereiche einer jeweiligen Hauptseite des Zellgehäuses der zwei benachbarten galvanischen Zellen den Zwischenraum.

Insbesondere ist es denkbar, dass der Zwischenraum zwischen zwei benachbarten galvanischen Zellen gebildet wird, welche an den einander zugewandten Hauptseiten der Zellgehäuse der zwei benachbarten galvanischen Zellen im Wesentlichen konkav ausgebildet sind.

Alternativ dazu ist es denkbar, dass der Zwischenraum zwischen zwei benachbarten galvanischen Zellen gebildet wird, wobei eine erste der einander zugewandten Hauptseiten der Zellgehäuse der zwei benachbarten galvanischen Zellen im Wesentlichen konkav ausgebildet ist und wobei eine zweite der einander zugewandten Hauptseiten der Zellgehäuse der zwei benachbarten galvanischen Zellen im Wesentlichen konvex ausgebildet ist.

Bei einer Ausgestaltung des Batteriemoduls ist vorgesehen, dass in dem Zwischenraum ein oder mehrere Zusatzelemente angeordnet sind, beispielsweise ein oder mehrere Kompensationselemente, ein oder mehrere Propagationsschutzelemente, ein oder mehrere Sensorelemente und/oder ein oder mehrere Temperierelemente.

Beispielsweise ist es denkbar, dass in dem Zwischenraum angeordnete Sensorelemente Temperatursensoren, Dehnungssensoren und/oder Drucksensoren umfassen oder durch diese gebildet sind.

Ein Propagationsschutzelement eines Batteriemoduls umfasst beispielsweise Folgendes:
- ein Schichtsilikat, insbesondere Glimmer, Vermiculit und/oder Blähgraphit;
- Basalt;
- ein keramisches Material; und/oder
- eine Silikonmatte mit einem endothermen Füllmaterial.

Vorzugsweise weist ein Propagationsschutzelement in einer parallel zu einer Stapelrichtung eines Batteriemoduls verlaufenden Richtung eine Wärmeleitfähigkeit von höchstens ungefähr 1 W/m*K, insbesondere von höchstens ungefähr 0,3 W/m*K, vorzugsweise von höchstens ungefähr 0,1 W/m*K, auf.

Günstig kann es sein, wenn ein Propagationsschutzelement eine Wärmebeständigkeit von mindestens ungefähr 600 °C aufweist, beispielsweise eine Wärmebeständigkeit von mindestens ungefähr 800 °C.

Mittels eines oder mehrerer in dem Zwischenraum angeordneter Temperierelemente sind vorzugswiese die an den Zwischenraum angrenzenden galvanischen Zellen temperierbar, beispielsweise kühlbar.

Vorzugsweise ist mittels eines oder mehrerer in dem Zwischenraum angeordneter Temperierelemente Wärme aus dem Zwischenraum ableitbar.

Das eine oder die mehreren in dem Zwischenraum angeordneten Temperierelemente sind vorzugsweise zur aktiven Temperierung der an den Zwischenraum angrenzenden galvanischen Zellen und/oder zur passiven Temperierung der an den Zwischenraum angrenzenden galvanischen Zellen ausgebildet.

Im Rahmen dieser Beschreibung und der beigefügten Ansprüche wird unter einer aktiven Temperierung insbesondere eine Temperierung verstanden, welche im Wesentlichen auf Konvektion, insbesondere auf erzwungener Konvektion, beruht. Vorzugsweise wird eine aktive Temperierung durch ein durch äußere mechanische Einwirkung strömendes Temperierfluid, insbesondere durch eine durch äußere mechanische Einwirkung strömende Temperierflüssigkeit, realisiert.

Im Rahmen dieser Beschreibung und der beigefügten Ansprüche wird unter einer passiven Temperierung insbesondere eine Temperierung verstanden, welche im Wesentlichen durch Wärmeleitung erfolgt.

Mittels eines oder mehrerer in dem Zwischenraum angeordneter Propagationsschutzelemente ist vorzugsweise eine Propagation eines thermischen Durchgehens einer galvanischen Zelle verzögerbar und/oder verhinderbar.

Kompensationselemente sind in einer parallel zu einer Stapelrichtung eines Batteriemoduls verlaufenden Richtung vorzugsweise aufgrund einer Ausdehnung von Zellgehäusen zweier benachbarter galvanischer Zellen verformbar, beispielsweise komprimierbar.

Mittels eines oder mehrerer Kompensationselemente ist vorzugsweise eine Delamination von Zellwickeln einer jeweiligen galvanischen Zelle begrenzbar oder verhinderbar.

Das eine oder die mehreren Kompensationselemente umfassen beispielsweise ein Schaummaterial oder werden durch dieses gebildet.

In einem Auslieferungszustand eines Batteriemoduls sind Zellgehäuse zweier benachbarter galvanischer Zellen mittels in dem Zwischenraum angeordneter Kompensationselemente in der Stapelrichtung des Batteriemoduls vorzugsweise vorgespannt. Insbesondere ist dadurch eine Vorspannkraft realisierbar, welche einer insbesondere alterungsbedingten Ausdehnung der Zellgehäuse der zwei benachbarten galvanischen Zellen vorzugsweise entgegenwirkt.

Bei einer Ausgestaltung des Batteriemoduls ist vorgesehen, dass zwei benachbarte galvanische Zellen mittels eines oder mehrerer durch das Zellgehäuse der galvanischen Zellen gebildeter Abstandshalterelemente in einer Stapelrichtung des Batteriemoduls in einer eindeutigen Ausrichtung relativ zueinander positioniert oder positionierbar sind.

Insbesondere wird durch die durch das Zellgehäuse der galvanischen Zellen gebildeten Abstandshalterelemente eine Positionierhilfe gebildet.

Beispielsweise ist es denkbar, dass einander zugewandte Zellgehäusewandungen von Zellgehäusen zweier benachbarter galvanischer Zellen an den Hauptseiten des Zellgehäuses jeweils einen oder mehrere als Abstandshalterelemente ausgebildete Vorsprünge oder Erhebungen und mit den Vorsprüngen oder Erhebungen korrespondierende Ausnehmungen umfasst.

Günstig kann es sein, wenn die Vorsprünge oder Erhebungen und die Ausnehmungen derart an den Hauptseiten der Zellgehäuse zweier benachbarter galvanischer Zellen angeordnet sind, dass die galvanischen Zellen in der Stapelrichtung des Batteriemoduls nur in einer Ausrichtung relativ zueinander positionierbar sind.

Eine erfindungsgemäße galvanische Zelle umfasst vorzugsweise Folgendes:
- einen oder mehrere Zellwickel;
- ein Zellgehäuse, welches einen Aufnahmeraum zur Aufnahme des einen oder der mehreren Zellwickel umfasst;
- ein oder mehrere Kompensationselemente,

wobei der eine oder die mehreren Zellwickel in dem Aufnahmeraum des Zellgehäuses aufgenommen sind und
wobei das eine oder die mehreren Kompensationselemente in dem Aufnahmeraum des Zellgehäuses angeordnet sind.

Bei einer Ausgestaltung der galvanischen Zelle ist vorgesehen, dass das eine oder die mehreren Kompensationselemente komprimierbar sind, insbesondere senkrecht zu einer Hauptseite des Zellgehäuses und/oder senkrecht zu einer Mittelebene eines Zellwickels der galvanischen Zelle.

Vorzugsweise ist ein Schwellverhalten zweier benachbarter galvanischer Zellen mittels der in dem Aufnahmeraum angeordneten Kompensationselemente einfach ausgleichbar.

Mehrere galvanische Zellen, welche Kompensationselemente umfassen, die innerhalb der Zellgehäuse der galvanischen Zellen angeordnet sind, sind somit vorzugsweise in einer Stapelrichtung eines Batteriemoduls einfach montierbar, insbesondere einfach miteinander verspannbar.

Vorzugsweise ist eine definierte Belastung eines oder mehrerer Zellwickel einer jeweiligen galvanischen Zelle bei jedem Ladezustand und/oder bei jedem Alterungszustand der galvanischen Zelle realisierbar.

Insbesondere ist eine Belastung eines oder mehrerer Zellwickel einer jeweiligen galvanischen Zelle unabhängig von einem oder mehreren der folgenden Faktoren realisierbar:
- einer Steifigkeit eines Zellgehäuses der galvanischen Zelle;
- auf das Zellgehäuse der galvanischen Zelle wirkenden Spannkräften, insbesondere parallel zu einer Stapelrichtung des Batteriemoduls auf das Zellgehäuse wirkenden Spannkräften;
- einem Wachstum eines oder mehrerer Zellwickel der galvanischen Zelle.

Eine Hauptseite des Zellgehäuses ist in einem Batteriemodul, welches mehrere galvanische Zellen umfasst, vorzugsweise senkrecht zu einer Stapelrichtung des Batteriemoduls angeordnet.

Das eine oder die mehreren Kompensationselemente sind vorzugsweise elastisch komprimierbar. Alternativ dazu ist es denkbar, dass das eine oder die mehreren Kompensationselemente plastisch komprimierbar sind.

Mittels des einen oder der mehreren Kompensationselemente ist vorzugsweise ein Wachstum des einen oder der mehreren Zellwickel einer galvanischen Zelle über die Lebensdauer der galvanischen Zelle ausgleichbar, insbesondere in einer senkrecht zu einer Hauptseite des Zellgehäuses der galvanischen Zelle verlaufenden Richtung.

Vorzugsweise ist mittels des einen oder der mehreren in dem Zellgehäuse einer galvanischen Zelle angeordneten Kompensationselemente ein Wachstum des einen oder der mehreren Zellwickel der galvanischen Zelle derart ausgleichbar, dass ein Zellgehäuse der galvanischen Zelle in einer senkrecht zu einer Hauptseite des Zellgehäuses verlaufenden Richtung an einem Lebensdauerende der galvanischen Zelle im Wesentlichen eine Höhe aufweist, welche der Höhe des Zellgehäuses der galvanischen Zelle in einem Auslieferungszustand der galvanischen Zelle entspricht.

Vorzugsweise kann aufgrund eines oder mehrerer Kompensationselemente, welche innerhalb des Zellgehäuses der galvanischen Zelle angeordnet sind, eine Änderung der äußeren Abmessungen der galvanischen Zelle aufgrund eines Wachstums von Zellwickeln der galvanischen Zellen begrenzt oder verhindert werden.

Bei einer Ausgestaltung der galvanischen Zelle ist vorgesehen, dass das eine oder die mehreren Kompensationselemente in einem Auslieferungszustand der galvanischen Zelle senkrecht zu einer Mittelebene eines Zellwickels der galvanischen Zelle eine Dicke derart aufweisen, dass das eine oder die mehreren innerhalb des Zellgehäuses der galvanischen Zelle angeordneten Kompensationselemente und innerhalb des Zellgehäuses angeordnete Zellwickel einen Aufnahmeraum des Zellgehäuses senkrecht zu der Mittelebene des Zellwickels der galvanischen Zelle im Wesentlichen vollständig ausfüllen.

Insbesondere sind mittels einer oder mehrerer innerhalb eines Zellgehäuses einer jeweiligen galvanischen Zelle angeordneter Kompensationselemente Hohlräume innerhalb des Zellgehäuses, insbesondere parallel zu einer Stapelrichtung des Batteriemoduls, verhinderbar.

Vorzugsweise ist somit eine Delamination von Zellwickeln einer jeweiligen galvanischen Zelle begrenzbar oder verhinderbar.

Vorzugsweise ist mittels eines oder mehrerer innerhalb eines Zellgehäuses einer jeweiligen galvanischen Zelle angeordneter Kompensationselemente ein optimaler Betriebszustand der galvanischen Zelle über die gesamte Produktlebensdauer derselben einstellbar.

Bei einer Ausgestaltung der galvanischen Zelle ist vorgesehen, dass das eine oder die mehreren Kompensationselemente ein komprimierbares Material umfassen oder aus einem komprimierbaren Material gebildet sind.

Bei einer Ausgestaltung der galvanischen Zelle ist vorgesehen, dass das komprimierbare Material ein Schaummaterial ist.

Bei einer Ausgestaltung der galvanischen Zelle ist vorgesehen, dass ein oder mehrere der in dem Aufnahmeraum des Zellgehäuses angeordneten Kompensationselemente zwischen zwei benachbarten Zellwickeln der galvanischen Zelle angeordnet sind.

Insbesondere sind ein oder mehrere innerhalb des Zellgehäuses der galvanischen Zelle angeordnete Kompensationselemente in einer Stapelrichtung zwischen zwei benachbarten Zellwickeln der galvanischen Zelle angeordnet.

Bei einer Ausgestaltung der galvanischen Zelle ist vorgesehen, dass eine oder mehrere der in dem Aufnahmeraum des Zellgehäuses angeordneten Kompensationselemente zwischen einer Zellgehäusewandung des Zellgehäuses und einem Zellwickel der galvanischen Zelle angeordnet sind, insbesondere bezogen auf eine senkrecht zu einer Mittelebene des Zellwickels verlaufende Richtung.

Günstig kann es sein, wenn ein oder mehrere in dem Aufnahmeraum des Zellgehäuses angeordnete Kompensationselemente zwischen einer Zellgehäusewandung einer Hauptseite des Zellgehäuses und einem Zellwickel der galvanischen Zelle angeordnet sind.

Ein oder mehrere der in dem Aufnahmeraum des Zellgehäuses angeordneten Kompensationselemente sind insbesondere zwischen einer senkrecht zu einer Stapelrichtung eines Batteriemoduls verlaufenden Zellgehäusewandung des Zellgehäuses und einem Zellwickel der galvanischen Zelle angeordnet.

Bei einer Ausgestaltung der galvanischen Zelle ist vorgesehen, dass zwischen Zellgehäusewandungen zweier Hauptseiten des Zellgehäuses der galvanischen Zelle und einem oder mehreren innerhalb des Zellgehäuses angeordneten Zellwickeln jeweils ein oder mehrere Kompensationselemente angeordnet sind.

Insbesondere sind zwischen einer Zellgehäusewandung einer ersten Hauptseite des Zellgehäuses und einem Zellwickel der galvanischen Zelle ein oder mehrere Kompensationselemente angeordnet.

Vorzugsweise sind ferner zwischen einer Zellgehäusewandung einer zweiten Hauptseite des Zellgehäuses und einem Zellwickel der galvanischen Zelle ein oder mehrere Kompensationselemente angeordnet.

Bei einer Ausgestaltung der galvanischen Zelle ist vorgesehen, dass ein zwischen zwei benachbarten Zellwickeln der galvanischen Zellen angeordnetes Kompensationselement und/oder ein zwischen einer Zellgehäusewandung des Zellgehäuses und einem Zellwickel der galvanischen Zelle angeordnetes Kompensationselement parallel zu einer Wickelrichtung des Zellwickels eine Breite aufweist, welche mindestens ungefähr der Breite eines Zwischenbereichs des Zellwickels entspricht.

Bei einer Ausgestaltung der galvanischen Zelle ist vorgesehen, ein oder mehrere der in dem Aufnahmeraum des Zellgehäuses angeordneten Kompensationselemente innerhalb eines oder mehrerer Zellwickel der galvanischen Zelle angeordnet sind.

Wickellagen eines jeweiligen Zellwickels sind vorzugsweise um jeweils ein Kompensationselement herum gewickelt.

Vorzugsweise kann durch Herumwickeln von Wickellagen eines jeweiligen Zellwickels um jeweils ein Kompensationselement verhindert werden, dass die Wickellagen unmittelbar im Bereich einer gemeinsamen Wickellinie umgelenkt werden.

Insbesondere kann durch Herumwickeln von Wickellagen eines jeweiligen Zellwickels um jeweils ein Kompensationselement ein Umlenkradius vergrößert werden.

Vorzugsweise beträgt ein Umlenkradius in einem Umlenkbereich eines Zellwickels mindestens ungefähr 0,5 mm, insbesondere mindestens ungefähr 1 mm, beispielsweise mindestens 1,5 mm.

Vorzugsweise kann dabei eine Lebensdauer der galvanischen Zelle verlängert werden.

Bei einer Ausgestaltung der galvanischen Zelle ist vorgesehen, dass ein innerhalb eines Zellwickels angeordnetes Kompensationselement der galvanischen Zelle im Wesentlichen parallel zu einer Mittelebene des jeweiligen Zellwickels angeordnet ist.

Bei einer Ausgestaltung der galvanischen Zelle ist vorgesehen, dass ein innerhalb eines Zellwickels angeordnetes Kompensationselement der galvanischen Zelle parallel zu einer Wickelrichtung des Zellwickels eine Breite aufweist, welche im Wesentlichen der Breite eines Zwischenbereichs des Zellwickels entspricht.

Ein innerhalb eines Zellwickels angeordnetes Kompensationselement der galvanischen Zelle weist parallel zu der Wickelrichtung des Zellwickels vorzugsweise eine Breite auf, welche höchstens ungefähr der Breite eines Zwischenbereichs des Zellwickels entspricht.

Insbesondere ist es denkbar, dass innerhalb sämtlicher Zellwickel einer jeweiligen galvanischen Zelle jeweils ein oder mehrere Kompensationselemente angeordnet sind.

Vorzugsweise ist mittels eines oder mehrerer Kompensationselemente, welche innerhalb eines oder mehrerer Zellwickel der galvanischen Zelle angeordnet sind, ein Wachstum eines jeweiligen Zellwickels, insbesondere in einer senkrecht zu einer Mittelebene eines Zellwickels verlaufenden Richtung, derart ausgleichbar, dass die galvanische Zelle am Lebensdauerende derselben in der senkrecht zu einer Mittelebene des Zellwickels verlaufenden Richtung im Wesentlichen eine Höhe aufweist, welche der Höhe der galvanischen Zelle in einem Auslieferungszustand derselben entspricht.

Bei einer Ausgestaltung der galvanischen Zelle ist vorgesehen, dass ein oder mehrere der in dem Aufnahmeraum des Zellgehäuses angeordneten Kompensationselemente in einer parallel zu einer gemeinsamen Wickellinie eines Zellwickels verlaufenden Richtung eine Höhe aufweisen, welche im Wesentlichen einer Höhe des einen oder der mehreren Zellwickel der galvanischen Zelle entspricht.

Vorzugsweise weisen der eine oder die mehreren Zellwickel der galvanischen Zelle in einer parallel zu einer gemeinsamen Wickellinie eines Zellwickels verlaufenden Richtung jeweils eine im Wesentlichen identische Höhe auf.

Die erfindungsgemäße galvanische Zelle eignet sich insbesondere zur Verwendung in einem Batteriemodul, welches zwei oder mehr als zwei erfindungsgemäße galvanische Zellen umfasst.

Ein erfindungsgemäßes Batteriemodul umfasst vorzugsweise Folgendes:
- zwei oder mehr als zwei galvanische Zellen, welche jeweils einen oder mehrere Zellwickel umfassen;
- ein oder mehrere Abstandshalterelemente,
wobei jeweils ein oder mehrere Abstandshalterelemente zwischen zwei benachbarten galvanischen Zellen angeordnet sind.

Günstig kann es sein, wenn ein Batteriemodul ein Akkumulatormodul bildet.

Vorzugsweise sind die galvanischen Zellen des Batteriemoduls entlang einer Stapelrichtung angeordnet.

Entlang einer Stapelrichtung angeordnete galvanische Zellen des Batteriemoduls bilden insbesondere einen Zellenstapel.

Günstig kann es sein, wenn die galvanischen Zellen des Batteriemoduls entlang der Stapelrichtung miteinander fluchtend angeordnet sind.

Vorzugsweise sind zwischen einander zugewandten Zellwickeln von zwei in einer Stapelrichtung benachbarten galvanischen Zellen in der Stapelrichtung jeweils ein oder mehrere Abstandshalterelemente angeordnet.

Die galvanischen Zellen sind vorzugsweise mit einer Hauptseite derselben und/oder mit einer Hauptseite eines Zellgehäuses einer jeweiligen galvanischen Zelle in einer Stapelrichtung nebeneinander angeordnet.

Vorzugsweise sind einander zugewandte Zellwickel von zwei benachbarten galvanischen Zellen jeweils mittels eines oder mehrerer Abstandshalterelemente beabstandet voneinander angeordnet, insbesondere in einer Stapelrichtung.

Mittels eines oder mehrerer zwischen zwei benachbarten galvanischen Zellen angeordneter Abstandshalterelemente ist vorzugsweise ein vorgegebener Abstand der zwei benachbarten galvanischen Zellen einstellbar.

Günstig kann es sein, wenn mittels des einen oder der mehreren Abstandshalterelemente eine Expansion einer jeweiligen galvanischen Zelle, insbesondere eines Zellgehäuses der jeweiligen galvanischen Zelle, welche auf einer Gasbildung aufgrund einer chemischen Zersetzung des Elektrolyts der galvanischen Zelle beruht, im Wesentlichen verhindert werden kann und wenn eine Expansion einer jeweiligen galvanischen Zelle, insbesondere eines Zellgehäuses der jeweiligen galvanischen Zelle, welche auf einem Wachstum des einen oder der mehreren Zellwickel der galvanischen Zelle beruht, dennoch zugelassen wird.

Dabei ist es vorzugsweise denkbar, dass aufgrund der Begrenzung einer Expansion einer jeweiligen galvanischen Zelle, welche auf einer Gasbildung beruht, eine Delamination von Zellwickeln der galvanischen Zelle verhindert werden kann. Insbesondere ist dabei eine Alterung der galvanischen Zelle verzögerbar.

Vorzugsweise ist mittels des einen oder der mehreren Abstandshalterelemente ein Druck auf Zellwickel einer jeweiligen galvanischen Zelle des Batteriemoduls reduzierbar, vorzugsweise im Bereich der gemeinsamen Wickellinien zweier Umlenkbereiche eines Zellwickels. Insbesondere ist dabei eine Kapazitätsabnahme der galvanischen Zellen des Batteriemoduls reduzierbar. Günstig kann es ferner sein, wenn eine mechanische Überbeanspruchung von Zellwickeln der galvanischen Zellen mittels des einen oder der mehreren Abstandshalterelemente vermieden wird.

Bei einer Ausgestaltung des Batteriemoduls ist vorgesehen, dass ein jeweiliger Zellwickel der galvanischen Zellen des Batteriemoduls zwei Umlenkbereiche umfasst, in welchen Wickellagen des jeweiligen Zellwickels umgelenkt sind, wobei die Wickellagen in einem jeweiligen Umlenkbereich eine gemeinsame Wickellinie aufweisen.

Bei einer Ausgestaltung des Batteriemoduls ist vorgesehen, dass das eine oder die mehreren Abstandshalterelemente jeweils derart angeordnet und/oder ausgebildet sind, dass in einer Stapelrichtung des Batteriemoduls mittels der Abstandshalterelemente eine Krafteinleitung in den einen oder die mehreren Zellwickel einer jeweiligen galvanischen Zelle vermeidbar ist, insbesondere im Bereich einer Wickellinie eines jeweiligen Umlenkbereichs des einen oder der mehreren Zellwickel.

Mittels des einen oder der mehreren Abstandshalterelemente ist ein Kraftfluss in einer Stapelrichtung des Batteriemoduls vorzugsweise derart leitbar, dass in der Stapelrichtung vorzugsweise keine Kraft auf eine Wickellinie eines jeweiligen Umlenkbereichs des einen oder der mehreren Zellwickel ausgeübt wird.

Bei einer Ausgestaltung des Batteriemoduls ist vorgesehen, dass ein Kraftfluss zwischen einander benachbarten galvanischen Zellen in einer Stapelrichtung des Batteriemoduls ausschließlich oder zu mindestens ungefähr 75 %, insbesondere zu mindestens ungefähr 85 %, vorzugsweise zu mindestens ungefähr 95 %, über das eine oder die mehreren Abstandshalterelemente erfolgt.

Bei einer Ausgestaltung des Batteriemoduls ist vorgesehen, dass die galvanischen Zellen prismatische Zellen, insbesondere im Wesentlichen quaderförmige Zellen, sind.

Insbesondere ist es denkbar, dass die galvanischen Zellen nach dem PHEV2-Format ausgebildet sind.

Günstig kann es sein, wenn ein Zellgehäuse einer jeweiligen galvanischen Zelle prismatisch, insbesondere im Wesentlichen quaderförmig, ausgebildet ist.

Bei einer Ausgestaltung des Batteriemoduls ist vorgesehen, dass eine jeweilige galvanische Zelle jeweils ein Zellgehäuse umfasst, in welchem der eine oder die mehreren Zellwickel einer jeweiligen galvanischen Zelle angeordnet sind.

Bei einer Ausgestaltung des Batteriemoduls ist vorgesehen, dass zwischen Zellgehäusen zweier benachbarter galvanischer Zellen jeweils ein oder mehrere Abstandshalterelemente angeordnet sind.

Insbesondere sind jeweils ein oder mehrere Abstandshalterelemente zwischen einander zugewandten Zellgehäusewandungen von Zellgehäusen zweier benachbarter galvanischer Zellen angeordnet.

Beispielsweise kann vorgesehen sein, dass in einer Stapelrichtung des Batteriemoduls mehrere Abstandshalterelemente hintereinander zwischen Zellgehäusen zweier benachbarter galvanischer Zellen angeordnet sind.

Alternativ dazu ist es denkbar, dass in einer Stapelrichtung des Batteriemoduls jeweils nur ein einziges Abstandshalterelement zwischen Zellgehäusen zweier benachbarter galvanischer Zellen angeordnet ist.

Günstig kann es ferner sein, wenn senkrecht zu einer Stapelrichtung des Batteriemoduls mehrere Abstandshalterelemente nebeneinander angeordnet sind.

Beispielsweise ist es denkbar, dass ein oder mehrere Abstandshalterelemente mittels einer Applikationsvorrichtung auf ein Zellgehäuse einer der zwei benachbarten galvanischen Zellen aufgebracht, beispielsweise aufspritzt, werden. Günstig kann es ferner sein, wenn ein oder mehrere Abstandshalterelemente mittels einer Applikationsvorrichtung auf beide Zellgehäuse der zwei benachbarten galvanischen Zellen aufgebracht, beispielsweise aufgespritzt werden.

Insbesondere ist es denkbar, dass mittels der Applikationsvorrichtung Abstandshalterelemente auf die Zellgehäuse aufgebracht werden, welche ein Kunststoffmaterial, beispielsweise Silikon und/oder Polyurethan, umfassen oder aus diesem gebildet sind.

Beispielsweise ist es denkbar, dass als Abstandshalterelemente eine Wulst und/oder Noppen aus einem Kunststoffmaterial mittels der Applikationsvorrichtung auf die Zellgehäuse aufgebracht, beispielsweise aufgespritzt, werden.

Dabei ist es insbesondere denkbar, dass mittels der Applikationsvorrichtung auf die Zellgehäuse aufgebrachtes Kunststoffmaterial mittelbar oder unmittelbar auf das Zellgehäuse aufgebracht wird.

Mittelbar auf die Zellgehäuse aufgebrachtes Kunststoffmaterial wird insbesondere auf eine Isolationsfolie aufgebracht, welche unmittelbar auf eine Zellgehäusewandung des jeweiligen Zellgehäuses aufgebracht und/oder mit dieser verbunden ist.

Bei einer Ausgestaltung des Batteriemoduls ist vorgesehen, dass ein oder mehrere Abstandshalterelemente, welche zwischen Zellgehäusen zweier benachbarter galvanischer Zellen angeordnet sind, an einer Hauptseite der jeweiligen Zellgehäuse angeordnet sind.

Bei einer Ausgestaltung des Batteriemoduls ist vorgesehen, dass ein oder mehrere zwischen zwei Zellgehäusen zweier benachbarter galvanischer Zellen angeordnete Abstandshalterelemente jeweils ein Rahmenelement und/oder ein Zwischenelement umfassen oder bilden.

Bei einer Ausgestaltung des Batteriemoduls ist vorgesehen, dass ein jeweiliges Rahmenelement einen von dem Rahmenelement und den zwei benachbarten Zellgehäusen umgebenen Innenraum zumindest bereichsweise, beispielsweise mindestens zweiseitig, begrenzt.

Mittels eines Rahmenelements eines jeweiligen Abstandshalterelements ist vorzugsweise ein vorgegebener Abstand zweier benachbarter galvanischer Zellen zueinander festlegbar, insbesondere an einem Randbereich voneinander zugewandten Hauptseiten der jeweiligen Zellgehäuse der galvanischen Zellen.

Beispielsweise ist es denkbar, dass jeweils genau ein Rahmenelement zwischen zwei Zellgehäusen zweier benachbarter galvanischer Zellen angeordnet ist.

Günstig kann es beispielsweise sein, wenn ein jeweiliges Rahmenelement den Zwischenraum zumindest dreiseitig umgibt. Beispielsweise ist es dabei denkbar, dass ein jeweiliges Rahmenelement im Wesentlichen U-Förmig ausgebildet ist.

Bei einer Ausgestaltung des Batteriemoduls ist vorgesehen, dass ein jeweiliges Rahmenelement Folgendes umfasst:
- zwei Stützstege, welche parallel zueinander und/oder parallel zu einer gemeinsamen Wickellinie eines Umlenkbereichs eines Zellwickels einer galvanischen Zelle angeordnet sind; und/oder
- einen oder mehrere Verbindungsstege, wobei die zwei Stützstege mittels des einen oder der mehreren Verbindungsstege verbunden sind.

Stützstege und/oder Verbindungsstege eines jeweiligen Rahmenelements verlaufen vorzugsweise entlang eines Randbereichs einer jeweiligen Hauptseite der zwei benachbarten Zellgehäuse.

Vorzugsweise weisen Stützstege und/oder Verbindungsstege des Rahmenelements auf einer an einem Zellgehäuse anliegenden Seite des Rahmenelements keine scharfe Kante auf.

Insbesondere kann vorgesehen sein, dass Kanten von Stützstegen und/oder Verbindungsstegen des Rahmenelements auf einer an einem Zellgehäuse anliegenden Seite des Rahmenelements abgerundet sind.

Vorzugsweise können dabei Spannungsspitzen und/oder Kantenabdrücke an dem Zellgehäuse vermieden werden.

Bei einer Ausgestaltung des Batteriemoduls ist vorgesehen, dass ein jeweiliges Rahmenelement ringförmig geschlossen ausgebildet ist.

Ein ringförmig geschlossenes Rahmenelement umfasst vorzugsweise zwei Stützstege und zwei Verbindungsstege.

Die zwei Stützstege sind vorzugsweise im Wesentlichen parallel zueinander angeordnet.

Bei einer Ausgestaltung des Batteriemoduls ist vorgesehen, dass die zwei Stützstege und/oder der eine oder die mehreren Verbindungsstege quer, insbesondere senkrecht, zu einer Haupterstreckungsrichtung derselben eine im Wesentlichen konstante Breite aufweisen.

Alternativ dazu ist es möglich, dass die zwei Stützstege und/oder der eine oder die mehreren Verbindungsstege eine quer, insbesondere senkrecht, zu einer Haupterstreckungsrichtung derselben variierende Breite aufweisen.

Insbesondere kann dabei ein Innenprofil des Rahmenelements an ein Schwellverhalten der zwei benachbarten galvanischen Zellen angepasst werden.

Eine Haupterstreckungsrichtung der zwei Stützstege und/oder des einen oder der mehreren Verbindungsstege verläuft insbesondere senkrecht zu einer Stapelrichtung des Batteriemoduls.

Vorzugsweise verläuft eine Haupterstreckungsrichtung der zwei Stützstege parallel zu einer gemeinsamen Wickellinie eines Umlenkbereichs eines Zellwickels einer galvanischen Zelle.

Bei einer Ausgestaltung des Batteriemoduls ist vorgesehen, dass die Breite der zwei Stützstege im Wesentlichen der Breite des einen oder der mehreren Verbindungsstege entspricht.

Bei einer Ausgestaltung des Batteriemoduls ist vorgesehen, dass die Breite der zwei Stützstege von der Breite des einen oder der mehreren Verbindungsstege verschieden ist.

Günstig kann es beispielsweise sein, wenn die Breite des einen oder der mehreren Verbindungsstege um einen Faktor von mindestens ungefähr 1,5 größer ist als die Breite der zwei Stützstege, beispielsweise um einen Faktor von mindestens ungefähr 2.

Bei einer Ausgestaltung des Batteriemoduls ist vorgesehen, dass die Breite der zwei Stützstege ungefähr einer Summe einer Wandstärke einer Zellgehäusewandung eines Zellgehäuses einer galvanischen Zelle, eines Abstands eines Zellwickels zu der Zellgehäusewandung des Zellgehäuses und einer Breite eines Umlenkbereichs eines Zellwickels entspricht.

Die vorstehend genannten Abmessungen beziehen sich vorzugsweise auf eine parallel zu einer Wickelrichtung eines Zellwickels und/oder senkrecht zu einer Stapelrichtung des Batteriemoduls verlaufende Richtung.

Vorzugsweise entspricht eine Breite eines Umlenkbereichs eines Zellwickels im Wesentlichen der Hälfte einer Dicke eines Zellwickels parallel zu einer Stapelrichtung des Batteriemoduls.

Bei einer Ausgestaltung des Batteriemoduls ist vorgesehen, dass eine Projektion eines jeweiligen Stützstegs eines Rahmenelements, insbesondere eines an einem Zellgehäuse einer galvanischen Zelle anliegenden Bereichs des Stützstegs, entlang der Stapelrichtung auf eine senkrecht zu der Stapelrichtung angeordnete Projektionsebene einen Abstand von einer Projektion einer jeweiligen gemeinsamen Wickellinie eines Umlenkbereichs eines Zellwickels einer galvanischen Zelle aufweist.

Vorzugsweise ist die Projektion des Stützstegs, insbesondere des an dem Zellgehäuse anliegenden Bereichs des Stützstegs, in einer parallel zu einer Wickelrichtung verlaufenden Richtung von der Projektion der gemeinsamen Wickellinie beabstandet, insbesondere nach außen.

Die Projektion des an dem Zellgehäuse anliegenden Bereichs des Stützstegs überlappt die Projektion der gemeinsamen Wickellinie vorzugsweise nicht.

Günstig kann es ferner sein, wenn eine Projektion eines Zwischenelements entlang der Stapelrichtung auf eine senkrecht zu der Stapelrichtung angeordnete Projektionsebene einen Abstand von einer Projektion einer jeweiligen gemeinsamen Wickellinie eines Umlenkbereichs eines Zellwickels einer galvanischen Zelle aufweist.

Vorzugsweise ist die Projektion des Zwischenelements in einer parallel zu einer Wickelrichtung verlaufenden Richtung von der Projektion der gemeinsamen Wickellinie beabstandet, insbesondere nach innen.

Bei einer Ausgestaltung des Batteriemoduls ist vorgesehen, dass die Stützstege des Rahmenelements und/oder die Verbindungsstege des Rahmenelements in einer parallel zu einer Stapelrichtung des Batteriemoduls verlaufenden Richtung eine konstante Dicke aufweisen.

Bei einer Ausgestaltung des Batteriemoduls ist vorgesehen, dass die Stützstege des Rahmenelements und/oder die Verbindungsstege des Rahmenelements in einer parallel zu einer Stapelrichtung des Batteriemoduls verlaufenden Richtung eine lokal variierende Dicke aufweisen.

Beispielsweise ist es denkbar, dass die Stützstege und/oder die Verbindungsstege des Rahmenelements in Eckbereichen, in welchen die Stützstege und die Verbindungsstege miteinander verbunden sind, eine erste Dicke aufweisen.

Vorzugsweise weisen die Stützstege und/oder die Verbindungsstege des Rahmenelements zwischen jeweils zwei Eckbereichen eine zweite Dicke auf.

Die erste Dicke kann insbesondere größer als die zweite Dicke sein, beispielsweise um einen Faktor 2.

Vorzugsweise entspricht eine maximale Dicke des Rahmenelements, insbesondere der Stützstege und/oder der Verbindungsstege, parallel zu einer Stapelrichtung des Batteriemoduls mindestens ungefähr 5 %, insbesondere mindestens ungefähr 7,5 %, beispielsweise mindestens ungefähr 10 %, einer Höhe eines Zellgehäuses der galvanischen Zelle in der Stapelrichtung.

Wenn die Stützstege und/oder die Verbindungsstege des Rahmenelements in Eckbereichen eine größere Dicke aufweisen als außerhalb der Eckbereiche, kann ein Kraftfluss zwischen einander benachbarten galvanischen Zellen in einer Stapelrichtung im Wesentlichen über besonders steife Bereiche der Zellgehäuse der galvanischen Zellen erfolgen.

Bei einer Ausgestaltung des Batteriemoduls ist vorgesehen, dass das Zwischenelement in dem Innenraum angeordnet ist.

Günstig kann es sein, wenn das Zwischenelement vollständig in dem Innenraum angeordnet ist.

Beispielsweise ist es denkbar, dass das Zwischenelement den Innenraum in einer senkrecht zu einer Stapelrichtung des Batteriemoduls verlaufenden Richtung zu mindestens ungefähr 50 %, beispielsweise zu mindestens ungefähr 75 %, vorzugsweise zu mindestens ungefähr 95 %, insbesondere vollständig, ausfüllt.

Alternativ dazu ist es denkbar, dass das Zwischenelement nur teilweise in dem Innenraum angeordnet ist. Vorzugsweise überlappen sich das Rahmenelement und das Zwischenelement in der Stapelrichtung dabei zumindest teilweise.

Beispielsweise ist es denkbar, dass das Zwischenelement das Rahmenelement mit Ausnahme von Eckbereichen, in welchen Stützstege und Verbindungsstege eines Rahmenelements miteinander verbunden sind, vollständig überlappt. Vorzugsweise bildet das Zwischenelement dabei ein Kompensationselement, welches parallel zu einer Stapelrichtung des Batteriemoduls komprimierbar ist.

Günstig kann es ferner sein, wenn das Abstandshalterelement kein Zwischenelement umfasst oder bildet.

Beispielsweise ist es dabei denkbar, dass in dem Innenraum lediglich Gas, beispielsweise Luft, angeordnet ist.

Günstig kann es ferner sein, wenn in dem Innenraum ein oder mehrere Zusatzelemente angeordnet sind, beispielsweise ein oder mehrere Kompensationselemente, ein oder mehrere Propagationsschutzelemente, ein oder mehrere Sensorelemente und/oder ein oder mehrere Temperierelemente.

Bei einer Ausgestaltung des Batteriemoduls ist vorgesehen, dass das Rahmenelement einteilig oder mehrteilig, beispielsweise zweiteilig, ausgebildet ist.

Ein mehrteiliges Rahmenelement umfasst beispielsweise mehrere Rahmenelementteile.

Günstig kann es sein, wenn Rahmenelementteile kraft- und/oder formschlüssig miteinander verbindbar sind, beispielsweise mittels einer Steckverbindung.

Mittels einer Steckverbindung sind beispielsweise zwei L-förmige Rahmenelementteile kraft- und/oder formschlüssig miteinander verbindbar, insbesondere zur Herstellung eines ringförmig geschlossenen Rahmenelements.

Beispielsweise ist es denkbar, dass das Rahmenelement nur zwei Stützstege umfasst. Vorzugsweise bildet jeweils ein Stützsteg ein Rahmenelementteil.

Günstig kann es ferner sein, wenn das Rahmenelement zwei Rahmenelementteile umfasst, welche in einem senkrecht zu einer gemeinsamen Wickellinie eines Umlenkbereichs eines Zellwickels einer galvanischen Zelle genommenen Querschnitt im Wesentlichen T-förmig ausgebildet sind.

Bei einer Ausgestaltung des Batteriemoduls ist vorgesehen, dass zwischen Zellgehäusen zweier benachbarter galvanischer Zellen jeweils zwei Abstandshalterelemente, insbesondere zwei Rahmenelemente, angeordnet sind.

Vorzugsweise ist an einander abgewandten Hauptseiten eines Zellgehäuses einer jeweiligen galvanischen Zelle jeweils ein Abstandshalterelement an dem Zellgehäuse der zwei benachbarten galvanischen Zellen angeordnet.

Parallel zu einer Stapelrichtung des Batteriemoduls ist eine Reihenfolge vorzugsweise wie folgt: Abstandshalterelement, galvanische Zelle, Abstandshalterelement, Abstandshalterelement, galvanische Zelle, Abstandshalterelement, Abstandshalterelement, galvanische Zelle, Abstandshalterelement, Abstandshalterelement, galvanische Zelle, etc.

Insbesondere sind jeweils zwei Rahmenelemente auf jeweils eine galvanische Zelle, insbesondere auf das Zellgehäuse der galvanischen Zelle, aufgestülpt.

Die zwei Rahmenelemente umgreifen die jeweilige galvanische Zelle, insbesondere das Zellgehäuse der galvanischen Zelle, jeweils zumindest näherungsweise C-förmig.

Die zwei Rahmenelemente umfassen vorzugsweise jeweils einen zumindest näherungsweise C-förmigen Aufnahmeabschnitt, in welchem ein Zellgehäuse einer galvanischen Zelle parallel zu einer Stapelrichtung des Batteriemoduls zumindest teilweise aufgenommen ist.

Die zwei Rahmenelemente umfassen vorzugsweise jeweils zwei Stützstege und zwei Verbindungsstege. Die zwei Rahmenelemente sind vorzugsweise ringförmig geschlossen.

Insbesondere kann vorgesehen sein, dass die zwei Rahmenelemente vorzugsweise jeweils zwei oder mehr als zwei, beispielsweise vier, Befestigungsvorsprünge umfassen, welche parallel zu einer Stapelrichtung des Batteriemoduls von den zwei Stützstegen und/oder den zwei Verbindungsstegen weg ragen.

Vorzugsweise ragt jeweils ein Befestigungsvorsprung, insbesondere ein Befestigungssteg, parallel zu einer Stapelrichtung des Batteriemoduls von einem Stützsteg und/oder von einem Verbindungssteg weg.

Vorzugsweise entspricht eine Länge der Befestigungsstege im Wesentlichen einer Länge der Stützstege und/oder Verbindungsstege, insbesondere parallel zu einer Haupterstreckungsrichtung der Stützstege und/oder Verbindungsstege.

Die Befestigungsvorsprünge und/oder Befestigungsstege umgeben ein Zellgehäuse vorzugsweise jeweils vierseitig.

Bei einer Ausgestaltung des Batteriemoduls ist vorgesehen, dass das Rahmenelement mit dem Zwischenelement zumindest bereichsweise verbunden ist, insbesondere stoffschlüssig.

Beispielsweise ist es denkbar, dass das Rahmenelement einstückig mit dem Zwischenelement hergestellt ist.

Ein Abstandshalterelement, welches das Rahmenelement und das Zwischenelement umfasst oder bildet, ist beispielsweise ein einstückiges Spritzgussbauteil.

Beispielsweise ist es denkbar, dass das Zwischenelement nur im Bereich zweier Stützstege des Rahmenelements mit diesem verbunden ist.

Günstig kann es dabei sein, wenn das Zwischenelement im Bereich zweier Verbindungsstege des Rahmenelements nicht mit diesem verbunden ist.

Alternativ dazu ist es denkbar, dass das Zwischenelement ringförmig geschlossen mit dem Rahmenelement verbunden ist. Das Zwischenelement bildet dabei insbesondere ein Deckelelement.

Ein Zwischenelement, welches ein Deckelelement bildet, weist beispielsweise parallel zu einer Stapelrichtung eine konstante Dicke auf. Ein Zwischenelement, welches ein Deckelelement bildet, weist vorzugsweise parallel zu einer Stapelrichtung eine kleinere Dicke als ein Rahmenelement auf.

Insbesondere ist es denkbar, dass das Abstandshalterelement an einem Verbindungsbereich, in welchem das Rahmenelement mit dem Zwischenelement stoffschlüssig verbunden ist, eine Materialschwächung aufweist.

Alternativ oder ergänzend zu einer stoffschlüssigen Verbindung des Rahmenelements und des Zwischenelements ist es denkbar, dass das Rahmenelement und das Zwischenelement kraft- und/oder formschlüssig miteinander verbunden sind.

Alternativ dazu ist es denkbar, dass das Rahmenelement mit dem Zwischenelement nicht verbunden ist.

Bei einer Ausgestaltung des Batteriemoduls ist vorgesehen, dass das Rahmenelement und das Zwischenelement voneinander verschiedene Materialien umfassen oder aus voneinander verschiedenen Materialien gebildet sind.

Bei einer Ausgestaltung des Batteriemoduls ist vorgesehen, dass das Zwischenelement ein verformbares Kompensationselement bildet.

Beispielsweise ist es denkbar, dass ein als verformbares Kompensationselement ausgebildetes Zwischenelement ein Gummimaterial umfasst oder aus diesem gebildet ist.

Bei einer Ausgestaltung des Batteriemoduls ist vorgesehen, dass das Kompensationselement parallel zu einer Stapelrichtung des Batteriemoduls komprimierbar ist.

Ein als komprimierbares Kompensationselement ausgebildetes Zwischenelement umfasst dabei insbesondere ein komprimierbares Material, beispielsweise ein Schaummaterial, oder ist aus diesem gebildet.

Das komprimierbare Material eines als komprimierbares Kompensationselement ausgebildeten Zwischenelements ist beispielsweise elastisch oder plastisch komprimierbar.

Ein als komprimierbares Kompensationselement ausgebildetes Zwischenelement weist beispielsweise parallel zu einer Stapelrichtung des Batteriemoduls in einem Neuzustand desselben eine maximale Dicke auf, welche einer maximalen Dicke des Rahmenelements entspricht.

Alternativ dazu ist es denkbar, dass ein als komprimierbares Kompensationselement ausgebildetes Zwischenelement in einem Auslieferungszustand des Batteriemoduls zwischen zwei benachbarten Zellgehäusen parallel zur Stapelrichtung des Batteriemoduls vorgespannt ist.

Beispielsweise ist es denkbar, dass ein als komprimierbares Kompensationselement ausgebildetes Zwischenelement in der Stapelrichtung mehrlagig ausgebildet ist. Insbesondere ist das als Kompensationselement ausgebildete Zwischenelement dabei an ein Schwellverhalten zweier benachbarter galvanischer Zellen anpassbar.

Bei einer Ausgestaltung des Batteriemoduls ist vorgesehen, dass das Kompensationselement ein oder mehrere Verformungselemente umfasst.

Beispielsweise ist es denkbar, dass das als verformbares Kompensationselement ausgebildete Zwischenelement einen oder mehrere Verformungsstege umfasst, welche die Verformungselemente bilden.

Günstig kann es sein, wenn ein Verformungssteg einen U-förmigen oder V-förmigen Querschnitt aufweist.

Insbesondere ist es denkbar, dass ein Verformungssteg eines als verformbares Kompensationselement ausgebildeten Zwischenelements jeweils mit zwei Verbindungsstegen eines Rahmenelements verbunden ist.

Vorzugsweise sind Verformungsstege eines als verformbares Kompensationselement ausgebildeten Zwischenelements im Wesentlichen parallel zu Stützstegen des Rahmenelements angeordnet.

Günstig kann es ferner sein, wenn das als verformbares Kompensationselement ausgebildete Zwischenelement eine Vielzahl von verformbaren Noppen umfasst, welche die Verformungselemente bilden.

Vorzugsweise sind die verformbaren Noppen im Wesentlichen kreiszylindrisch ausgebildet.

Vorzugsweise ragen die verformbaren Noppen parallel zu einer Stapelrichtung des Batteriemoduls von einer Grundplatte weg, insbesondere auf beiden Seiten der Grundplatte.

Vorzugsweise weisen einzelne oder mehrere verformbare Noppen eine voneinander verschiedene Querschnittsform und/oder einen voneinander verschiedenen Durchmesser auf, insbesondere in einem senkrecht zu einer Stapelrichtung des Batteriemoduls genommenen Querschnitt.

Günstig kann es sein, wenn die verformbaren Noppen in mehreren Zeilen und/oder mehreren Spalten angeordnet sind.

Beispielsweise ist es denkbar, dass jeweils in einer Spalte angeordnete verformbare Noppen eine identische Querschnittsform und/oder einen identischen Durchmesser aufweisen.

Ferner ist es beispielsweise denkbar, dass einzelne oder mehrere in einer Zeile angeordnete verformbare Noppen eine voneinander verschiedene Querschnittsform und/oder einen voneinander verschiedenen Durchmesser aufweisen.

Vorzugsweise kann dabei das als verformbares Kompensationselement ausgebildete Zwischenelement an ein Schwellverhalten der zwei benachbarten galvanischen Zellen angepasst werden.

Insbesondere ist durch eine Anpassung eines Durchmessers der verformbaren Noppen ein Verformungswiderstand derselben einstellbar.

Bei einer Ausgestaltung des Batteriemoduls ist vorgesehen, dass ein Randbereich eines Abstandshalterelements, insbesondere ein ringförmig geschlossener Randbereich, mehrlagig ausgebildet ist, wobei der mehrlagige Randbereich ein Rahmenelement bildet.

Insbesondere ist es dabei denkbar, dass das Abstandshalterelement ein komprimierbares Material, beispielsweise ein Schaummaterial, umfasst.

Das komprimierbare Material ist dabei beispielsweise elastisch oder plastisch komprimierbar.

Günstig kann es sein, wenn das komprimierbare Material in dem mehrlagigen Randbereich durch Planieren und/oder Verdichten verfestigt ist

Bei einer Ausgestaltung des Batteriemoduls ist vorgesehen, dass ein jeweiliges Abstandshalterelement, insbesondere ein jeweiliges Rahmenelement und/oder ein jeweiliges Zwischenelement, ein metallisches Material, ein Papiermaterial oder ein Kunststoffmaterial umfassen oder aus diesem gebildet sind.

Beispielsweise ist es denkbar, dass ein jeweiliges Abstandshalterelement, insbesondere ein jeweiliges Rahmenelement und/oder ein jeweiliges Zwischenelement, Silikon oder Polyurethan umfasst oder aus diesem gebildet ist.

Günstig kann es ferner sein, wenn ein jeweiliges Abstandshalterelement, insbesondere ein jeweiliges Rahmenelement und/oder ein jeweiliges Zwischenelement, ein faserverstärktes Kunststoffmaterial umfasst oder aus diesem gebildet ist, beispielsweise glasfaserverstärktes Polybutylenterephthalat (PBT) oder glasfaserverstärktes Polypropylen (PP).

Alternativ dazu ist es denkbar, dass ein jeweiliges Abstandshalterelement, insbesondere ein jeweiliges Rahmenelement und/oder ein jeweiliges Zwischenelement, ein Schaummaterial umfasst oder aus diesem gebildet ist.

Bei einer Ausgestaltung des Batteriemoduls ist vorgesehen, dass ein Kraftfluss zwischen einander benachbarten galvanischen Zellen in einer Stapelrichtung des Batteriemoduls ausschließlich oder zu mindestens ungefähr 75 %, insbesondere zu mindestens ungefähr 85 %, vorzugsweise zu mindestens ungefähr 95 %, über das Rahmenelement des einen oder der mehreren Abstandshalterelemente erfolgt.

Vorzugsweise erfolgt ein Kraftfluss in einer Stapelrichtung des Batteriemoduls somit im Wesentlichen über die Rahmenelemente.

Günstig kann es sein, wenn galvanische Zellen des Batteriemoduls entlang einer Stapelrichtung verspannt sind.

Beispielsweise kann vorgesehen sein, dass sämtliche galvanischen Zellen des Batteriemoduls in einer Stapelrichtung zwischen zwei Endplatten angeordnet sind, wobei die zwei Endplatten mittels eines oder mehrerer Spannelemente, sogenannter "Zuganker", entlang der Stapelrichtung verspannt sind.

Bei einer Ausgestaltung des Batteriemoduls ist vorgesehen, dass ein zwischen Zellgehäusen zweier benachbarter galvanischer Zellen angeordnetes Abstandshalterelement, insbesondere ein Rahmenelement, jeweils mit den Zellgehäusen der zwei benachbarten galvanischen Zellen stoffschlüssig verbunden, insbesondere verklebt, ist.

Dabei ist es insbesondere denkbar, dass das Rahmenelement mit einer elektrischen Isolationsfolie stoffschlüssig verbunden, insbesondere verklebt, wird, welche unmittelbar auf eine Zellgehäusewandung des Zellgehäuses aufgebracht und/oder mit dieser verbunden ist.

Alternativ oder ergänzend zu einer stoffschlüssigen Verbindung des zwischen Zellgehäusen zweier benachbarter galvanischer Zellen angeordneten Abstandshalterelements, insbesondere des Rahmenelements, kann auch eine kraft- und/oder formschlüssige Verbindung mit einem der beiden Zellgehäuse vorgesehen sein.

Beispielsweise ist es dabei denkbar, dass das zwischen zwei benachbarten galvanischen Zellen angeordnete Abstandshalterelement, insbesondere das Rahmenelement, mittels einer elektrischen Isolationsfolie kraft- und/oder formschlüssig mit einem der beiden Zellgehäuse verbunden ist, beispielsweise indem das Abstandshalterelement, insbesondere das Rahmenelement, durch Umwickeln des Zellgehäuses mit der elektrischen Isolationsfolie an dem Zellgehäuse festgelegt wird.

Wenn das Abstandshalterelement, insbesondere das Rahmenelement, mittels einer elektrischen Isolationsfolie kraft- und/oder formschlüssig mit einem der beiden Zellgehäuse verbunden wird, kann vorgesehen sein, dass das Abstandshalterelement, insbesondere das Rahmenelement, vor dem Umwickeln des Zellgehäuses mit der elektrischen Isolationsfolie temporär an einer Zellgehäusewandung des Zellgehäuses befestigt wird, beispielsweise mittels eines Klebermaterials.

Bei einer Ausgestaltung des Batteriemoduls ist vorgesehen, dass das zwischen Zellgehäusen zweier benachbarter galvanischer Zellen angeordnete Abstandshalterelement, insbesondere ein Rahmenelement des Abstandshalterelements, jeweils mittels einer Klebefolie, welche jeweils zwischen einer Hauptseite eines Zellgehäuses einer jeweiligen galvanischen Zelle und dem Abstandshalterelement, insbesondere dem Rahmenelement, angeordnet ist, mit den Zellgehäusen der zwei benachbarten galvanischen Zellen verklebt ist.

Günstig kann es dabei insbesondere sein, wenn die Klebefolie ein Propagationsschutzelement bildet.

Bei einer Ausgestaltung des Batteriemoduls ist vorgesehen, dass sämtliche zwischen jeweils zwei Zellgehäusen zweier benachbarter galvanischer Zellen angeordnete Abstandshalterelemente des Batteriemoduls identisch ausgebildet sind.

Vorzugsweise sind sämtliche zwischen jeweils zwei Zellgehäusen zweier benachbarter galvanischer Zellen angeordnete Rahmenelemente identisch ausgebildet.

Bei einer Ausgestaltung des Batteriemoduls ist vorgesehen, dass das Rahmenelement und/oder das Zwischenelement jeweils ein Temperierelement umfassen oder bilden.

Das Rahmenelement und/oder das Zwischenelement sind vorzugsweise zur aktiven Temperierung und/oder zur passiven Temperierung ausgebildet.

Mittels des Rahmenelements und/oder mittels des Zwischenelements ist vorzugsweise Wärme von den zwei benachbarten galvanischen Zellen, zwischen welchen das Abstandshalterelement angeordnet ist, abführbar.

Günstig kann es ferner sein, wenn den zwei benachbarten galvanischen Zellen, zwischen welchen das Abstandshalterelement angeordnet ist, mittels des Rahmenelements und/oder mittels des Zwischenelements Wärme zuführbar ist.

Günstig kann es sein, wenn das Rahmenelement und/oder das Zwischenelement jeweils ein oder mehrere Wärmeleitelemente umfassen, welche in einer Stapelrichtung des Batteriemoduls von dem Rahmenelement und/oder von dem Zwischenelement weg ragen.

Beispielsweise ist es denkbar, dass das Abstandshalterelement, insbesondere das Rahmenelement und/oder das Zwischenelement, eine anisotrope Wärmeleitfähigkeit aufweist.

Eine Wärmeleitfähigkeit des Abstandshalterelements, insbesondere des Rahmenelements und/oder des Zwischenelements, in einer Stapelrichtung des Batteriemoduls ist vorzugsweise kleiner als eine Wärmeleitfähigkeit desselben senkrecht zu der Stapelrichtung des Batteriemoduls.

Vorzugsweise ist das Abstandshalterelement, insbesondere das Rahmenelement und/oder das Zwischenelement, in einer Stapelrichtung des Batteriemoduls als Wärmeisolator ausgebildet.

Günstig kann es ferner sein, wenn das Abstandshalterelement, insbesondere das Rahmenelement und/oder das Zwischenelement, senkrecht zu einer Stapelrichtung des Batteriemoduls als Wärmeleiter ausgebildet ist.

Bei einer Ausgestaltung des Batteriemoduls ist vorgesehen, dass das Batteriemodul ein Batteriemodulgehäuse umfasst, in welchem die galvanischen Zellen des Batteriemoduls angeordnet sind.

Vorzugsweise weist das erfindungsgemäße Batteriemodul einzelne oder mehrere der im Zusammenhang mit den erfindungsgemäßen galvanischen Zellen beschriebenen Merkmale und/oder Vorteile auf.

Die erfindungsgemäßen galvanischen Zellen weisen vorzugsweise ferner einzelne oder mehrere der im Zusammenhang mit dem erfindungsgemäßen Batteriemodul beschriebenen Merkmale und/oder Vorteile auf.

Die vorliegende Erfindung betrifft ferner ein Verfahren zum Anbringen von Abstandshalterelementen an einer galvanischen Zelle.

Der vorliegenden Erfindung liegt die weitere Aufgabe zugrunde, ein Verfahren zum Anbringen von Abstandshalterelementen an einer galvanischen Zelle bereitzustellen, mittels welchem Abstandshalterelemente einfach und kostengünstig an eine galvanische Zelle anbringbar sind.

Diese Aufgabe wird durch die Merkmale des unabhängigen Verfahrensanspruchs gelöst.

Das Verfahren zum Anbringen von Abstandshalterelementen an einer galvanischen Zelle umfasst vorzugsweise Folgendes:
- Bereitstellen einer galvanischen Zelle, welche einen oder mehrere Zellwickel umfasst;
- Aufbringen eines oder mehrerer Abstandshalterelemente aus einem gießfähigen, spritzfähigen und/oder druckfähigen Material auf ein Zellgehäuse der galvanischen Zelle.

Bei einer Ausgestaltung des Verfahrens zum Anbringen von Abstandshalterelementen an einer galvanischen Zelle ist vorgesehen, dass das eine oder die mehreren Abstandshalterelemente mittels eines oder mehrerer der folgenden Aufbringverfahren auf das Zellgehäuse der galvanischen Zelle aufgebracht werden:
- mittels eines Gießverfahrens;
- mittels eines Spritzverfahrens;
- mittels eines Druckverfahrens.

Das Gießverfahren ist beispielsweise ein Schlickergussverfahren oder ein Foliengussverfahren.

Bei einer Ausgestaltung des Verfahrens zum Anbringen von Abstandshalterelementen an einer galvanischen Zelle ist vorgesehen, dass das eine oder die mehreren Abstandshalterelemente mittels eines oder mehrerer der folgenden Druckverfahren auf das Zellgehäuse der galvanischen Zelle aufgebracht werden:
- mittels eines Siebdruckverfahrens;
- mittels eines Schablonendruckverfahrens.

Bei einer Ausgestaltung des Verfahrens zum Anbringen von Abstandshalterelementen an einer galvanischen Zelle ist vorgesehen, dass das gießfähige, spritzfähige und/oder druckfähige Material ein Grundmaterial und in dem Grundmaterial angeordnete Abstandshalterpartikel umfasst.

Vorzugsweise werden die Abstandshalterpartikel gemeinsam mit dem Grundmaterial auf das Zellgehäuse der galvanischen Zelle aufgebracht.

Die Abstandshalterpartikel sind beispielsweise im Wesentlichen kugelförmig ausgebildet.

Günstig kann es sein, wenn die Abstandshalterpartikel einen Durchmesser im Bereich von ungefähr 0,5 mm bis ungefähr 1,5 mm aufweisen.

Beispielsweise ist es denkbar, dass die Abstandshalterpartikel Glaskügelchen sind.

Die Abstandshalterpartikel weisen vorzugsweise eine höhere Druckfestigkeit als das Grundmaterial auf.

Bei einer Ausgestaltung des Verfahrens zum Anbringen von Abstandshalterelementen an einer galvanischen Zelle ist vorgesehen, dass ein oder mehrere Propagationsschutzelemente und/oder ein oder mehrere Kompensationselemente aus einem gießfähigen, spritzfähigen und/oder druckfähigen Material auf das Zellgehäuse der galvanischen Zelle aufgebracht werden.

Bei einer Ausgestaltung des Verfahrens zum Anbringen von Abstandshalterelementen an einer galvanischen Zelle ist vorgesehen, dass das eine oder die mehreren Abstandhalterelemente mit einer Applikationsvorrichtung auf das Zellgehäuse der galvanischen Zelle aufgebracht werden.

Günstig kann es sein, wenn die Applikationsvorrichtung eine Applikationsdüse umfasst, durch welche spritzfähiges und/oder druckfähiges Material auf das Zellgehäuse der galvanischen Zelle aufbringbar ist.

Vorzugsweise umfasst die Applikationsvorrichtung ferner eine Fördervorrichtung, mittels welcher das spritzfähige und/oder druckfähige Material einer Applikationsdüse der Applikationsvorrichtung zuführbar ist.

Die Fördervorrichtung ist beispielsweise eine Zahnraddosiervorrichtung.

Bei einer Ausgestaltung des Verfahrens zum Anbringen von Abstandshalterelementen an einer galvanischen Zelle ist vorgesehen, dass das eine oder die mehreren Abstandshalterelemente mit einer lokal variierenden Dicke auf das Zellgehäuse der galvanischen Zelle aufgebracht werden.

Bei einer Ausgestaltung des Verfahrens zum Anbringen von Abstandshalterelementen an einer galvanischen Zelle ist vorgesehen, dass das eine oder die mehreren Abstandshalterelemente mittelbar oder unmittelbar auf das Zellgehäuse der galvanischen Zelle aufgebracht werden.

Wenn das eine oder die mehreren Abstandshalterelemente unmittelbar auf das Zellgehäuse der galvanischen Zelle aufgebracht werden, werden diese insbesondere unmittelbar auf eine Zellgehäusewandung des Zellgehäuses aufgebracht.

Wenn das eine oder die mehreren Abstandshalterelemente mittelbar auf das Zellgehäuse der galvanischen Zelle aufgebracht werden, werden diese vorzugsweise auf eine an einer Zellgehäusewandung des Zellgehäuses angeordnete elektrische Isolationsfolie aufgebracht.

Bei einer Ausgestaltung des Verfahrens zum Anbringen von Abstandshalterelementen an einer galvanischen Zelle ist vorgesehen, dass nacheinander mehrere Schichten des gießfähigen, spritzfähigen und/oder druckfähigen Materials auf das Zellgehäuse der galvanischen Zelle aufgebracht werden.

Bei einer Ausgestaltung des Verfahrens zum Anbringen von Abstandshalterelementen an einer galvanischen Zelle ist vorgesehen, dass das gießfähige, spritzfähige und/oder druckfähige Material Polyurethan und/oder Silikon umfasst oder durch dieses gebildet wird.

Bei einer Ausgestaltung des Verfahrens zum Anbringen von Abstandshalterelementen an einer galvanischen Zelle ist vorgesehen, dass als Abstandshalterelemente eine Wulst und/oder Noppen auf das Zellgehäuse der galvanischen Zelle aufgebracht, beispielsweise aufgespritzt, werden.

Bei einer Ausgestaltung des Verfahrens zum Anbringen von Abstandshalterelementen an einer galvanischen Zelle ist vorgesehen, dass das gießfähige, spritzfähige und/oder druckfähige Material durch eine Schablone auf das Zellgehäuse der galvanischen Zelle aufgebracht wird.

Die vorliegende Erfindung betrifft ferner ein Verfahren zum Herstellen eines Batteriemoduls, welches Folgendes umfasst:
- Bereitstellen von zwei oder mehr als zwei galvanischen Zellen, an welchen Abstandshalterelemente durch das erfindungsgemäße Verfahren zum Anbringen von Abstandshalterelementen an einer galvanischen Zelle angebracht sind;
- Stapeln der galvanischen Zellen entlang einer Stapelrichtung.

Vorzugsweise werden die galvanischen Zellen entlang der Stapelrichtung derart gestapelt, dass die Zellgehäuse zweier benachbarter galvanischer Zellen mittels der auf dieselben aufgebrachten Abstandshalterelemente voneinander beabstandet sind.

Das erfindungsgemäße Verfahren zum Anbringen von Abstandshalterelementen an einer galvanischen Zelle weist vorzugsweise einzelne oder mehrere der im Zusammenhang mit den erfindungsgemäßen Batteriemodulen und/oder galvanischen Zellen beschriebenen Merkmale und/oder Vorteile auf.

Die erfindungsgemäßen galvanischen Zellen und/oder Batteriemodule weisen vorzugsweise ferner einzelne oder mehrere der im Zusammenhang mit dem erfindungsgemäßen Verfahren zum Anbringen von Abstandshalterelementen an einer galvanischen Zelle beschriebenen Merkmale und/oder Vorteile auf.

Weitere Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Ausführungsform eines Batteriemoduls;
- Fig. 2: eine schematische perspektivische Explosionsdarstellung der Ausführungsform des Batteriemoduls aus Fig. 1;
- Fig. 3: eine schematische perspektivische Darstellung eines Abstandshalterelements der Ausführungsform des Batteriemoduls aus Fig. 1;
- Fig.4: eine schematische Schnittdarstellung einer galvanischen Zelle und eines Abstandshalterelements der Ausführungsform des Batteriemoduls aus Fig. 1;
- Fig. 5: eine schematische Schnittdarstellung zweier benachbarter galvanischer Zellen und eines zwischen den zwei benachbarten galvanischen Zellen angeordneten Abstandshalterelements der Ausführungsform des Batteriemoduls aus Fig. 1;
- Fig. 6: eine schematische perspektive Darstellung eines Abstandshalterelements einer weiteren Ausführungsform eines Batteriemoduls;
- Fig. 7: eine schematische perspektive Darstellung eines Abstandshalterelements einer weiteren Ausführungsform eines Batteriemoduls;
- Fig. 8: eine schematische perspektive Darstellung eines Abstandshalterelements einer weiteren Ausführungsform eines Batteriemoduls;
- Fig.9: eine schematische perspektive Darstellung eines Abstandshalterelements einer weiteren Ausführungsform eines Batteriemoduls;
- Fig. 10: eine schematische perspektive Darstellung eines Abstandshalterelements einer weiteren Ausführungsform eines Batteriemoduls;
- Fig. 11: eine schematische perspektive Darstellung eines Abstandshalterelements einer weiteren Ausführungsform eines Batteriemoduls;
- Fig. 12: eine schematische Schnittdarstellung zweier benachbarter galvanischer Zellen und zweier zwischen den zwei benachbarten galvanischen Zellen angeordneter Abstandshalterelemente einer weiteren Ausführungsform eines Batteriemoduls;
- Fig. 13: eine schematische perspektivische Darstellung eines Abstandshalterelements einer weiteren Ausführungsform eines Batteriemoduls;
- Fig. 14: eine schematische Schnittdarstellung eines Schnitts entlang der Linie XIV-XIV in Fig. 13;
- Fig. 15: eine der Schnittdarstellung aus Fig. 14 entsprechende Schnittdarstellung eines Abstandshalterelements einer weiteren Ausführungsform eines Batteriemoduls;
- Fig. 16: eine der Schnittdarstellung aus Fig. 14 entsprechende Schnittdarstellung eines Abstandshalterelements einer weiteren Ausführungsform eines Batteriemoduls;
- Fig. 17: eine schematische Schnittdarstellung einer galvanischen Zelle und eines Abstandshalterelements einer weiteren Ausführungsform eines Batteriemoduls;
- Fig. 18: eine schematische perspektivische Darstellung eines Abstandshalterelements einer weiteren Ausführungsform eines Batteriemoduls;
- Fig. 19: eine schematische Schnittdarstellung eines Schnitts entlang der Linie XIX-XIX in Fig. 18;
- Fig. 20: eine schematische perspektivische Darstellung eines Abstandshalterelements einer weiteren Ausführungsform eines Batteriemoduls;
- Fig. 21: eine schematische Schnittdarstellung eines Schnitts entlang der Linie XXI-XXI in Fig. 20;
- Fig. 22: eine schematische perspektivische Darstellung eines Abstandshalterelements einer weiteren Ausführungsform eines Batteriemoduls;
- Fig. 23: eine schematische perspektivische Explosionsdarstellung des Abstandshalterelements aus Fig. 22;
- Fig. 24: eine schematische Draufsicht auf das Abstandshalterelement aus Fig. 22 bei Blick in Richtung des Pfeils 24 in Fig. 22;
- Fig. 25: eine schematische Schnittdarstellung eines Schnitts entlang der Linie XXV-XXV in Fig. 24;
- Fig. 26: eine der Schnittdarstellung aus Fig. 25 entsprechende Schnittdarstellung, wobei ein Rahmenelement und/oder ein Zwischenelement des Abstandshalterelements verformt sind;
- Fig. 27: eine schematische perspektivische Darstellung eines Abstandshalterelements einer weiteren Ausführungsform eines Batteriemoduls;
- Fig. 28: eine schematische Schnittdarstellung einer galvanischen Zelle und eines Abstandshalterelements einer weiteren Ausführungsform eines Batteriemoduls;
- Fig. 29: eine schematische perspektivische Darstellung eines Abstandshalterelements einer weiteren Ausführungsform eines Batteriemoduls;
- Fig. 30: eine schematische Schnittdarstellung eines Schnitts entlang der Linie XXX-XXX in Fig. 29;
- Fig. 31: eine schematische perspektivische Darstellung eines Abstandshalterelements einer weiteren Ausführungsform eines Batteriemoduls;
- Fig. 32: eine schematische Schnittdarstellung eines Schnitts entlang der Linie XXXII-XXXII in Fig. 31;
- Fig. 33: eine schematische perspektivische Darstellung eines Abstandshalterelements einer weiteren Ausführungsform eines Batteriemoduls;
- Fig. 34: eine schematische Schnittdarstellung eines Schnitts entlang der Linie XXXIV-XXXIV in Fig. 33;
- Fig. 35: eine schematische perspektivische Darstellung eines Abstandshalterelements einer weiteren Ausführungsform eines Batteriemoduls;
- Fig. 36: eine schematische Schnittdarstellung eines Schnitts entlang der Linie XXXVI-XXXVI in Fig. 35;
- Fig. 37: eine schematische perspektivische Darstellung einer galvanischen Zelle einer weiteren Ausführungsform eines Batteriemoduls;
- Fig. 38: eine schematische perspektivische Darstellung einer galvanischen Zelle einer weiteren Ausführungsform eines Batteriemoduls;
- Fig. 39: eine schematische perspektivische teilgeschnittene Darstellung einer Ausführungsform einer galvanischen Zelle;
- Fig. 40: eine schematische Schnittdarstellung zweier galvanischer Zellen gemäß der Ausführungsform aus Fig. 37;
- Fig. 41: eine schematische Schnittdarstellung dreier galvanischer Zellen gemäß einer weiteren Ausführungsform;
- Fig. 42: eine schematische Schnittdarstellung dreier galvanischer Zellen gemäß einer weiteren Ausführungsform;
- Fig. 43: eine schematische Schnittdarstellung einer weiteren Ausführungsform einer galvanischen Zelle;
- Fig. 44: eine schematische Schnittdarstellung einer weiteren Ausführungsform einer galvanischen Zelle; und
- Fig. 45: eine schematische Schnittdarstellung einer weiteren Ausführungsform einer galvanischen Zelle.

Gleiche oder funktional äquivalente Elemente sind in sämtliche Figuren mit denselben Bezugszeichen versehen.

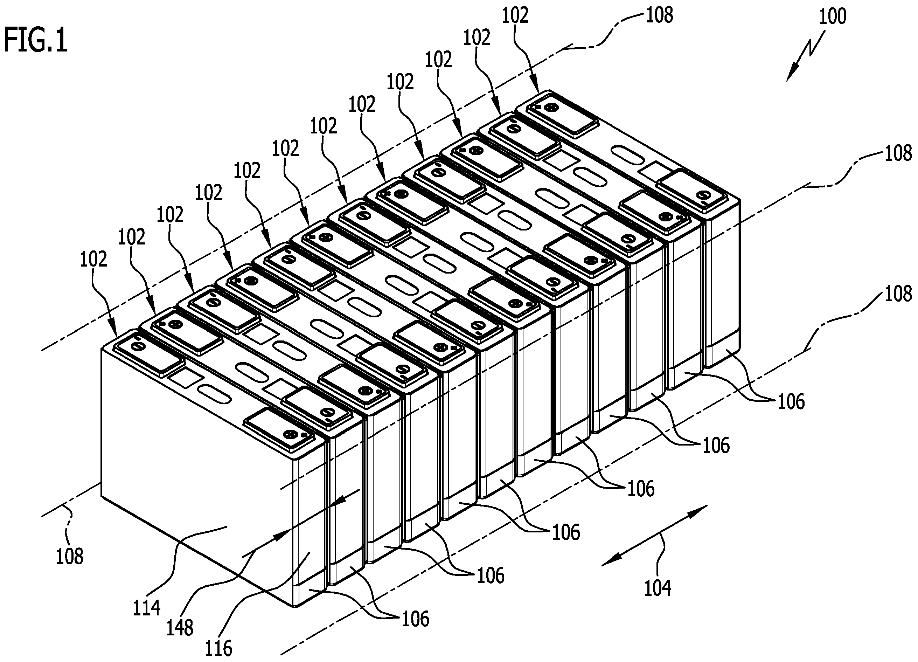

Figur 1 zeigt ein als Ganzes mit 100 bezeichnetes Batteriemodul.

Das Batteriemodul 100 umfasst vorzugsweise zwei oder mehr als zwei galvanische Zellen 102.

Die galvanischen Zellen 102 sind vorzugsweise entlang einer Stapelrichtung des Batteriemoduls 100 angeordnet, welche in Fig. 1 durch einen Pfeil 104 gekennzeichnet ist.

Die entlang der Stapelrichtung 104 angeordneten galvanischen Zellen 102 des Batteriemoduls 100 bilden insbesondere einen Zellenstapel.

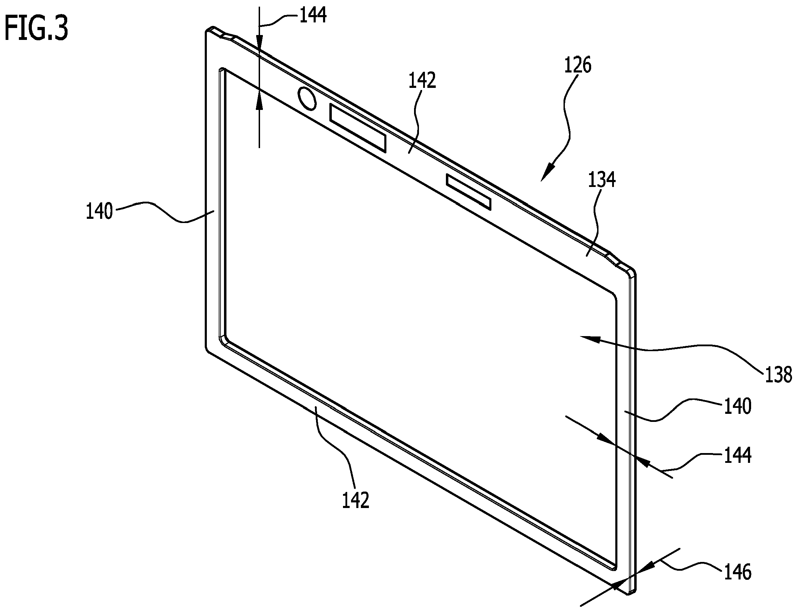

Bei den in den Fig. 1 bis 36 dargestellten Ausführungsformen eines Batteriemoduls sind die galvanischen Zellen 102 vorzugsweise nach dem PHEV2-Format ausgebildet.

Die galvanischen Zellen 102 sind vorzugsweise prismatische Zellen, insbesondere im Wesentlichen quaderförmige Zellen.

Vorzugsweise umfassen die galvanischen Zellen 102 jeweils ein Zellgehäuse 106.

Günstig kann es sein, wenn die galvanischen Zellen 102 des Batteriemoduls 100 entlang der Stapelrichtung 104 verspannt sind.

Beispielsweise kann vorgesehen sein, dass sämtliche galvanische Zellen 102 des Batteriemoduls 100 in der Stapelrichtung 104 zwischen zwei zeichnerisch nicht dargestellten Endplatten angeordnet sind, wobei die zwei Endplatten mittels mehrerer Spannelemente 108, welche in Fig. 1 lediglich schematisch mittels strichpunktierter Linien dargestellt sind, entlang der Stapelrichtung 104 verspannt sind. Die Spannelemente 108 sind beispielsweise sogenannte "Zuganker".

Das Batteriemodul 100 umfasst vorzugsweise ein in den Figuren zeichnerisch nicht dargestelltes Batteriemodulgehäuse, in welchem die galvanischen Zellen 102 des Batteriemoduls 100 angeordnet sind.

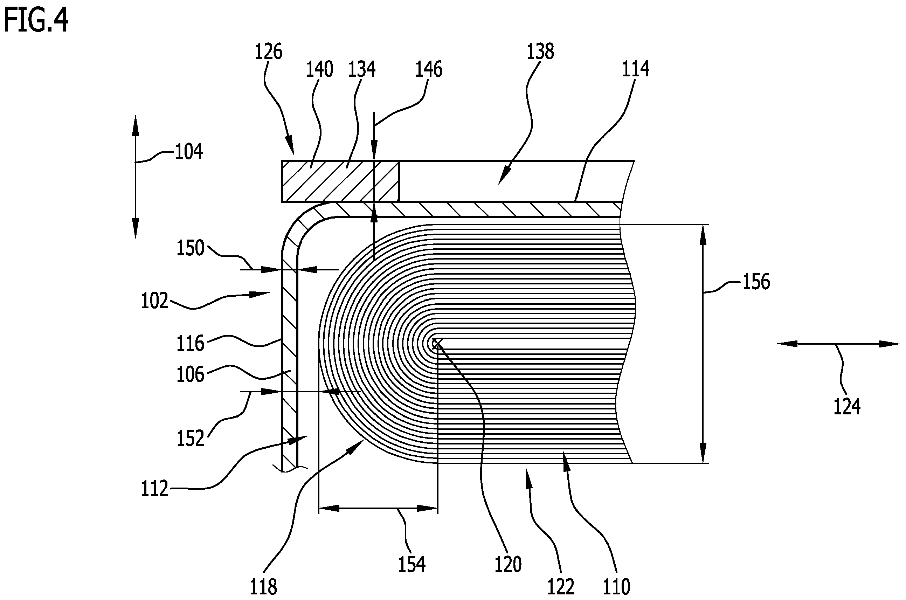

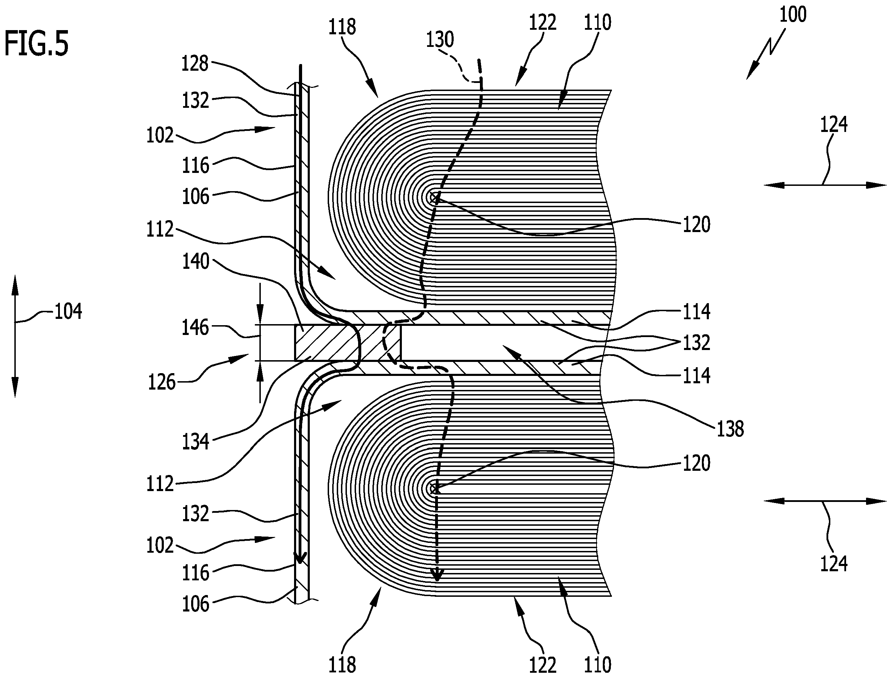

Eine jeweilige galvanische Zelle 102 umfasst vorzugsweise zwei Zellwickel 110 ("jelly rolls"), welche beispielsweise in den Fig. 4 und 5 dargestellt sind.

Das Zellgehäuse 106 einer jeweiligen galvanischen Zelle 102 umfasst oder bildet vorzugsweise einen Aufnahmeraum 112.

Günstig kann es sein, wenn die zwei Zellwickel 110 einer jeweiligen galvanischen Zelle 102 in dem Aufnahmeraum 112 aufgenommen sind.

Vorzugsweise sind die galvanischen Zellen 102 des Batteriemoduls Sekundärzellen. Die galvanischen Zellen 102 sind somit vorzugsweise wiederaufladbare galvanische Zellen 102.

Das Batteriemodul 100 bildet somit insbesondere ein Akkumulatormodul.

Eine jeweilige galvanische Zelle 102 und/oder ein Zellgehäuse 106 einer jeweiligen galvanischen Zelle 102 umfassen vorzugsweise zwei Hauptseiten 114 und vier Nebenseiten 116. Vorzugsweise sind die zwei Hauptseiten 114 und/oder jeweils zwei Nebenseiten 116 auf einander abgewandten Seiten einer jeweiligen galvanischen Zelle 102 und/oder eines Zellgehäuses 106 einer jeweiligen galvanischen Zelle 102 angeordnet.

Insbesondere ist dabei jeweils eine Hauptseite 114 einer galvanischen Zelle 102 und/oder eines Zellgehäuses 106 der galvanischen Zelle 102 einer Hauptseite 114 einer weiteren galvanischen Zelle 102 und/oder eines Zellgehäuses 106 der weiteren galvanischen Zelle 102 zugewandt.

Günstig kann es sein, wenn die zwei Zellwickel 110 der galvanischen Zellen 102 im Wesentlichen parallel zueinander angeordnet sind.

Die Zellwickel 110 einer galvanischen Zelle 102 des Batteriemoduls 100 sind vorzugsweise Flachwickel.

Ein jeweiliger Zellwickel 110 der galvanischen Zellen 102 des Batteriemoduls 100 umfasst insbesondere mehrere Wickellagen.

Vorzugsweise sind Wickellagen eines jeweiligen Zellwickels 110 im Wesentlichen parallel zueinander angeordnet.

Der Zellwickel 110 umfasst vorzugsweise eine Wickellagenbahn, welche die Wickellagen bildet. Vorzugsweise sind die Wickellagen durch Aufwickeln der Wickellagenbahn gebildet. Insbesondere ist es dabei denkbar, dass eine einzige Wickellagenbahn sämtliche Wickellagen eines jeweiligen Zellwickels 110 umfasst oder bildet.

Ein jeweiliger Zellwickel 110 einer galvanischen Zelle 102 umfasst vorzugsweise zwei Umlenkbereiche 118, in welchen Wickellagen des jeweiligen Zellwickels 110 umgelenkt sind, wobei die Wickellagen in einem jeweiligen Umlenkbereich 118 eine gemeinsame Wickellinie 120 aufweisen.

In dem jeweiligen Umlenkbereich 118 des Zellwickels 110 sind Wickellagen der Zellwickel 102 vorzugsweise umgelenkt, insbesondere um ungefähr 180°.

Die Wickellinien 120 der zwei Umlenkbereiche 118 eines jeweiligen Zellwickels 110 sind vorzugsweise im Wesentlichen parallel zueinander angeordnet.

Insbesondere ist ein jeweiliger Zellwickel 110 der galvanischen Zellen 102 in einem Umlenkbereich 118 achsensymmetrisch zu der gemeinsamen Wickellinie 120 ausgebildet.

Insbesondere ist es denkbar, dass die Wickellagen des jeweiligen Zellwickels 110 in einem jeweiligen Umlenkbereich 118 in einem senkrecht zu der gemeinsamen Wickellinie 120 genommenen Querschnitt im Wesentlichen halbkreisförmig angeordnet sind.

Wickellagen eines jeweiligen Zellwickels 110 sind in einem zwischen den zwei Umlenkbereichen 118 des Zellwickels 110 angeordneten Zwischenbereich 122 des Zellwickels 110 vorzugsweise im Wesentlichen parallel zu einer in den Figuren zeichnerisch nicht dargestellten Mittelebene des Zellwickels 110 angeordnet.

Günstig kann es sein, wenn die gemeinsame Wickellinie 120 eines jeweiligen Umlenkbereichs eines Zellwickels in der Mittelebene eines Zellwickels 110 angeordnet ist.

Die Stapelrichtung 104 des Batteriemoduls 100 verläuft vorzugsweise im Wesentlichen senkrecht zu einer Mittelebene der Zellwickel 110 der galvanischen Zellen 102 des Batteriemoduls 100.

Günstig kann es sein, wenn die gemeinsame Wickellinie 120 von Wickellagen des jeweiligen Zellwickels 110 in einem jeweiligen Umlenkbereich 118 des Zellwickels 110 in einem senkrecht zu der gemeinsamen Wickellinie 120 genommenen Querschnitt einen gemeinsamen Mittelpunkt von halbkreisförmig angeordneten Wickellagen des Zellwickels 110 bildet.

Eine mittels eines Pfeils 124 dargestellte Wickelrichtung eines jeweiligen Zellwickels 110 verläuft vorzugsweise senkrecht zu den gemeinsamen Wickellinien 120 der zwei Umlenkbereiche 118 des jeweiligen Zellwickels 110 und insbesondere senkrecht zu der Stapelrichtung 104.

Eine Wickellage eines jeweiligen Zellwickels 110 umfasst vorzugsweise mehrere Schichten, beispielsweise zwei Elektrodenschichten und zwei Separatorenschichten.

Günstig kann es insbesondere sein, wenn in einer Wickellage Elektrodenschichten und Separatorenschichten jeweils alternierend angeordnet sind.

Eine Schichtreihenfolge in einer Wickellage eines Zellwickels 110 ist somit vorzugsweise wie folgt: Separatorenschicht, Elektrodenschicht, Separatorenschicht, Elektrodenschicht.

Die Elektrodenschichten umfassen vorzugsweise ein elektrisch leitfähiges Material oder sind aus diesem gebildet, beispielsweise Aluminium oder Kupfer.

Die Separatorenschichten umfassen vorzugsweise ein elektrisches Isoliermaterial oder sind aus diesem gebildet, beispielsweise Polyethylen und/oder Polypropylen.

Die in den Fig. 1 bis 5 dargestellte Ausführungsform eines Batteriemoduls 100 umfasst vorzugsweise ferner mehrere Abstandshalterelemente 126.

Vorzugsweise ist bei der in den Fig. 1 bis 5 dargestellten Ausführungsform eines Batteriemoduls 100 jeweils ein Abstandshalterelement 126 zwischen zwei benachbarten galvanischen Zellen 102 angeordnet, insbesondere zwischen den Zellgehäusen 106 der zwei benachbarten galvanischen Zellen.

Vorzugsweise sind einander zugewandte Zellwickel 110 von zwei benachbarten galvanischen Zellen 102 jeweils mittels eines Abstandshalterelements 126 in der Stapelrichtung 126 beabstandet voneinander angeordnet.

Mittels der Abstandshalterelemente 126 ist vorzugsweise ein vorgegebener Abstand zweier benachbarter galvanischer Zellen 102 einstellbar.

Vorzugsweise wird mittels der Abstandshalterelemente 126 eine Expansion der galvanischen Zellen 102, insbesondere der Zellgehäuse 106 der galvanischen Zellen 106, welche auf einer Gasbildung aufgrund einer chemischen Zersetzung des Elektrolyts beruht, im Wesentlichen verhindert.

Vorzugsweise wird mittels der Abstandshalterelemente 126 ferner eine Expansion der galvanischen Zellen 102, insbesondere der Zellgehäuse 106 der galvanischen Zellen 102, welche auf einem Wachstum der Zellwickel 110 der galvanischen Zellen 102 beruht, dennoch zugelassen.

Dabei ist es vorzugsweise denkbar, dass aufgrund der Begrenzung einer Expansion der galvanischen Zellen 102, welche auf einer Gasbildung beruht, eine Delamination der Zellwickel 110 der galvanischen Zellen 102 verhindert werden kann. Insbesondere wird dabei eine Alterung der galvanischen Zellen 102 verzögert.

Vorzugsweise ist mittels der Abstandshalterelemente 126 ein Druck auf die Zellwickel 110 der galvanischen Zellen 102 des Batteriemoduls 100 reduzierbar. Insbesondere ist dabei eine Kapazitätsabnahme der galvanischen Zellen 102 des Batteriemoduls 100 reduzierbar. Günstig kann es ferner sein, wenn eine mechanische Überbeanspruchung der Zellwickel 110 der galvanischen Zellen 102 mittels der Abstandshalterelemente 126 vermieden wird.

Die Abstandshalterelemente 126 sind vorzugsweise derart angeordnet und/oder ausgebildet, dass eine Krafteinleitung in die Zellwickel 110 der galvanischen Zellen 102 in der Stapelrichtung 104 des Batteriemoduls 100 vermeidbar ist, insbesondere im Bereich einer gemeinsamen Wickellinie 120 der Umlenkbereiche 118 der Zellwickel 110.

Mittels der Abstandshalterelemente 126 ist ein Kraftfluss in der Stapelrichtung 104 des Batteriemoduls 100 vorzugsweise derart leitbar, dass in der Stapelrichtung vorzugsweise keine Kraft auf eine gemeinsame Wickellinie 120 der Umlenkbereiche 118 der Zellwickel 110 ausgeübt wird.

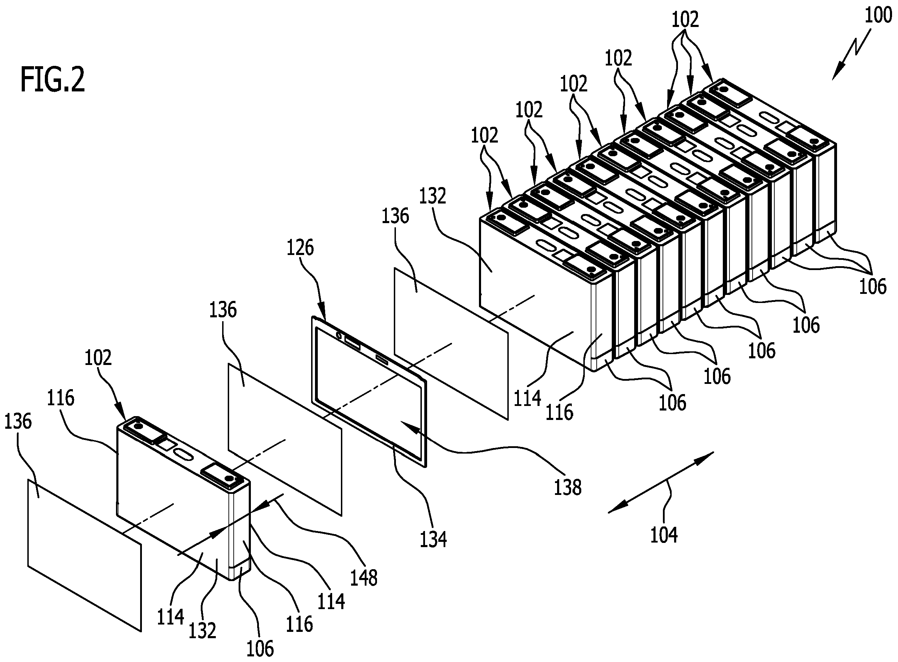

Die Fig. 2 und 5 zeigen, dass jeweils ein Abstandshalterelement 126 zwischen einander zugewandten Zellgehäusewandungen 132 der Zellgehäuse 106 zweier benachbarter galvanischer Zellen 102 angeordnet ist.

Die Abstandshalterelemente 126 sind dabei insbesondere jeweils an einer Hauptseite 114 der Zellgehäuse 106 angeordnet.

Bei der in den Fig. 1 bis 5 dargestellten Ausführungsform eines Batteriemoduls 100 umfassen oder bilden die Abstandshalterelemente 126 vorzugsweise jeweils nur ein Rahmenelement 134.

Mittels der Rahmenelemente 134 ist vorzugsweise ein vorgegebener Abstand zweier benachbarter galvanischer Zellen 102 zueinander festlegbar, insbesondere an einem Randbereich der einander zugewandten Hauptseiten 114 der jeweiligen Zellgehäuse 106 der galvanischen Zellen 102.

Die Rahmenelemente 134 sind vorzugsweise jeweils einteilig ausgebildet.

Insbesondere sind sämtliche zwischen jeweils zwei Zellgehäusen 106 zweier benachbarter galvanischer Zellen 102 angeordnete Rahmenelemente 134 des Batteriemoduls 100 identisch ausgebildet.

Fig. 5 zeigt einen Kraftfluss durch die Rahmenelemente 134, welcher mittels einer durchgezogenen Linie 128 gekennzeichnet ist.

Ein Kraftfluss erfolgt somit vorzugsweise im Wesentlichen nicht entlang der gestrichelten Linie 130 in Fig. 5.

Günstig kann es sein, wenn ein Kraftfluss zwischen einander benachbarten galvanischen Zellen 102 in der Stapelrichtung 104 des Batteriemoduls 100 im Wesentlichen über die Rahmenelemente 134 erfolgt.

Vorzugsweise erfolgt ein Kraftfluss zwischen einander benachbarten galvanischen Zellen 102 in der Stapelrichtung 104 des Batteriemoduls 100 ausschließlich oder zu mindestens ungefähr 75 %, insbesondere zu mindestens ungefähr 85 %, vorzugsweise zu mindestens ungefähr 95 %, über die Rahmenelemente 134.

Die Rahmenelemente 134 umfassen vorzugsweise ein faserverstärktes Kunststoffmaterial oder sind aus diesem gebildet, beispielsweise glasfaserverstärktes Polybutylenterephthalat (PBT) oder glasfaserverstärktes Polypropylen (PP).

Vorzugsweise ist ein zwischen Zellgehäusen 106 zweier benachbarter galvanischer Zellen 102 angeordnetes Rahmenelement 134 jeweils mit den Zellgehäusen 106 der zwei benachbarten galvanischen Zellen 102 stoffschlüssig verbunden, insbesondere verklebt.

Dabei ist es insbesondere denkbar, dass das Rahmenelement 134 mit einer zeichnerisch nicht dargestellten elektrischen Isolationsfolie stoffschlüssig verbunden, insbesondere verklebt, ist, welche unmittelbar auf eine Zellgehäusewandung 132 des Zellgehäuses 106 aufgebracht und/oder mit dieser verbunden ist.

Ein jeweiliges Rahmenelement 134 ist vorzugsweise jeweils mittels einer Klebefolie 136, welche jeweils zwischen einer Hauptseite 114 eines Zellgehäuses 106 einer jeweiligen galvanischen Zelle 102 und dem Rahmenelement 134 angeordnet ist, mit den Zellgehäusen 106 zweier benachbarter galvanischer Zellen 102 verklebt.

Die Rahmenelemente 134 begrenzen vorzugsweise jeweils einen von einem Rahmenelement 134 und zwei benachbarten Zellgehäusen 106 umgebenen Innenraum 138.

Bei der in den Fig. 1 bis 5 dargestellten Ausführungsform des Batteriemoduls 100 ist in dem Innenraum 138 vorzugsweise lediglich Gas, beispielsweise Luft, angeordnet.

Das Rahmenelement 134 umfasst vorzugsweise zwei Stützstege 140 und zwei Verbindungsstege 142.

Vorzugsweise sind die zwei Stützstege 140 parallel zueinander und/oder parallel zu einer gemeinsamen Wickellinie 120 eines Umlenkbereichs 118 eines Zellwickels 110 einer galvanischen Zelle 102 angeordnet.

Günstig kann es sein, wenn die zwei Stützstege 140 mittels der zwei Verbindungsstege 142 verbunden sind.

Die Rahmenelemente 134 sind vorzugsweise ringförmig geschlossen ausgebildet.

Die zwei Stützstege 140 sind vorzugsweise im Wesentlichen parallel zueinander angeordnet.

Günstig kann es ferner sein, wenn die Verbindungsstege 142 im Wesentlichen parallel zueinander angeordnet sind.

Vorzugsweise verlaufen die Stützstege 140 und/oder die Verbindungsstege 142 eines jeweiligen Rahmenelements 134 entlang eines Randbereichs einer jeweiligen Hauptseite 114 zweier benachbarter Zellgehäuse 106.

Günstig kann es sein, wenn die Stützstege 140 und/oder die Verbindungsstege 142 der Rahmenelemente 134 auf einer an einem jeweiligen Zellgehäuse 106 anliegenden Seite des Rahmenelements 134 keine scharfe Kante aufweisen.

Insbesondere kann vorgesehen sein, dass Kanten der Stützstege 140 und/oder der Verbindungsstege 142 des Rahmenelements 134 auf einer an einem jeweiligen Zellgehäuse 106 anliegenden Seite des Rahmenelements 134 abgerundet sind.

Vorzugsweise können dabei Spannungsspitzen und/oder Kantenabdrücke an dem Zellgehäuse 106 vermieden werden.

Die zwei Stützstege 140 und/oder die zwei Verbindungsstege 142 weisen senkrecht zu einer Haupterstreckungsrichtung derselben vorzugsweise eine im Wesentlichen konstante Breite 144 auf.

Beispielsweise ist es denkbar, dass die Breite 144 der zwei Stützstege 140 im Wesentlichen der Breite 144 der zwei Verbindungsstege 142 entspricht.

Die Breite 144 der zwei Stützstege 140 eines Rahmenelements 134 entspricht vorzugsweise ungefähr einer Summe einer Wandstärke 150 der Zellgehäusewandung 132 eines Zellgehäuses 106 einer galvanischen Zelle 102, eines Abstands 152 eines Zellwickels 110 zu der Zellgehäusewandung 132 des Zellgehäuses 106 und einer Breite 154 eines Umlenkbereichs 118 eines Zellwickels 102.

Vorzugsweise entspricht die Breite 154 eines Umlenkbereichs 118 eines Zellwickels 110 im Wesentlichen der Hälfte einer Dicke 156 eines Zellwickels 110 parallel zu einer Stapelrichtung des Batteriemoduls.

Die vorstehend genannten Abmessungen beziehen sich vorzugsweise auf eine parallel zu der Wickelrichtung 124 eines Zellwickels 102 und/oder senkrecht zu der Stapelrichtung 104 des Batteriemoduls 100 verlaufende Richtung, insbesondere gemessen in einer Mittelebene eines jeweiligen Zellwickels 102.

Die Haupterstreckungsrichtung der zwei Stützstege 140 und/oder der zwei Verbindungsstege 142 verläuft insbesondere senkrecht zu der Stapelrichtung 104 des Batteriemoduls 102.

Die Haupterstreckungsrichtung der zwei Stützstege 140 verläuft vorzugsweise parallel zu einer gemeinsamen Wickellinie 120 eines Umlenkbereichs 118 eines Zellwickels 110 der galvanischen Zellen 102.

Günstig kann es sein, wenn die Stützstege 140 des Rahmenelements 134 und/oder die Verbindungsstege 142 des Rahmenelements 134 in einer parallel zu der Stapelrichtung 104 des Batteriemoduls 100 verlaufenden Richtung eine konstante Dicke 146 aufweisen.

Vorzugsweise entspricht eine maximale Dicke 146 des Rahmenelements 134, insbesondere der Stützstege 140 und/oder der Verbindungsstege 142, mindestens ungefähr 5 %, insbesondere mindestens ungefähr 7,5 %, beispielsweise mindestens ungefähr 10 %, einer Höhe 148 eines Zellgehäuses 106 der galvanischen Zellen 102 in der Stapelrichtung 104.

Günstig kann es sein, wenn eine Projektion eines jeweiligen Stützstegs 140 eines Rahmenelements 134, insbesondere eines an dem Zellgehäuse 106 einer galvanischen Zelle 102 anliegenden Bereichs des Stützstegs 140, entlang der Stapelrichtung 104 auf eine senkrecht zu der Stapelrichtung 104 angeordnete Projektionsebene einen Abstand von einer Projektion einer jeweiligen gemeinsamen Wickellinie 120 eines Umlenkbereichs 118 eines Zellwickels 110 einer galvanischen Zelle 102 aufweist.

Vorzugsweise ist die Projektion des Stützstegs 140, insbesondere des an dem Zellgehäuse 106 anliegenden Bereichs des Stützstegs 140, parallel zu einer Wickelrichtung 124 von der Projektion der gemeinsamen Wickellinie 120 beabstandet, insbesondere nach außen.

Die Projektion des an dem Zellgehäuse 106 anliegenden Bereichs des Stützstegs 140 überlappt die Projektion der gemeinsamen Wickellinie 120 vorzugsweise nicht.

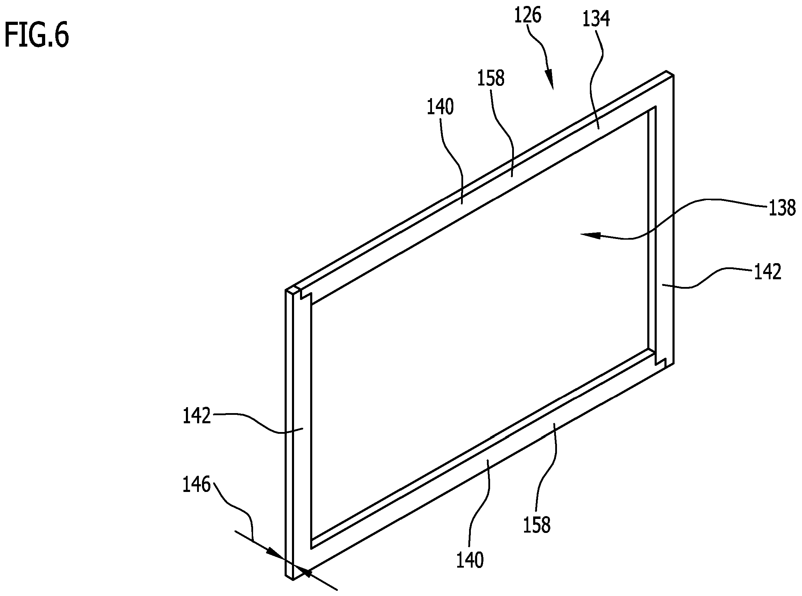

Ein in Fig. 6 dargestelltes Abstandshalterelement 126, insbesondere ein Rahmenelement 134, einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass das Rahmenelement 134 mehrteilig, insbesondere zweiteilig, ausgebildet ist.

Das Rahmenelement 134 umfasst insbesondere zwei Rahmenelementteile 158.

Die zwei Rahmenelementteile 158 sind vorzugsweise kraft- und/oder formschlüssig miteinander verbindbar, beispielsweise mittels einer zeichnerisch nicht dargestellten Steckverbindung.

Die zwei Rahmenelementteile sind beispielsweise L-förmig ausgebildet und zur Herstellung eines ringförmig geschlossenen Rahmenelements 134 miteinander verbindbar.

Im Übrigen stimmt das in Fig. 6 dargestellte Abstandshalterelement 126, insbesondere das Rahmenelement 134, der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

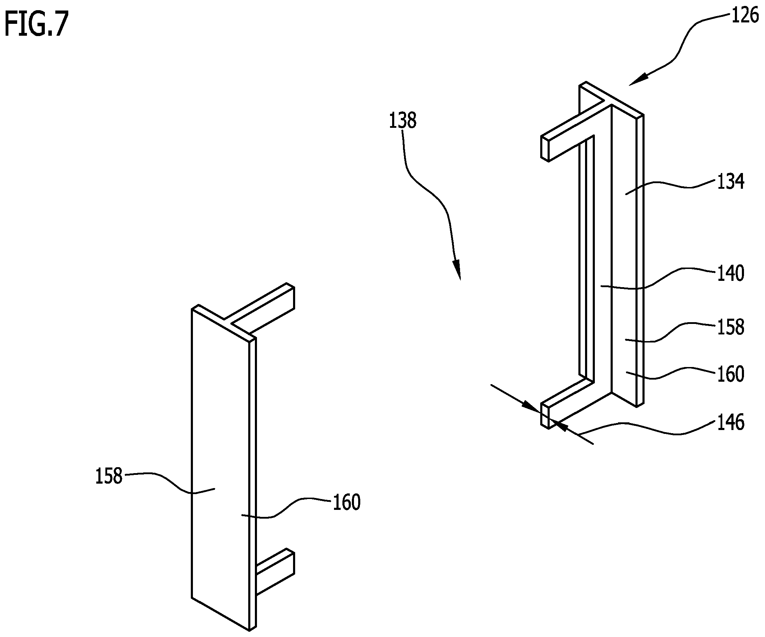

Ein in Fig. 7 dargestelltes Abstandshalterelement 126, insbesondere ein Rahmenelement 134, einer Ausführungsform eines Batteriemoduls 100 unterscheidet sich von dem in Fig. 6 dargestellten Abstandshalterelement 126 einer Ausführungsform eines Batteriemoduls 100 im Wesentlichen dadurch, dass das Rahmenelement 134 im Wesentlichen nur zwei Stützstege 140 umfasst.

Vorzugsweise bildet jeweils ein Stützsteg 140 jeweils ein Rahmenelementteil 158.

Die zwei Rahmenelementteile 158 sind in einem senkrecht zu einer gemeinsamen Wickellinie 120 eines Umlenkbereichs 118 eines Zellwickels 110 einer galvanischen Zelle 102 genommenen Querschnitt vorzugsweise im Wesentlichen T-förmig ausgebildet.

Die zwei Rahmenelementteile 158 umfassen dabei jeweils senkrecht zu den Stützstegen angeordnete Anschlagelemente 160.

Günstig kann es sein, wenn die Anschlagelemente 160 zur Positionierung der Rahmenelementteile 158 an eine Nebenseite 116 eines Zellgehäuses 106 einer jeweiligen galvanischen Zelle 102 anlegbar sind.

Im Übrigen stimmt das in Fig. 7 dargestellte Abstandshalterelement 126, insbesondere das Rahmenelement 134, der Ausführungsform eines Batteriemoduls 100 hinsichtlich Aufbau und Funktion mit dem in Fig. 6 dargestellten Abstandshalterelement 126 einer Ausführungsform eines Batteriemoduls 100 überein, so dass auf dessen vorstehende Beschreibung insoweit Bezug genommen wird.

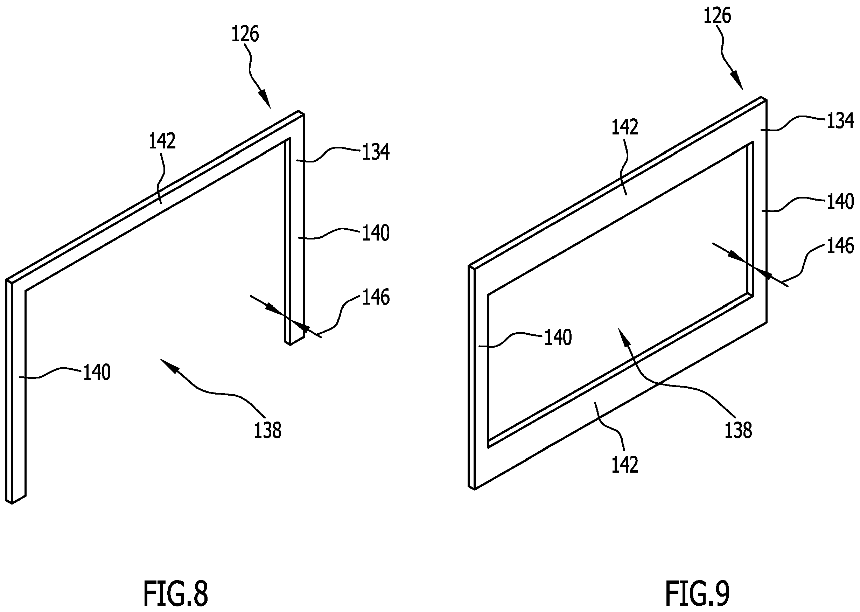

Ein in Fig. 8 dargestelltes Abstandshalterelement 126, insbesondere ein Rahmenelement 134, einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass das Rahmenelement 134 nur einen einzigen Verbindungssteg 142 umfasst.

Das Rahmenelement 134 ist dabei insbesondere kein ringförmig geschlossenes Rahmenelement 134.

Das Rahmenelement 134 ist vorzugsweise im Wesentlichen U-Förmig ausgebildet ist und umgibt den Innenraum 138 vorzugsweise zumindest dreiseitig.

Im Übrigen stimmt das in Fig. 8 dargestellte Abstandshalterelement 126, insbesondere das Rahmenelement 134, der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

Ein in Fig. 9 dargestelltes Abstandshalterelement 126, insbesondere ein Rahmenelement 134, einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass die Breite 144 der zwei Stützstege 140 von der Breite 144 der zwei Verbindungsstege 142 verschieden ist.

Die Breite 144 der zwei Verbindungsstege 142 ist beispielsweise um einen Faktor von mindestens ungefähr 1,5 größer ist als die Breite 144 der zwei Stützstege 140, beispielsweise um einen Faktor von mindestens ungefähr 2.

Im Übrigen stimmt das in Fig. 9 dargestellte Abstandshalterelement 126, insbesondere das Rahmenelement 134, der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

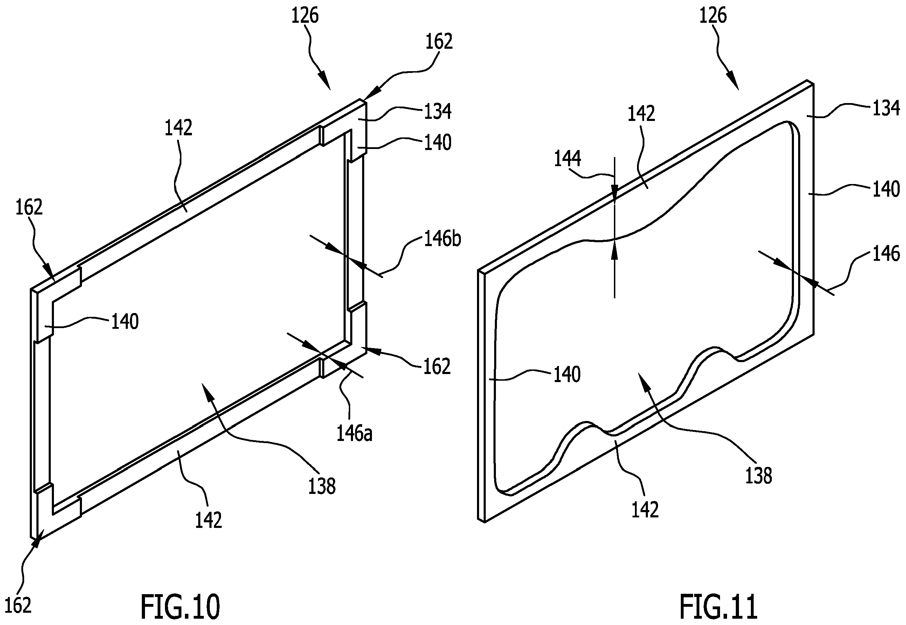

Ein in Fig. 10 dargestelltes Abstandshalterelement 126, insbesondere ein Rahmenelement 134, einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass die Stützstege 140 und/oder die Verbindungsstege 142 des Rahmenelements 134 in einer parallel zu der Stapelrichtung 104 des Batteriemoduls 100 verlaufenden Richtung eine lokal variierende Dicke 146 aufweisen.

Die Stützstege 140 und/oder die Verbindungsstege 142 des Rahmenelements 134 weisen vorzugsweise in Eckbereichen 162, in welchen die Stützstege 140 und die Verbindungsstege 142 miteinander verbunden sind, eine erste Dicke 146a auf.

Vorzugsweise weisen die Stützstege 140 und/oder die Verbindungsstege 142 des Rahmenelements 134 zwischen jeweils zwei Eckbereichen 162 eine zweite Dicke 146b auf.

Vorzugsweise ist die erste Dicke 146a größer als die zweite Dicke 146b, beispielsweise um einen Faktor 2.

Da die Stützstege 140 und/oder die Verbindungsstege 142 des Rahmenelements 134 in den Eckbereichen 162 eine größere Dicke 146a aufweisen als außerhalb der Eckbereiche 162, kann ein Kraftfluss zwischen einander benachbarten galvanischen Zellen 102 in der Stapelrichtung 104 vorzugsweise im Wesentlichen über besonders steife Bereiche der Zellgehäuse 106 der galvanischen Zellen 102 erfolgen.

Im Übrigen stimmt das in Fig. 10 dargestellte Abstandshalterelement 126, insbesondere das Rahmenelement 134, der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

Ein in Fig. 11 dargestelltes Abstandshalterelement 126, insbesondere ein Rahmenelement 134, einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass die zwei Stützstege 140 und/oder die zwei Verbindungsstege 142 senkrecht zu einer Haupterstreckungsrichtung derselben eine variierende Breite 144 aufweisen.

Vorzugsweise kann dabei ein Innenprofil des Rahmenelements 134 an ein Schwellverhalten zweier benachbarter galvanischer Zellen 102 angepasst werden.

Im Übrigen stimmt das in Fig. 11 dargestellte Abstandshalterelement 126, insbesondere das Rahmenelement 134, der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

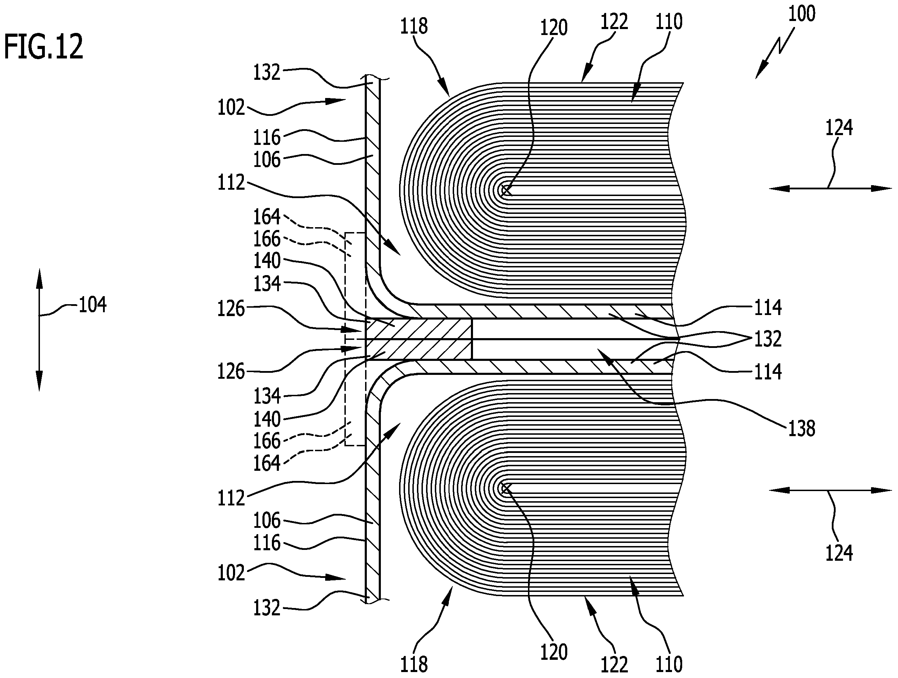

Eine in Fig. 12 dargestellte Ausführungsform eines Batteriemoduls 100 unterscheidet sich von der in den Fig. 1 bis 5 dargestellten Ausführungsform eines Batteriemoduls 100 im Wesentlichen dadurch, dass in der Stapelrichtung 104 des Batteriemoduls 100 mehrere Abstandshalterelemente 126, insbesondere mehrere Rahmenelemente 134, hintereinander angeordnet sind.

Insbesondere sind zwischen Zellgehäusen 106 zweier benachbarter galvanischer Zellen 102 jeweils zwei Abstandshalterelemente 126, insbesondere zwei Rahmenelemente 134, angeordnet.

Günstig kann es dabei insbesondere sein, wenn an einander abgewandten Hauptseiten 114 eines Zellgehäuses 106 einer jeweiligen galvanischen Zelle 102 jeweils ein Abstandshalterelement 126, insbesondere jeweils ein Rahmenelement 134, an den Zellgehäusen 106 der zwei benachbarten galvanischen Zellen 102 angeordnet ist.

Parallel zu der Stapelrichtung 104 des Batteriemoduls 100 ist eine Reihenfolge vorzugsweise wie folgt: Abstandshalterelement 126, galvanische Zelle 102, Abstandshalterelement 126, Abstandshalterelement 126, galvanische Zelle 102, Abstandshalterelement 126, Abstandshalterelement 126, galvanische Zelle 102, Abstandshalterelement 126, Abstandshalterelement 126, galvanische Zelle 102, etc.

Vorzugsweise sind jeweils zwei Rahmenelemente 134 auf jeweils eine galvanische Zelle 102, insbesondere auf das Zellgehäuse 106 der galvanischen Zelle 102, aufgestülpt.

Die zwei Rahmenelemente 134 umgreifen die jeweilige galvanische Zelle 102, insbesondere das Zellgehäuse 106 der galvanischen Zelle 102, zumindest näherungsweise C-förmig.

Die zwei Rahmenelemente 134 umfassen vorzugsweise jeweils einen zumindest näherungsweise C-förmigen Aufnahmeabschnitt, in welchem ein Zellgehäuse 106 einer galvanischen Zelle 102 parallel zu der Stapelrichtung 104 des Batteriemoduls 102 zumindest teilweise aufgenommen ist.

Die zwei Rahmenelemente 134 umfassen vorzugsweise ebenfalls jeweils zwei Stützstege 140 und zwei Verbindungsstege 142 und sind vorzugsweise ebenfalls ringförmig geschlossen.

Günstig kann es sein, wenn die zwei Rahmenelemente 134 jeweils zwei oder mehr als zwei, beispielsweise vier, Befestigungsvorsprünge 164 umfassen, welche parallel zu der Stapelrichtung 104 des Batteriemoduls 102 von den zwei Stützstegen 140 und/oder den zwei Verbindungsstegen 142 weg ragen.

Vorzugsweise ragt jeweils ein Befestigungsvorsprung 164, insbesondere ein Befestigungssteg 166, parallel zu der Stapelrichtung 104 des Batteriemoduls 102 von einem Stützsteg 140 und/oder von einem Verbindungssteg 142 weg.

Vorzugsweise entspricht eine Länge der Befestigungsstege 166 im Wesentlichen einer Länge der Stützstege 140 und/oder Verbindungsstege 142, insbesondere parallel zu einer Haupterstreckungsrichtung der Stützstege 140 und/oder Verbindungsstege 142.

Die Befestigungsvorsprünge 164 und/oder Befestigungsstege 166 umgeben ein Zellgehäuse 106 einer galvanischen Zelle 102 vorzugsweise jeweils vierseitig.

Vorzugsweise sind die zwei Rahmenelemente 134 einfach auf einander abgewandte Hauptseiten 114 eines Zellgehäuses 106 einer galvanischen Zelle 102 aufsteckbar. Insbesondere ist das Zellgehäuse 106 mit den daran angeordneten Rahmenelementen 134 anschließend einfach in einem Batteriemodulgehäuse positionierbar.

Im Übrigen stimmt die in Fig. 12 dargestellte Ausführungsform eines Batteriemoduls 100 hinsichtlich Aufbau und Funktion mit der in den Fig. 1 bis 5 dargestellten Ausführungsform eines Batteriemoduls 100 überein, so dass auf deren vorstehende Beschreibung insoweit Bezug genommen wird.

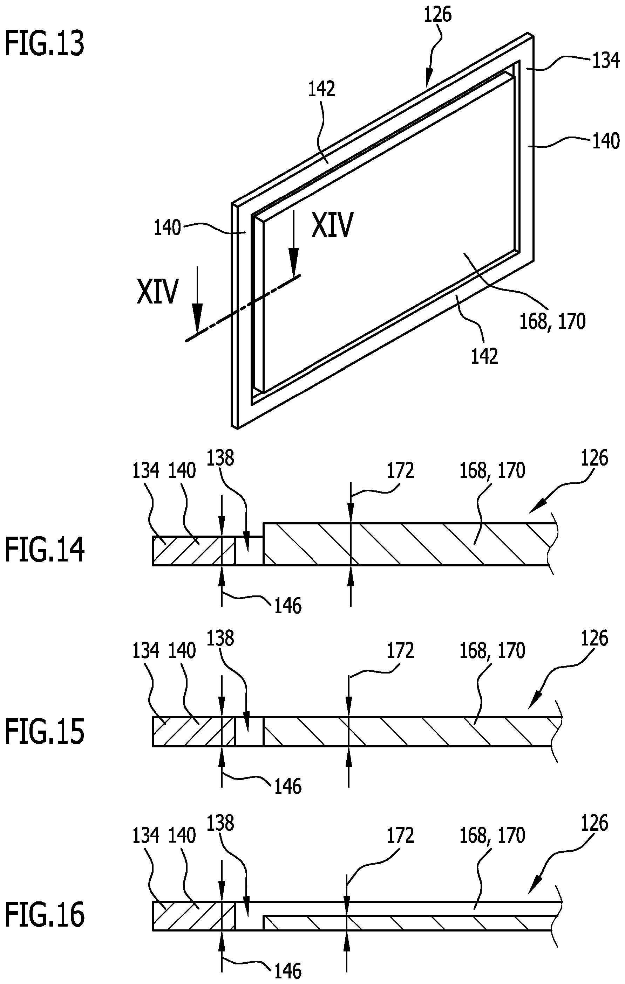

Ein in den Fig. 13 und 14 dargestelltes Abstandshalterelement 126 einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass das Abstandshalterelement 126 ein Zwischenelement 168 umfasst oder bildet.

Bei dem in den Fig. 13 und 14 dargestellten Abstandshalterelement 126 ist das Rahmenelement 134 vorzugsweise nicht mit dem Zwischenelement 168 verbunden.

Das Zwischenelement 168 ist vorzugsweise in dem Innenraum 138 angeordnet ist, insbesondere vollständig.

Beispielsweise ist es denkbar, dass das Zwischenelement 168 den Innenraum 138 in einer senkrecht zu der Stapelrichtung 104 des Batteriemoduls 100 verlaufenden Richtung zu mindestens ungefähr 50 %, beispielsweise zu mindestens ungefähr 75 %, vorzugsweise zu mindestens ungefähr 95 %, insbesondere vollständig, ausfüllt.

Vorzugsweise umfassen das Rahmenelement 134 und das Zwischenelement 168 voneinander verschiedene Materialien oder sind aus voneinander verschiedenen Materialien gebildet.

Beispielsweise ist es denkbar, dass das Zwischenelement 168 ein verformbares Kompensationselement 170 bildet.

Beispielsweise ist es ferner denkbar, dass ein als verformbares Kompensationselement 170 ausgebildetes Zwischenelement 168 ein Gummimaterial umfasst oder aus diesem gebildet ist.

Günstig kann es sein, wenn das Kompensationselement 170 parallel zu der Stapelrichtung 104 des Batteriemoduls 100 komprimierbar ist.

Ein als komprimierbares Kompensationselement 170 ausgebildetes Zwischenelement 168 umfasst dabei insbesondere ein komprimierbares Material, beispielsweise ein Schaummaterial, oder ist aus diesem gebildet.

Das komprimierbare Material eines als komprimierbares Kompensationselement 170 ausgebildeten Zwischenelements 168 ist beispielsweise elastisch oder plastisch komprimierbar.

Vorzugsweise ist das als komprimierbares Kompensationselement 170 ausgebildete Zwischenelement 168 in einem Auslieferungszustand des Batteriemoduls 100 zwischen zwei benachbarten Zellgehäusen 106 parallel zur Stapelrichtung 104 des Batteriemoduls 100 vorgespannt.

Das komprimierbare Kompensationselement 170 weist dabei in einem unverbauten und/oder unbelasteten Zustand eine maximale Dicke 172 auf, welche größer ist als die Dicke 146 des Rahmenelements 134, insbesondere der Stützstege 140 des Rahmenelements 134.

Im Übrigen stimmt das in Fig. 13 dargestellte Abstandshalterelement 126 der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

Ein in Fig. 15 dargestelltes Abstandshalterelement 126 einer Ausführungsform eines Batteriemoduls 100 unterscheidet sich von dem in den Fig. 13 und 14 dargestellten Abstandshalterelement 126 einer Ausführungsform eines Batteriemoduls 100 im Wesentlichen dadurch, dass das als komprimierbares Kompensationselement 170 ausgebildete Zwischenelement 168 parallel zu der Stapelrichtung 104 des Batteriemoduls 100 in einem Neuzustand desselben eine maximale Dicke 172 aufweist, welche einer maximalen Dicke 146 des Rahmenelements 134, insbesondere der Stützstege 140 des Rahmenelements 134, entspricht.

Im Übrigen stimmt das in Fig. 15 dargestellte Abstandshalterelement 126 der Ausführungsform eines Batteriemoduls 100 hinsichtlich Aufbau und Funktion mit dem in den Fig. 13 bis 14 dargestellten Abstandshalterelement 126 einer Ausführungsform eines Batteriemoduls 100 überein, so dass auf dessen vorstehende Beschreibung insoweit Bezug genommen wird.

Ein in Fig. 16 dargestelltes Abstandshalterelement 126 einer Ausführungsform eines Batteriemoduls 100 unterscheidet sich von dem in Fig. 15 dargestellten Abstandshalterelement 126 einer Ausführungsform eines Batteriemoduls 100 im Wesentlichen dadurch, dass das als komprimierbares Kompensationselement 170 ausgebildete Zwischenelement 168 parallel zu der Stapelrichtung 104 des Batteriemoduls 100 eine maximale Dicke 172 aufweist, welche kleiner ist als eine maximale Dicke 146 des Rahmenelements 134, insbesondere der Stützstege 140 des Rahmenelements 134.

Im Übrigen stimmt das in Fig. 16 dargestellte Abstandshalterelement 126 der Ausführungsform eines Batteriemoduls 100 hinsichtlich Aufbau und Funktion mit dem in Fig. 15 dargestellten Abstandshalterelement 126 einer Ausführungsform eines Batteriemoduls 100 überein, so dass auf dessen vorstehende Beschreibung insoweit Bezug genommen wird.

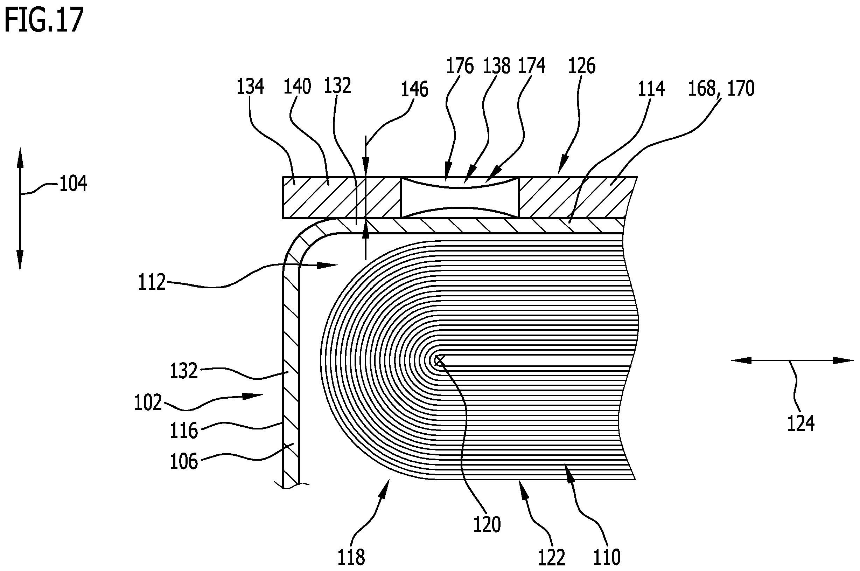

Ein Fig. 17 dargestelltes Abstandshalterelement 126 einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass das Rahmenelement 134 mit dem Zwischenelement 168 zumindest bereichsweise verbunden ist, insbesondere stoffschlüssig.

Vorzugsweise ist das Rahmenelement 134 einstückig mit dem Zwischenelement 168 hergestellt.

Das Abstandshalterelement 126, welches das Rahmenelement 134 und das Zwischenelement 168 umfasst oder bildet, ist dabei vorzugsweise ein einstückiges Spritzgussbauteil.

Insbesondere ist es denkbar, dass das Abstandshalterelement 126 an einem Verbindungsbereich 174, in welchem das Rahmenelement 134 mit dem Zwischenelement 168 stoffschlüssig verbunden ist, eine Materialschwächung 176 aufweist.

Im Übrigen stimmt das in Fig. 17 dargestellte Abstandshalterelement 126 der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

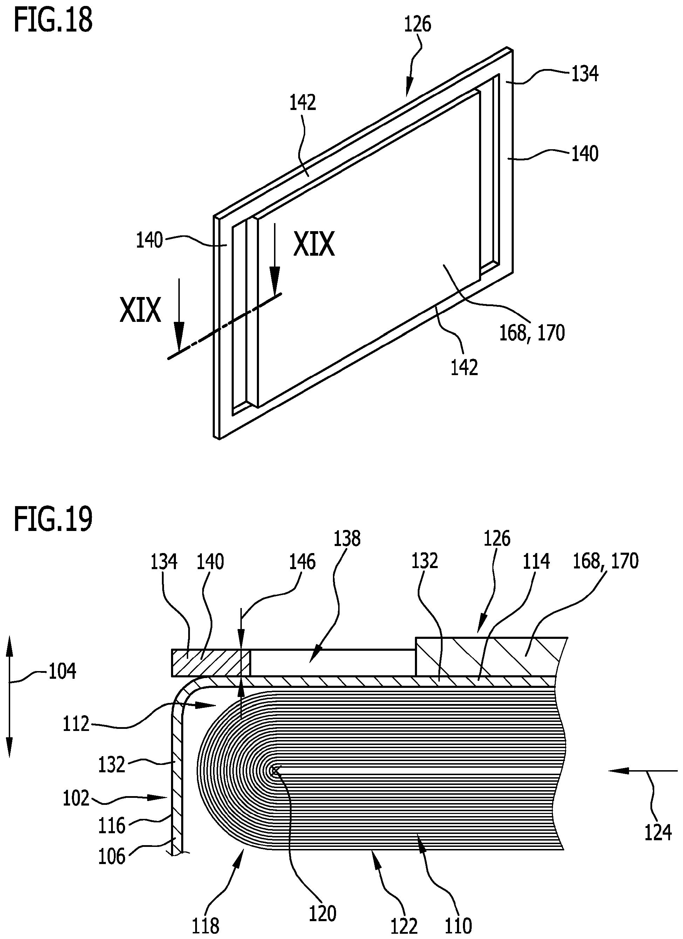

Ein in den Fig. 18 und 19 dargestelltes Abstandshalterelement 126 einer Ausführungsform eines Batteriemoduls 100 unterscheidet sich von dem in den Fig. 13 und 14 dargestellten Abstandshalterelement 126 einer Ausführungsform eines Batteriemoduls 100 im Wesentlichen dadurch, dass eine Projektion des Zwischenelements 168 entlang der Stapelrichtung 104 auf eine senkrecht zu der Stapelrichtung 104 angeordnete Projektionsebene einen Abstand von einer Projektion einer jeweiligen gemeinsamen Wickellinie 120 eines Umlenkbereichs 118 eines Zellwickels 110 einer galvanischen Zelle 102 aufweist.

Vorzugsweise ist die Projektion des Zwischenelements 168 parallel zu der Wickelrichtung 124 von der Projektion der gemeinsamen Wickellinie 120 beabstandet, insbesondere nach innen.

Im Übrigen stimmt das in den Fig. 18 und 19 dargestellte Abstandshalterelement 126 der Ausführungsform eines Batteriemoduls 100 hinsichtlich Aufbau und Funktion mit dem in den Fig. 13 und 14 dargestellten Abstandshalterelement 126 einer Ausführungsform eines Batteriemoduls 100 überein, so dass auf dessen vorstehende Beschreibung insoweit Bezug genommen wird.

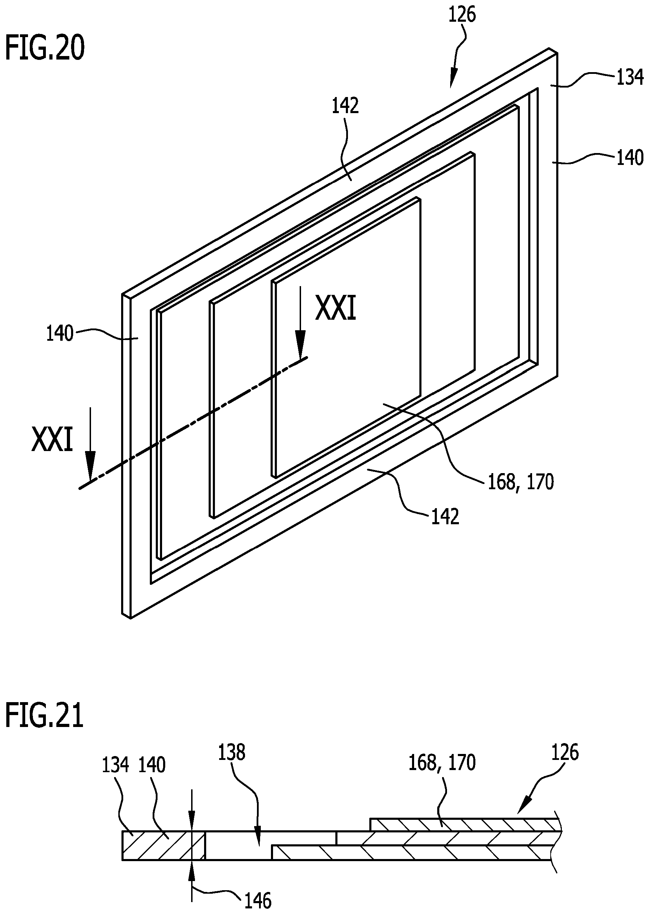

Ein in den Fig. 20 und 21 dargestelltes Abstandshalterelement 126 einer Ausführungsform eines Batteriemoduls 100 unterscheidet sich von dem in den Fig. 13 und 14 dargestellten Abstandshalterelement 126 einer Ausführungsform eines Batteriemoduls 100 im Wesentlichen dadurch, dass das als komprimierbares Kompensationselement 170 ausgebildete Zwischenelement 168 in der Stapelrichtung 104 mehrlagig ausgebildet ist.

Vorzugsweise weisen verschiedene Lagen des als komprimierbares Kompensationselement 170 ausgebildeten Zwischenelements 168 in einem senkrecht zu der Stapelrichtung 104 genommenen Querschnitt einen unterschiedlichen Flächeninhalt auf.

Beispielsweise ist das Kompensationselement 170 gestuft ausgebildet.

Insbesondere ist das als Kompensationselement 170 ausgebildete Zwischenelement 168 dabei an ein Schwellverhalten zweier benachbarter galvanischer Zellen anpassbar.

Im Übrigen stimmt das in den Fig. 20 und 21 dargestellte Abstandshalterelement 126 der Ausführungsform eines Batteriemoduls 100 hinsichtlich Aufbau und Funktion mit dem in den Fig. 13 und 14 dargestellten Abstandshalterelement 126 einer Ausführungsform eines Batteriemoduls 100 überein, so dass auf dessen vorstehende Beschreibung insoweit Bezug genommen wird.

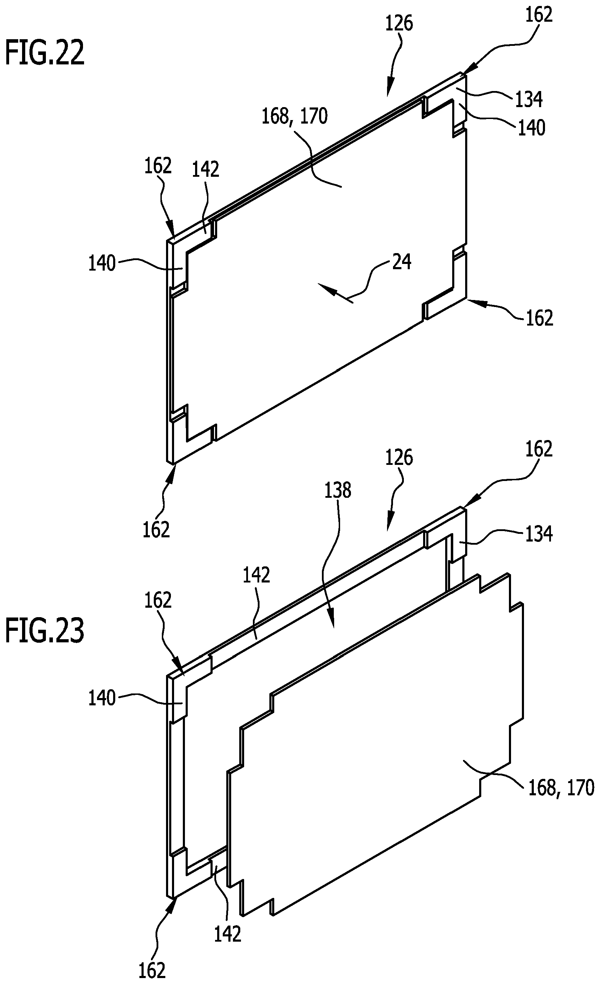

Ein in den Fig. 22 bis 26 dargestelltes Abstandshalterelement 126 einer Ausführungsform eines Batteriemoduls 100 unterscheidet sich von dem in den Fig. 13 und 14 dargestellten Abstandshalterelement 126 einer Ausführungsform eines Batteriemoduls 100 im Wesentlichen dadurch, dass das Zwischenelement 168 nur teilweise in dem Innenraum 138 angeordnet ist.

Vorzugsweise überlappen sich das Rahmenelement 134 und das Zwischenelement 168 in der Stapelrichtung 104 dabei zumindest teilweise.

Das Rahmenelement 134 entspricht vorzugsweise dem in Fig. 10 dargestellten Rahmenelement 134.

Vorzugsweise überlappt das Zwischenelement 168 das Rahmenelement 134 mit Ausnahme der Eckbereiche 162, in welchen die Stützstege 140 und Verbindungsstege 142 des Rahmenelements 134 miteinander verbunden sind, vollständig.

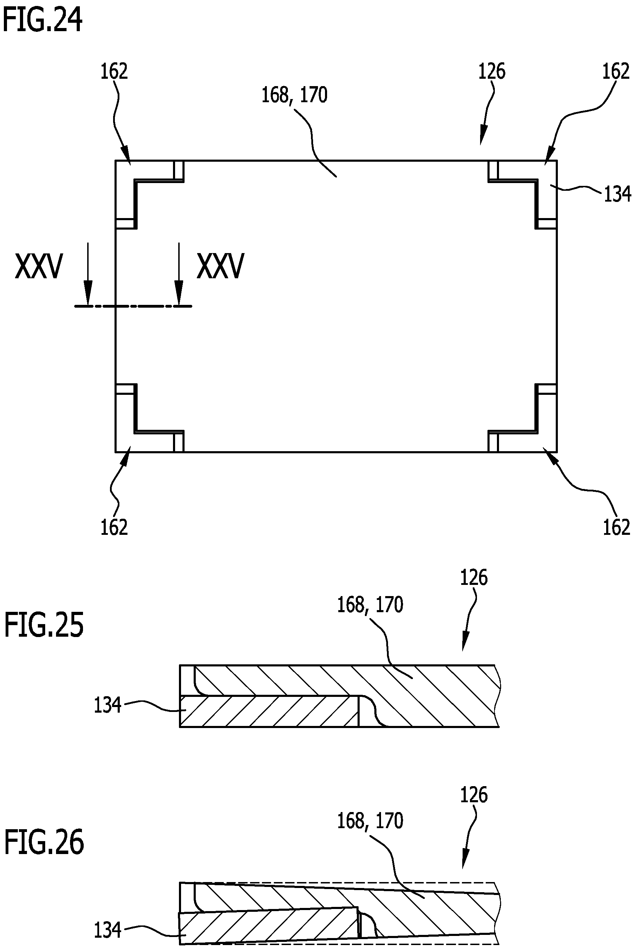

Vorzugsweise bildet das Zwischenelement 168 dabei ein Kompensationselement 170, welches parallel zu der Stapelrichtung 104 des Batteriemoduls 100 komprimierbar ist (vergl. Fig. 26).

In den Bereichen, in denen das Zwischenelement 168 das Rahmenelement 134 überlappt, sind das Rahmenelement 134 und das Zwischenelement 168 vorzugsweise kraft- und/oder formschlüssig miteinander verbunden, insbesondere da die galvanischen Zellen 102 entlang der Stapelrichtung 104 verspannt sind.

Im Übrigen stimmt das in den Fig. 22 bis 26 dargestellte Abstandshalterelement 126 der Ausführungsform eines Batteriemoduls 100 hinsichtlich Aufbau und Funktion mit dem in den Fig. 13 und 14 dargestellten Abstandshalterelement 126 einer Ausführungsform eines Batteriemoduls 100 überein, so dass auf dessen vorstehende Beschreibung insoweit Bezug genommen wird.

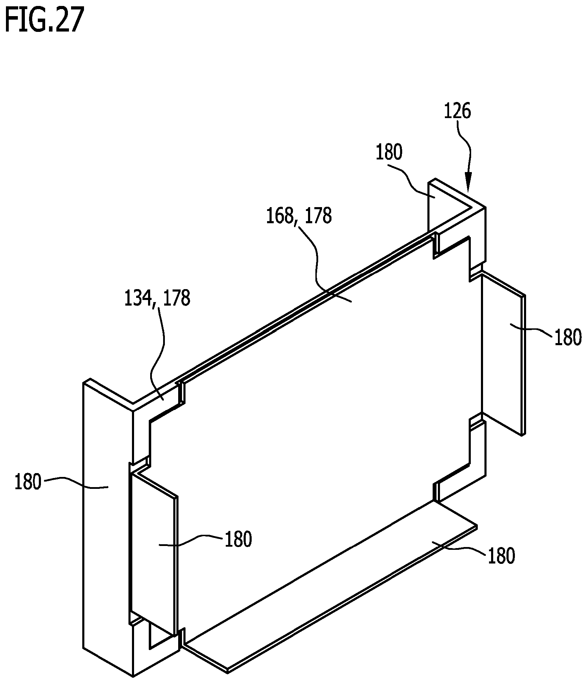

Ein in Fig. 27 dargestelltes Abstandshalterelement 126 einer Ausführungsform eines Batteriemoduls 100 unterscheidet sich von dem in den Fig. 22 bis 26 dargestellten Abstandshalterelement 126 einer Ausführungsform eines Batteriemoduls 100 im Wesentlichen dadurch, dass das Rahmenelement 134 und/oder das Zwischenelement 168 jeweils ein Temperierelement 178 umfassen oder bilden.

Günstig kann es dabei sein, wenn das Zwischenelement 168 nicht komprimierbar ausgebildet ist.

Das Rahmenelement 134 und/oder das Zwischenelement 168 sind vorzugsweise zur aktiven Temperierung und/oder zur passiven Temperierung ausgebildet.

Mittels des Rahmenelements 134 und/oder mittels des Zwischenelements 168 ist vorzugsweise Wärme von den zwei benachbarten galvanischen Zellen 102, zwischen welchen das Abstandshalterelement 126 angeordnet ist, abführbar.

Insbesondere ist es denkbar, dass den zwei benachbarten galvanischen Zellen 102, zwischen welchen das Abstandshalterelement 126 angeordnet ist, mittels des Rahmenelements 134 und/oder mittels des Zwischenelements 168 Wärme zuführbar ist.

Vorzugsweise umfassen das Rahmenelement 134 und/oder das Zwischenelement 168 jeweils ein oder mehrere Wärmeleitelemente 180, welche in der Stapelrichtung 104 des Batteriemoduls 100 von dem Rahmenelement 134 und/oder von dem Zwischenelement 168 weg ragen.

Günstig kann es ferner sein, wenn das Rahmenelement 134 und/oder das Zwischenelement 168 eine anisotrope Wärmeleitfähigkeit aufweisen.

Eine Wärmeleitfähigkeit des Rahmenelements 134 und/oder des Zwischenelements 168 ist in der Stapelrichtung 104 des Batteriemoduls 100 vorzugsweise kleiner als eine Wärmeleitfähigkeit des Rahmenelements 134 und/oder des Zwischenelements 168 senkrecht zu der Stapelrichtung 104 des Batteriemoduls 100.

Beispielsweise ist es denkbar, dass das Rahmenelement 134 und/oder das Zwischenelement 168 in der Stapelrichtung 104 des Batteriemoduls 100 als Wärmeisolator ausgebildet sind.

Günstig kann es ferner sein, wenn das Rahmenelement 134 und/oder das Zwischenelement 168 senkrecht zu der Stapelrichtung 104 des Batteriemoduls 100 als Wärmeleiter ausgebildet sind.

Im Übrigen stimmt das in Fig. 27 dargestellte Abstandshalterelement 126 der Ausführungsform eines Batteriemoduls 100 hinsichtlich Aufbau und Funktion mit dem in den Fig. 22 bis 26 dargestellten Abstandshalterelement 126 einer Ausführungsform eines Batteriemoduls 100 überein, so dass auf dessen vorstehende Beschreibung insoweit Bezug genommen wird.

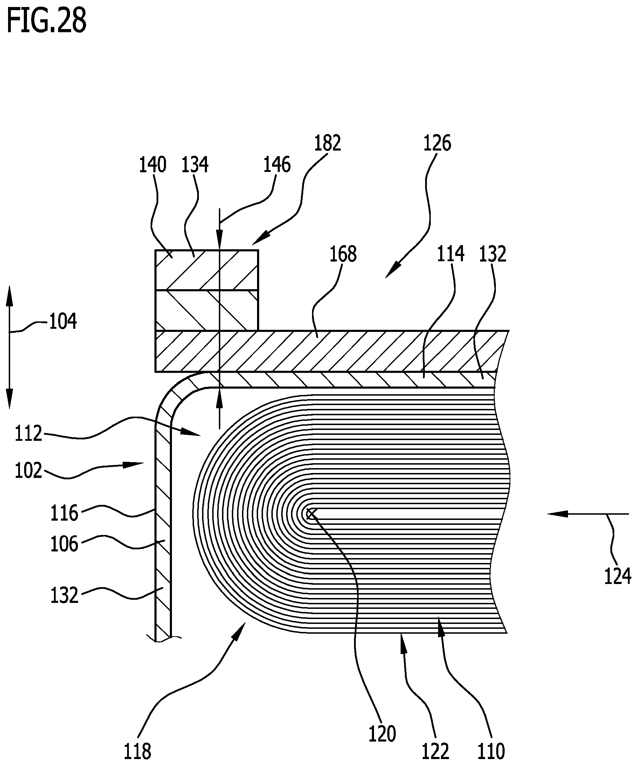

Ein in Fig. 28 dargestelltes Abstandshalterelement 126 einer Ausführungsform eines Batteriemoduls 100 unterscheidet sich von dem in den Fig. 1 bis 5 dargestellten Abstandshalterelement 126 einer Ausführungsform eines Batteriemoduls 100 im Wesentlichen dadurch, dass ein Randbereich 182 des Abstandshalterelements 126, insbesondere ein ringförmig geschlossener Randbereich 182, mehrlagig ausgebildet ist.

Der mehrlagige Randbereich 182 bildet vorzugsweise ein Rahmenelement 134.

Insbesondere ist es dabei denkbar, dass das Abstandshalterelement 126 ein komprimierbares Material, beispielsweise ein Schaummaterial, umfasst oder aus diesem gebildet ist.

Das komprimierbare Material ist dabei beispielsweise elastisch oder plastisch komprimierbar.

Günstig kann es sein, wenn das komprimierbare Material in dem mehrlagigen Randbereich 182 durch Planieren und/oder Verdichten verfestigt ist

Im Übrigen stimmt das in Fig. 28 dargestellte Abstandshalterelement 126 der Ausführungsform eines Batteriemoduls 100 hinsichtlich Aufbau und Funktion mit dem in den Fig. 1 bis 5 dargestellten Abstandshalterelement 126 einer Ausführungsform eines Batteriemoduls 100 überein, so dass auf dessen vorstehende Beschreibung insoweit Bezug genommen wird.

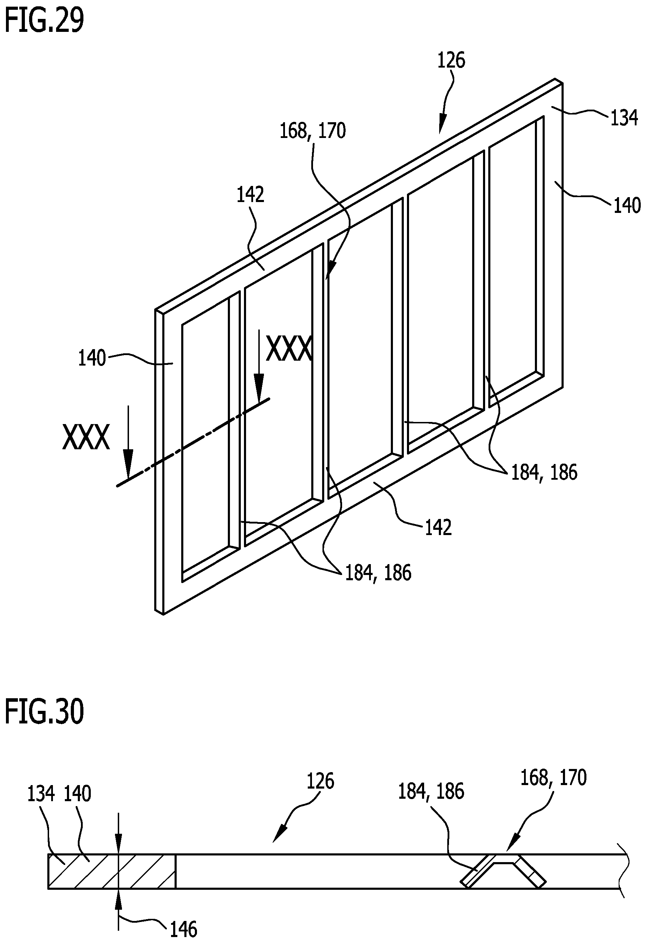

Ein in den Fig. 29 und 30 dargestelltes Abstandshalterelement 126 einer Ausführungsform eines Batteriemoduls 100 unterscheidet sich von dem in den Fig. 13 und 14 dargestellten Abstandshalterelement 126 einer Ausführungsform eines Batteriemoduls 100 im Wesentlichen dadurch, dass das als verformbares Kompensationselement 170 ausgebildete Zwischenelement 168 mehrere Verformungselemente 184 umfasst.

Das Kompensationselement 170 umfasst insbesondere mehrere Verformungsstege 186, welche die Verformungselemente 184 bilden.

Vorzugsweise weisen die Verformungsstege 186 einen U-förmigen oder V-förmigen Querschnitt auf.

Vorzugsweise ist ein Verformungssteg 186 des Kompensationselements 170 jeweils mit zwei Verbindungsstegen 140 des Rahmenelements 134 verbunden.

Insbesondere ist es denkbar, dass die Verformungsstege 186 im Wesentlichen parallel zu den Stützstegen 140 angeordnet sind.

Im Übrigen stimmt das in den Fig. 29 und 30 dargestellte Abstandshalterelement 126 der Ausführungsform eines Batteriemoduls 100 hinsichtlich Aufbau und Funktion mit dem in den Fig. 13 und 14 dargestellten Abstandshalterelement 126 einer Ausführungsform eines Batteriemoduls 100 überein, so dass auf dessen vorstehende Beschreibung insoweit Bezug genommen wird.

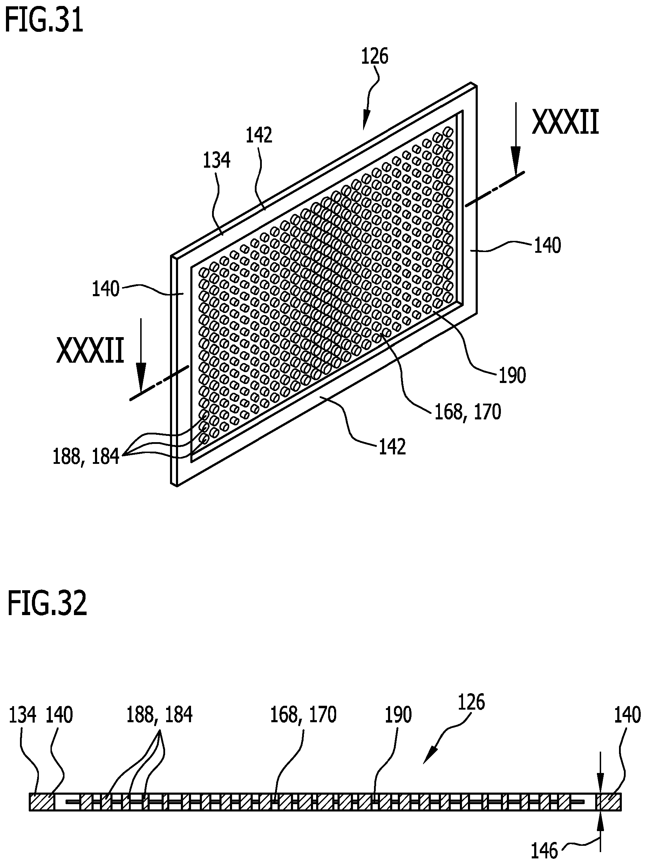

Ein in den Fig. 31 und 32 dargestelltes Abstandshalterelement 126 einer Ausführungsform eines Batteriemoduls 100 unterscheidet sich von dem in den Fig. 29 und 30 dargestellten Abstandshalterelement 126 einer Ausführungsform eines Batteriemoduls 100 im Wesentlichen dadurch, dass das als verformbares Kompensationselement 170 ausgebildete Zwischenelement 168 eine Vielzahl von verformbaren Noppen 188 umfasst, welche die Verformungselemente 184 bilden.

Aus Übersichtlichkeitsgründen sind in den Fig. 31 und 32 lediglich einzelne der verformbaren Noppen 188 mit einem Bezugszeichen gekennzeichnet.

Vorzugsweise sind die verformbaren Noppen 188 im Wesentlichen kreiszylindrisch ausgebildet.

Die verformbaren Noppen 188 ragen insbesondere parallel zu der Stapelrichtung 104 des Batteriemoduls 100 von einer Grundplatte 190 weg, insbesondere auf beiden Seiten der Grundplatte 190.

Günstig kann es sein, wenn einzelne oder mehrere verformbare Noppen 188 eine voneinander verschiedene Querschnittsform und/oder einen voneinander verschiedenen Durchmesser aufweisen, insbesondere in einem senkrecht zu der Stapelrichtung 104 des Batteriemoduls 100 genommenen Querschnitt.

Vorzugsweise sind die verformbaren Noppen 188 in mehreren Zeilen und/oder mehreren Spalten angeordnet sind, insbesondere fluchtend.

Beispielsweise ist es denkbar, dass jeweils in einer Spalte angeordnete verformbare Noppen 188 eine identische Querschnittsform und/oder einen identischen Durchmesser aufweisen.

Ferner ist es beispielsweise denkbar, dass einzelne oder mehrere in einer Zeile angeordnete verformbare Noppen 188 eine voneinander verschiedene Querschnittsform und/oder einen voneinander verschiedenen Durchmesser aufweisen.

Vorzugsweise kann das als verformbares Kompensationselement 170 ausgebildete Zwischenelement 168 dabei an ein Schwellverhalten zweier benachbarter galvanischer Zellen 102 angepasst werden.

Insbesondere ist durch eine Anpassung eines Durchmessers der verformbaren Noppen 188 ein Verformungswiderstand derselben einstellbar.

Im Übrigen stimmt das in den Fig. 31 und 32 dargestellte Abstandshalterelement 126 der Ausführungsform eines Batteriemoduls 100 hinsichtlich Aufbau und Funktion mit dem in den Fig. 29 und 30 dargestellten Abstandshalterelement 126 einer Ausführungsform eines Batteriemoduls 100 überein, so dass auf dessen vorstehende Beschreibung insoweit Bezug genommen wird.

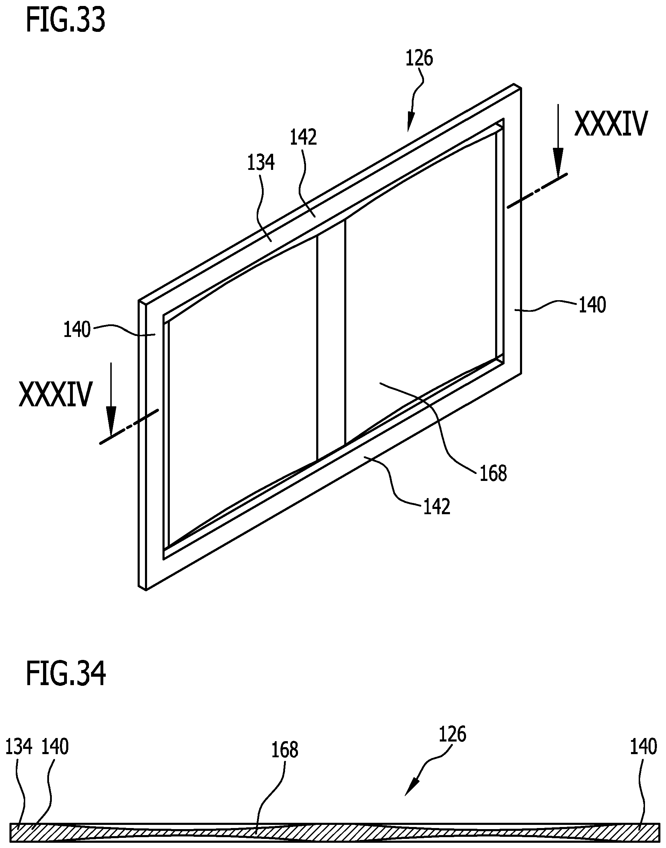

Ein in den Fig. 33 und 34 dargestelltes Abstandshalterelement 126 einer Ausführungsform eines Batteriemoduls 100 unterscheidet sich von dem in Fig. 17 dargestellten Abstandshalterelement 126 einer Ausführungsform eines Batteriemoduls 100 im Wesentlichen dadurch, dass das Zwischenelement 168 nicht als verformbares und/oder komprimierbares Kompensationselement 170 ausgebildet ist.

Vorzugsweise weist das Zwischenelement 168 in einer parallel zu der Stapelrichtung 104 des Batteriemoduls 100 verlaufenden Richtung eine lokal variierende Dicke auf.

Günstig kann es sein, wenn das Zwischenelement 168 nur im Bereich der zwei Stützstege 140 des Rahmenelements 134 mit diesem verbunden ist.

Vorzugsweise ist das Zwischenelement 168 im Bereich der Verbindungsstege 142 des Rahmenelements 134 nicht mit diesem verbunden.

Da das Zwischenelement 168 vorzugsweise nur im Bereich der Stützstege 140 mit dem Rahmenelement 134 verbunden ist, ist das Zwischenelement 168 vorzugsweise federnd mit dem Rahmenelement 134 verbunden.

Im Übrigen stimmt das in den Fig. 33 und 34 dargestellte Abstandshalterelement 126 der Ausführungsform eines Batteriemoduls 100 hinsichtlich Aufbau und Funktion mit dem in Fig. 17 dargestellten Abstandshalterelement 126 einer Ausführungsform eines Batteriemoduls 100 überein, so dass auf dessen vorstehende Beschreibung insoweit Bezug genommen wird.

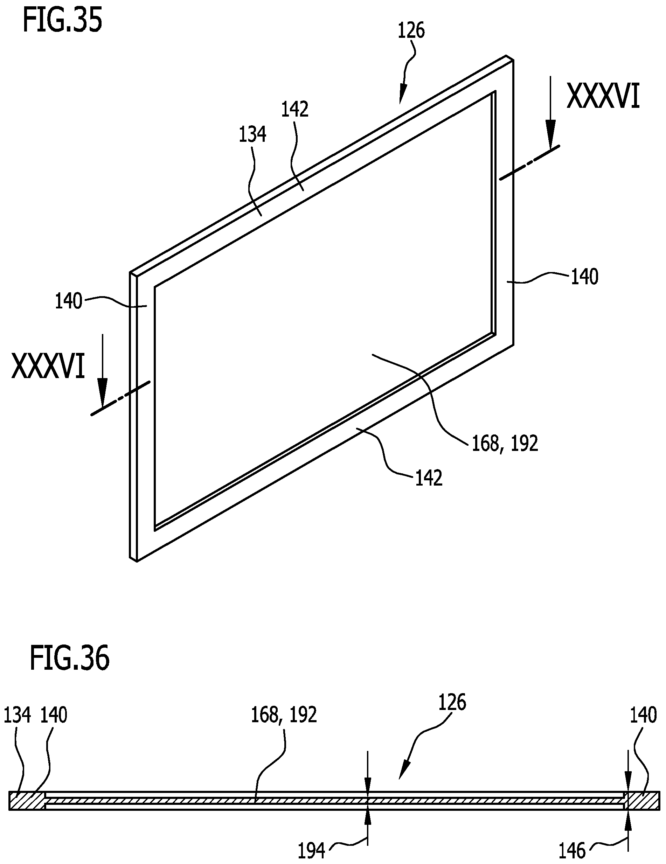

Ein in den Fig. 35 und 36 dargestelltes Abstandshalterelement 126 einer Ausführungsform eines Batteriemoduls 100 unterscheidet sich von dem in den Fig. 33 und 34 dargestellten Abstandshalterelement 126 einer Ausführungsform eines Batteriemoduls 100 im Wesentlichen dadurch, dass das Zwischenelement 168 ringförmig geschlossen mit dem Rahmenelement 134 verbunden ist.

Das Zwischenelement 168 bildet dabei insbesondere ein Deckelelement 192.

Das Deckelelement 192 weist parallel zu der Stapelrichtung 104 vorzugsweise eine konstante Dicke 194 auf.

Das Deckelelement 192 weist parallel zu der Stapelrichtung 104 insbesondere eine Dicke 194 auf, welche kleiner ist als eine Dicke 146 des Rahmenelements 134.

Im Übrigen stimmt das in den Fig. 35 und 36 dargestellte Abstandshalterelement 126 der Ausführungsform eines Batteriemoduls 100 hinsichtlich Aufbau und Funktion mit dem in den Fig. 33 und 34 dargestellten Abstandshalterelement 126 einer Ausführungsform eines Batteriemoduls 100 überein, so dass auf dessen vorstehende Beschreibung insoweit Bezug genommen wird.

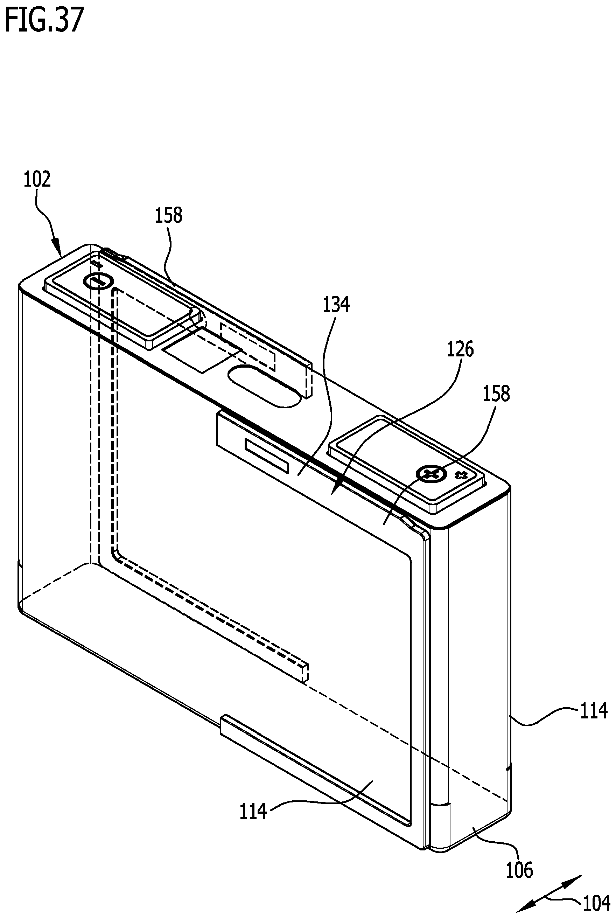

Eine in Fig. 37 dargestellte Ausführungsform eines Batteriemoduls 100 unterscheidet sich von der in Fig. 6 dargestellten Ausführungsform eines Batteriemoduls 100 im Wesentlichen dadurch, dass die Rahmenelementteile 158 des Rahmenelements 134 im Wesentlichen C-förmig ausgebildet sind.

Vorzugsweise ist dabei an den einander abgewandten Hauptseiten 114 des Zellgehäuses 106 der galvanischen Zelle 102 jeweils einer der beiden C-förmigen Rahmenelementteile 158 des Rahmenelements 134 angeordnet.

Günstig kann es dabei sein, wenn die Rahmenelementteile 158 an den einander abgewandten Hauptseiten 114 des Zellgehäuses 106 mit dem Zellgehäuse 106, insbesondere mit der Zellgehäusewandung 132, verbunden, beispielsweise verklebt, sind.

Vorzugsweise sind die Rahmenelementteile 158 derart angeordnet und/oder ausgebildet, dass sich Projektionen der an den einander abgewandten Hauptseiten 114 des Zellgehäuses 106 einer galvanischen Zelle 102 angeordneten Rahmenelementteile 158 parallel zu der Stapelrichtung 104 auf eine senkrecht zu der Stapelrichtung 104 angeordnete Ebene nicht überlappen.

Vorzugsweise kann durch die C-förmigen Rahmenelementteile 158 eine Positionierhilfe zum Positionieren der galvanischen Zellen 102 relativ zueinander bereitgestellt werden.

Insbesondere kann eine falsche Positionierung von Zellepolen zweier benachbarter galvanischer Zellen 102 verhindert werden.

Durch Stapeln mehrerer galvanischer Zellen 102, an deren einander abgewandten Hauptseiten 114 jeweils C-förmige Rahmenelementteile 158 angeordnet sind, ergänzen sich die Rahmenelementteile 158 der einander zugewandten Hauptseiten 114 zweier benachbarter galvanischer Zellen 102 vorzugsweise zu einem ringförmig geschlossenen Rahmenelement 134.

Im Übrigen stimmt die in Fig. 37 dargestellte Ausführungsform eines Batteriemoduls 100 hinsichtlich Aufbau und Funktion mit der in Fig. 6 dargestellten Ausführungsform eines Batteriemoduls 100 überein, so dass auf deren vorstehende Beschreibung insoweit Bezug genommen wird.

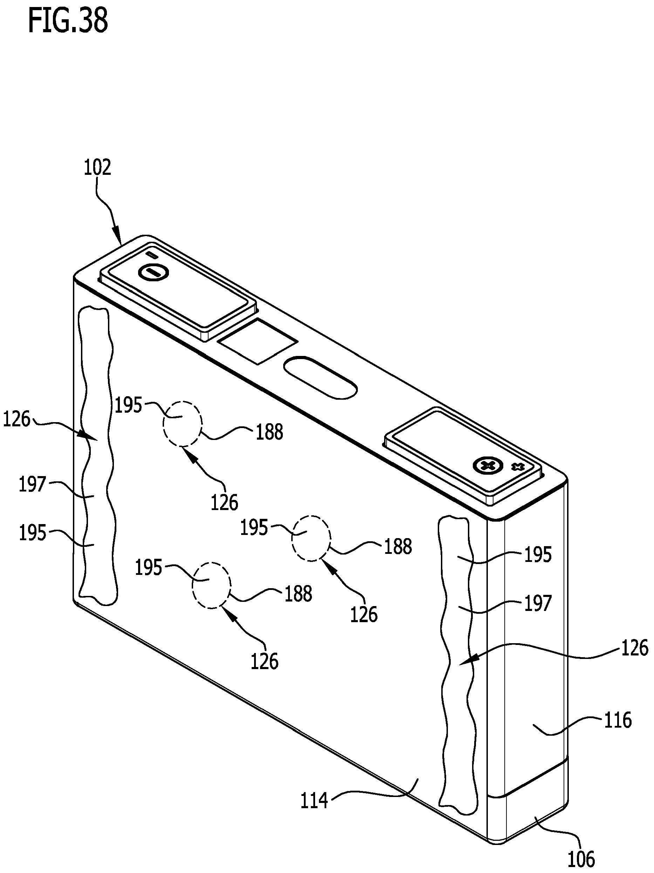

Eine in Fig. 38 dargestellte Ausführungsform eines Batteriemoduls 100 unterscheidet sich von der in den Fig. 1 bis 5 dargestellten Ausführungsform eines Batteriemoduls 100 im Wesentlichen dadurch, dass die Abstandshalterelemente 126 aus einem gießfähigen, spritzfähigen und/oder druckfähigen Material 195 auf das Zellgehäuse 106 der galvanischen Zelle 102 aufgebracht sind.

Beispielsweise sind parallel zu der gemeinsamen Wickellinie 120 zwei Wülste 197 auf eine jeweilige Hauptseite 114 des Zellgehäuses 106 der galvanischen Zelle 102 aufgebracht.

Günstig kann es ferner sein, wenn eine oder mehrere Noppen 188 auf eine jeweilige Hauptseite 114 des Zellgehäuses 106 der galvanischen Zelle 102 aufgebracht sind.

Das eine oder die mehreren Abstandshalterelemente 126 sind insbesondere mittels eines Gießverfahrens; mittels eines Spritzverfahrens; und/oder mittels eines Druckverfahrens auf das Zellgehäuse 106 der galvanischen Zelle 102 aufgebracht.

Im Übrigen stimmt die in Fig. 38 dargestellte Ausführungsform eines Batteriemoduls hinsichtlich Aufbau und Funktion mit der in den Fig. 1 bis 5 dargestellten Ausführungsform eines Batteriemoduls 100 überein, so dass auf deren vorstehende Beschreibung insoweit Bezug genommen wird.

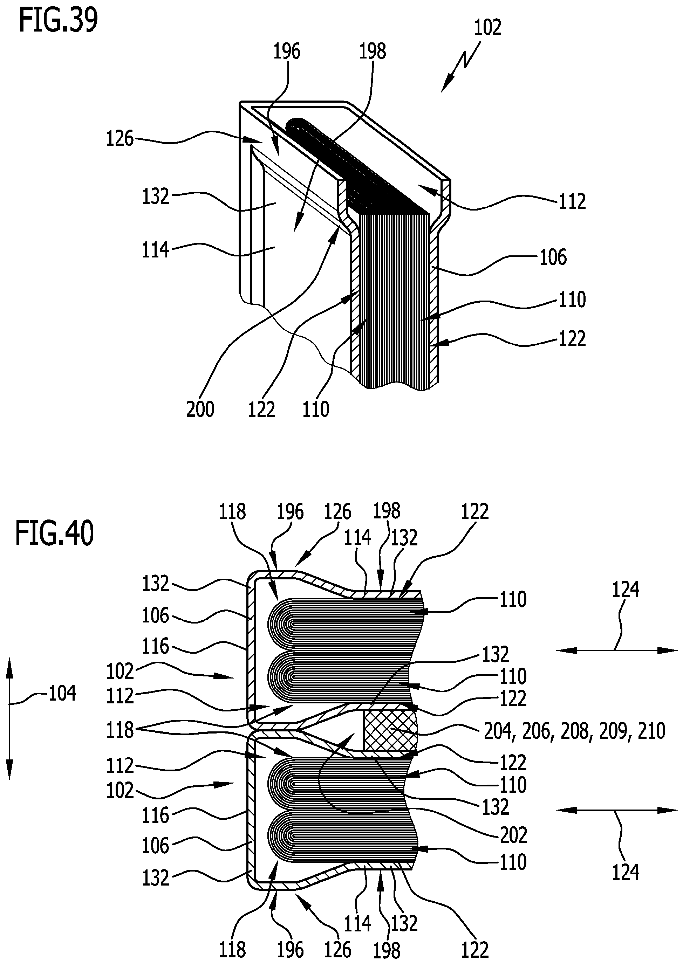

Eine in den Fig. 39 und 40 dargestellte Ausführungsform einer galvanischen Zelle 102 unterscheidet sich von der in den Fig. 1 bis 36 dargestellten Ausführungsform einer galvanischen Zelle 102 im Wesentlichen dadurch, dass das Zellgehäuse 106 der galvanischen Zelle 102 nicht quaderförmig ausgebildet ist.

Vorzugsweise umfasst oder bildet das Zellgehäuse 106 ein oder mehrere Abstandshalterelemente 126.

Vorzugsweise sind in einem Batteriemodul 100, welches mehrere galvanische Zellen 102 umfasst, zwischen einander zugewandten Zellwickeln 110 von zwei in der Stapelrichtung 104 benachbarten galvanischen Zellen 102 jeweils zwei Abstandshalterelemente 126 angeordnet.

Vorzugsweise umfasst das Zellgehäuse 106 der galvanischen Zellen 102 an den beiden Hauptseiten 114 des Zellgehäuses 116 jeweils einen Abstandshalterbereich 196 sowie einen Mittelbereich 198.

Die Abstandshalterbereiche 196 ragen vorzugsweise senkrecht zu einer Mittelebene der Zellwickel 110 der galvanischen Zellen 102 von dem Mittelbereich 196 weg und bilden dabei jeweils ein Abstandshalterelement 126.

Die Abstandshalterbereiche 196 sind vorzugsweise an einem Randbereich, insbesondere an einem ringförmig geschlossenen Randbereich, einer jeweiligen Hauptseite 114 des Zellgehäuses 106 einer galvanischen Zelle 102 angeordnet.

Der Mittelbereich 198 einer jeweiligen Hauptseite 114 ist vorzugsweise von dem ringförmig geschlossenen Abstandshalterbereich 196 umgeben und bildet insbesondere eine Vertiefung in der Hauptseite 114 des Zellgehäuses 106 der galvanischen Zelle 102.

Das Zellgehäuse 106 einer galvanischen Zelle 102 ist somit an den beiden Hauptseiten 114 vorzugsweise im Wesentlichen konkav ausgebildet.

Ein Zellgehäuse 106 der galvanischen Zellen 102 umfasst an den beiden Hauptseiten 114 vorzugsweise einen Übergangsbereich 200, welcher zwischen dem Mittelbereich 198 und dem Abstandshalterbereich 196 angeordnet ist.

Vorzugsweise umfassen die Abstandshalterbereiche 196 eine Oberfläche, welche im Wesentlichen parallel zu einer Oberfläche des Mittelbereichs 198 angeordnet ist.

Günstig kann es sein, wenn die Zellgehäusewandung 132 des Zellgehäuses 106 der galvanischen Zellen 102 in dem Zwischenbereich 122 eines Zellwickels 110 der galvanischen Zelle 102 an dem Zellwickel 110 anliegt.

Günstig kann es insbesondere sein, wenn mindestens ungefähr 70 %, insbesondere mindestens ungefähr 90 %, einer Oberfläche des Zwischenbereichs 122 des Zellwickels 110 vollständig an dem Mittelbereich 198 der Zellgehäusewandung 132 anliegt.

Vorzugsweise liegt der Mittelbereich 198 der Zellgehäusewandung 132 im Wesentlichen mit seiner vollständigen Oberfläche an dem Zwischenbereich 122 des Zellwickels 110 an.

Beispielsweise ist es denkbar, dass die Zellgehäusewandung 132 des Zellgehäuses 106 einer galvanischen Zelle 102 in dem Mittelbereich 198 im Wesentlichen parallel zu einer Mittelebene eines Zellwickels 110 der galvanischen Zelle 102 angeordnet ist.

Vorzugsweise liegt die Zellgehäusewandung 132 des Zellgehäuses 106 einer galvanischen Zelle 102 in dem Umlenkbereich 118 eines Zellwickels 110 der galvanischen Zelle 102 nicht an dem Zellwickel 110 an.

Günstig kann es sein, wenn die Zellgehäusewandung 132 des Zellgehäuses 106 einer galvanischen Zelle 102 in dem Abstandshalterbereich 196 und/oder in dem Übergangsbereich 200 nicht an einem Zellwickel 110 der galvanischen Zelle 102 anliegt.

Insbesondere ist die Zellgehäusewandung 132 des Zellgehäuses 106 einer galvanischen Zelle 102 in dem Abstandshalterbereich 196 im Wesentlichen parallel zu einer Mittelebene eines Zellwickels 110 der galvanischen Zelle 102 angeordnet.

Günstig kann es sein, wenn das Zellgehäuse 106 einer galvanischen Zelle 102 im Wesentlichen symmetrisch ausgebildet ist, insbesondere im Wesentlichen symmetrisch zu einer senkrecht zu der Stapelrichtung 104 des Batteriemoduls 100 und/oder parallel zu einer Mittelebene eines Zellwickels 110 der galvanischen Zelle 102 angeordneten Symmetrieebene.

Vorzugsweise ist das Zellgehäuse 106 einer galvanischen Zelle im Wesentlichen symmetrisch zu einer parallel zu der Stapelrichtung 104 des Batteriemoduls 100 angeordneten Symmetrieebene ausgebildet.

Günstig kann es sein, wenn das Zellgehäuse 106 einer galvanischen Zelle 102 ein metallisches Material umfasst oder durch dieses gebildet wird, beispielsweise Aluminium.

Das Zellgehäuse 106 einer galvanischen Zelle 102 ist vorzugsweise ein sogenanntes "Hard-Case"-Gehäuse.

Das Zellgehäuse 106 ist vorzugsweise mittels eines Umformprozesses hergestellt, beispielsweise durch Tiefziehen, und weist insbesondere eine im Wesentlichen gleichmäßige Wandstärke auf. Günstig kann es dabei sein, wenn durch das Zellgehäuse 106 der galvanischen Zelle 102 gebildete Abstandshalterelemente 126 mittels eines Umformprozesses hergestellt sind.

Vorzugsweise liegen die Zellgehäuse 106 zweier benachbarter galvanischer Zellen 102 im Bereich der durch das Zellgehäuse 106 der galvanischen Zellen 102 gebildeten Abstandshalterelemente 126 unmittelbar aneinander an.

Günstig kann es insbesondere sein, wenn die Zellgehäuse 106 zweier benachbarter galvanischer Zellen 102 nur bereichsweise unmittelbar aneinander anliegen, insbesondere nur im Bereich der durch die Zellgehäuse 106 der galvanischen Zellen 102 gebildeten Abstandshalterelemente 126.

Vorzugsweise sind die Zellgehäusewandungen 132 der Zellgehäuse 106 zweier benachbarter galvanischer Zellen 102 mittels der durch die Zellgehäuse 106 gebildeten Abstandshalterelemente 126 in einem ringförmig geschlossenen, durch die Abstandshalterelemente 126 begrenzten Zwischenraum 202 voneinander beabstandet angeordnet.

Insbesondere liegen die Zellgehäusewandungen 132 der Zellgehäuse 106 zweier benachbarter galvanischer Zellen 102 in dem Zwischenraum 202 nicht aneinander an.

Vorzugsweise begrenzen die Mittelbereiche 198 und/oder die Übergangsbereiche 200 einer jeweiligen Hauptseite 114 der Zellgehäuse 106 zweier benachbarter galvanischer Zellen 102 den Zwischenraum 202.

Vorzugsweise wird der Zwischenraum 202 zwischen zwei benachbarten galvanischen Zellen 102 gebildet, welche an den einander zugewandten Hauptseiten 114 der Zellgehäuse 106 im Wesentlichen konkav ausgebildet sind.

Günstig kann es sein, wenn in dem Zwischenraum 202 ein Zusatzelement 204, beispielsweise ein Kompensationselement 206, ein Propagationsschutzelemente 208, ein Sensorelement 209 und/oder ein Temperierelement 210, angeordnet ist.

Mittels eines in dem Zwischenraum 202 angeordneten Temperierelements 210 sind die an den Zwischenraum 202 angrenzenden galvanischen Zellen 102 vorzugswiese temperierbar, beispielsweise kühlbar.

Mittels eines in dem Zwischenraum 202 angeordneten Temperierelements 210 ist insbesondere Wärme aus dem Zwischenraum ableitbar.

Ein in dem Zwischenraum 202 angeordnetes Temperierelement 210 ist vorzugsweise zur aktiven Temperierung der an den Zwischenraum 202 angrenzenden galvanischen Zellen 102 und/oder zur passiven Temperierung der an den Zwischenraum 202 angrenzenden galvanischen Zellen 102 ausgebildet.

Mittels eines in dem Zwischenraum 202 angeordneten Propagationsschutzelements 208 ist vorzugsweise eine Propagation eines thermischen Durchgehens einer galvanischen Zelle 102 verzögerbar und/oder verhinderbar.

Ein in dem Zwischenraum 202 angeordnetes Kompensationselement 206 ist in einer parallel zu der Stapelrichtung 104 des Batteriemoduls 100 verlaufenden Richtung vorzugsweise aufgrund einer Ausdehnung der Zellgehäuse 106 zweier benachbarter galvanischer Zellen 102 verformbar, beispielsweise komprimierbar.

Vorzugsweise umfasst das Kompensationselement 206 ein Schaummaterial oder wird durch dieses gebildet.

Mittels eines in dem Zwischenraum 202 angeordneten Kompensationselements 206 ist vorzugsweise eine Delamination von Zellwickeln 110 einer jeweiligen galvanischen Zelle 102 begrenzbar oder verhinderbar.

Vorzugsweise sind die Zellgehäuse 106 zweier benachbarter galvanischer Zellen 102 in einem Auslieferungszustand des Batteriemoduls 100 mittels in dem Zwischenraum 202 angeordneter Kompensationselemente 206 in der Stapelrichtung 104 des Batteriemoduls 100 vorgespannt. Vorzugsweise ist dadurch eine Vorspannkraft realisierbar, welche einer insbesondere alterungsbedingten Ausdehnung der Zellgehäuse 106 der zwei benachbarten galvanischen Zellen 102 vorzugsweise entgegenwirkt.

Im Übrigen stimmt die in den Fig. 39 und 40 dargestellte Ausführungsform der galvanischen Zelle 102 hinsichtlich Aufbau und Funktion mit der in den Fig. 1 bis 36 dargestellten Ausführungsform einer galvanischen Zelle 102 überein, so dass auf deren vorstehende Beschreibung insoweit Bezug genommen wird.

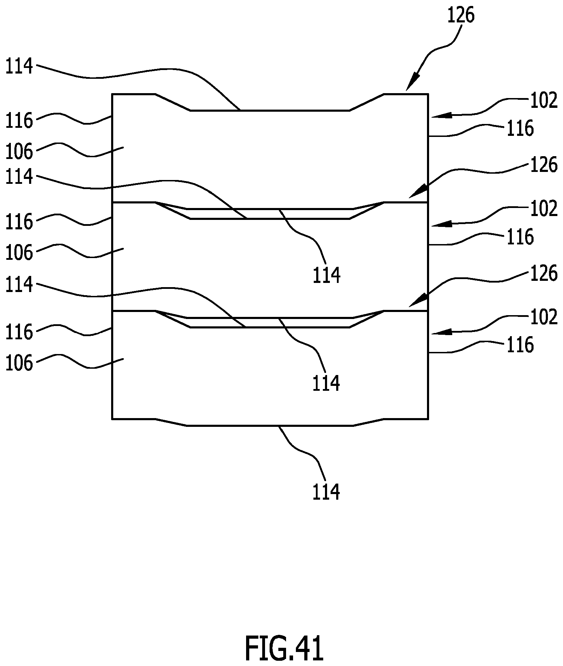

Eine in Fig. 41 dargestellte Ausführungsform einer galvanischen Zelle 102 unterscheidet sich von der in den Fig. 39 und 40 dargestellten Ausführungsform einer galvanischen Zelle 102 im Wesentlichen dadurch, dass die Zellgehäuse 106 einer jeweiligen galvanischen Zelle 102 an einer Hauptseite 114 im Wesentlichen konkav und an einer Hauptseite 114 im Wesentlichen konvex ausgebildet sind.

Ferner ist es denkbar, dass die Zellgehäuse 106 nicht durch Umformen hergestellt sind.

Beispielsweise ist es denkbar, dass die Zellgehäuse 106 der galvanischen Zellen 102 durch Strangpressen hergestellt sind.

Im Übrigen stimmt die in Fig. 41 dargestellte Ausführungsform der galvanischen Zelle 102 hinsichtlich Aufbau und Funktion mit der in den Fig. 39 und 40 dargestellten Ausführungsform einer galvanischen Zelle 102 überein, so dass auf deren vorstehende Beschreibung insoweit Bezug genommen wird.

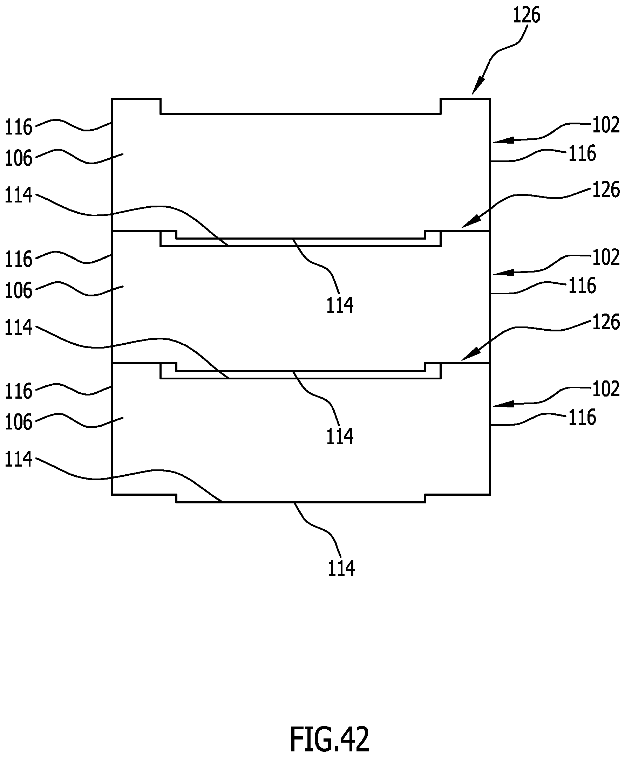

Eine in Fig. 42 dargestellte Ausführungsform einer galvanischen Zelle 102 unterscheidet sich von der in Fig. 41 dargestellten Ausführungsform einer galvanischen Zelle 102 im Wesentlichen dadurch, dass die Zellgehäuse 106 der galvanischen Zellen 102 durch einen Spritzprozess, beispielsweise durch einen Spritzgussprozess, hergestellt sind, insbesondere aus einem Kunststoffmaterial.

Günstig kann es sein, wenn die Zellgehäuse 106 der galvanischen Zellen 102 Kunststoffbauteile, insbesondere Kunststoff-Spritzgussbauteile, sind.

Dabei ist es insbesondere denkbar, dass zwei benachbarte galvanische Zellen 102 mittels eines oder mehrerer durch das Zellgehäuse 106 der galvanischen Zellen 102 gebildeter Abstandshalterelemente 126 in der Stapelrichtung 104 des Batteriemoduls 100 in einer eindeutigen Ausrichtung relativ zueinander positioniert oder positionierbar sind.

Insbesondere ist es denkbar, dass einander zugewandte Zellgehäusewandungen 132 von Zellgehäusen 106 zweier benachbarter galvanischer Zellen 102 an den Hauptseiten 114 des Zellgehäuses 106 jeweils einen oder mehrere als Abstandshalterelemente 126 ausgebildete Vorsprünge oder Erhebungen und mit den Vorsprüngen oder Erhebungen korrespondierende Ausnehmungen umfassen. Aus Übersichtlichkeitsgründen sind die Vorsprünge oder Erhebungen und die Ausnehmungen in Fig. 42 zeichnerisch nicht dargestellt.

Vorzugsweise sind die Vorsprünge oder Erhebungen und die Ausnehmungen derart an den Hauptseiten 114 der Zellgehäuse 106 zweier benachbarter galvanischer Zellen 102 angeordnet, dass die zwei galvanischen Zellen 102 in der Stapelrichtung 104 des Batteriemoduls 100 nur in einer Ausrichtung relativ zueinander positionierbar sind.

Im Übrigen stimmt die in Fig. 42 dargestellte Ausführungsform der galvanischen Zelle 102 hinsichtlich Aufbau und Funktion mit der in Fig. 41 dargestellten Ausführungsform einer galvanischen Zelle 102 überein, so dass auf deren vorstehende Beschreibung insoweit Bezug genommen wird.

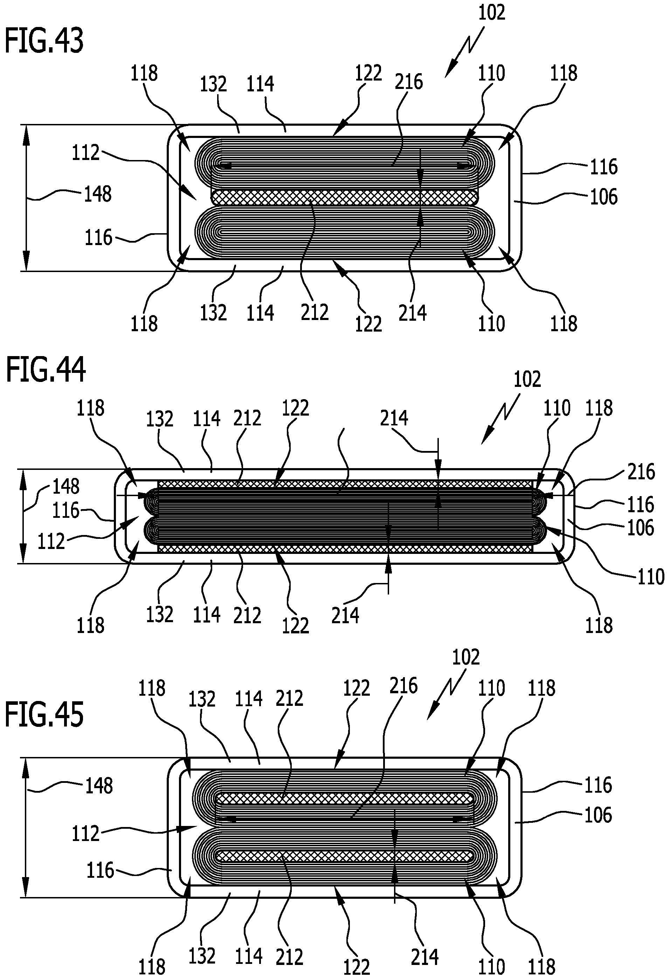

Eine in Fig. 43 dargestellte Ausführungsform einer galvanischen Zelle 102 unterscheidet sich von der in den Fig. 1 bis 36 dargestellten Ausführungsform einer galvanischen Zelle 102 im Wesentlichen dadurch, dass in dem Aufnahmeraum 112 des Zellgehäuses 106 ein Kompensationselement 212 angeordnet ist.

Das Kompensationselement 212 ist vorzugsweise zwischen zwei benachbarten Zellwickeln 110 der galvanischen Zelle 102 angeordnet.

Das Kompensationselement 212 ist vorzugsweise komprimierbar, insbesondere senkrecht zu einer Hauptseite 114 des Zellgehäuses 106 und/oder senkrecht zu einer Mittelebene eines Zellwickels 110 der galvanischen Zelle 102.

Das Kompensationselement 212 ist vorzugsweise elastisch oder plastisch komprimierbar.

Vorzugsweise umfasst das Kompensationselement 212 ein komprimierbares Material oder ist aus einem komprimierbaren Material gebildet.

Das komprimierbare Material ist beispielsweise ein Schaummaterial.

Durch Vorsehen des Kompensationselements 212 in dem Aufnahmeraum 112 des Zellgehäuses 106 ist vorzugsweise eine definierte Belastung der Zellwickel 110 der galvanischen Zelle 102 bei jedem Ladezustand und/oder bei jedem Alterungszustand der galvanischen Zelle 102 realisierbar.

Insbesondere ist durch Vorsehen des Kompensationselements 212 in dem Aufnahmeraum 112 des Zellgehäuses 106 eine Belastung der Zellwickel 110 einer galvanischen Zelle 102 unabhängig von einem oder mehreren der folgenden Faktoren realisierbar:
- einer Steifigkeit des Zellgehäuses 106 der galvanischen Zelle 102;
- auf das Zellgehäuse 106 der galvanischen Zelle 102 wirkenden Spannkräften, insbesondere parallel zu der Stapelrichtung 104 eines Batteriemoduls 100 auf das Zellgehäuse 106 wirkenden Spannkräften;
- einem Wachstum eines oder mehrerer Zellwickel 110 der galvanischen Zelle 102.

Mittels des Kompensationselements 212 ist vorzugsweise ein Wachstum der Zellwickel 110 der galvanischen Zelle 102 über die Lebensdauer derselben ausgleichbar, insbesondere in einer senkrecht zu einer Hauptseite 114 des Zellgehäuses 106 verlaufenden Richtung.

Vorzugsweise ist mittels des in dem Zellgehäuse 106 der galvanischen Zelle 102 angeordneten Kompensationselements 212 ein Wachstum der Zellwickel 110 der galvanischen Zelle 102 derart ausgleichbar, dass das Zellgehäuse 106 der galvanischen Zelle 102 in einer senkrecht zu einer Hauptseite 114 des Zellgehäuses 106 verlaufenden Richtung an einem Lebensdauerende der galvanischen Zelle 102 im Wesentlichen eine Höhe 148 aufweist, welche der Höhe 148 des Zellgehäuses 106 der galvanischen Zelle 102 in einem Auslieferungszustand der galvanischen Zelle 102 entspricht.

Vorzugsweise kann mittels des Kompensationselements 212 eine Änderung der äußeren Abmessungen der galvanischen Zelle 102 aufgrund eines Wachstums von Zellwickeln 110 der galvanischen Zellen 102 begrenzt oder verhindert werden.

Vorzugsweise weist das Kompensationselement 212 in einem Auslieferungszustand der galvanischen Zelle 102 senkrecht zu einer Mittelebene eines Zellwickels 110 der galvanischen Zelle 102 eine Dicke 214 derart auf, dass das Kompensationselement 212 und innerhalb des Zellgehäuses 106 angeordnete Zellwickel 110 den Aufnahmeraum 112 des Zellgehäuses 106 senkrecht zu der Mittelebene eines Zellwickels 110 der galvanischen Zelle 102 im Wesentlichen vollständig ausfüllen.

Insbesondere sind mittels des Kompensationselements 212 Hohlräume innerhalb des Zellgehäuses 106, insbesondere parallel zu der Stapelrichtung 104 eines Batteriemoduls 100, verhinderbar.

Vorzugsweise ist ferner eine Delamination der Zellwickel 110 einer galvanischen Zelle 102 begrenzbar oder verhinderbar.

Günstig kann es ferner sein, wenn mittels des Kompensationselements 212 ein optimaler Betriebszustand der galvanischen Zelle 102 über die gesamte Produktlebensdauer derselben einstellbar ist.

Günstig kann es sein, wenn das Kompensationselement 212 parallel zu der Wickelrichtung 124 eines Zellwickels 110 der galvanischen Zelle eine Breite 216 aufweist, welche mindestens ungefähr der Breite eines Zwischenbereichs 122 des Zellwickels 110 entspricht.

Vorzugsweise weist das Kompensationselement 212 in einer parallel zu einer gemeinsamen Wickellinie 120 eines Zellwickels 110 verlaufenden Richtung eine Höhe auf, welche im Wesentlichen einer Höhe eines Zellwickels 110 der galvanischen Zelle 106 entspricht.

Vorzugsweise weisen die Zellwickel 110 einer galvanischen Zelle 102 in einer parallel zu einer gemeinsamen Wickellinie 120 eines Zellwickels 110 verlaufenden Richtung jeweils eine im Wesentlichen identische Höhe auf.

Im Übrigen stimmt die in Fig. 43 dargestellte Ausführungsform der galvanischen Zelle 102 hinsichtlich Aufbau und Funktion mit der in den Fig. 1 bis 36 dargestellten Ausführungsform einer galvanischen Zelle 102 überein, so dass auf deren vorstehende Beschreibung insoweit Bezug genommen wird.

Eine in Fig. 44 dargestellte Ausführungsform einer galvanischen Zelle 102 unterscheidet sich von der in Fig. 43 dargestellten Ausführungsform einer galvanischen Zelle 102 im Wesentlichen dadurch, dass in dem Aufnahmeraum 112 des Zellgehäuses zwei Kompensationselemente 212 angeordnet sind.

Die Kompensationselements 212 sind vorzugsweise zwischen einer Zellgehäusewandung 132 des Zellgehäuses 106 und einem Zellwickel 110 der galvanischen Zelle 102 angeordnet, insbesondere bezogen auf eine senkrecht zu einer Mittelebene eines Zellwickels 110 verlaufenden Richtung.

Vorzugsweise sind die Kompensationselemente 212 jeweils zwischen einer Zellgehäusewandung 132 einer Hauptseite 114 des Zellgehäuses 106 und einem Zellwickel 110 der galvanischen Zelle 102 angeordnet.

Im Übrigen stimmt die in Fig. 44 dargestellte Ausführungsform der galvanischen Zelle 102 hinsichtlich Aufbau und Funktion mit der in Fig. 43 dargestellten Ausführungsform einer galvanischen Zelle 102 überein, so dass auf deren vorstehende Beschreibung insoweit Bezug genommen wird.

Eine in Fig. 45 dargestellte Ausführungsform einer galvanischen Zelle 102 unterscheidet sich von der in Fig. 43 dargestellten Ausführungsform einer galvanischen Zelle 102 im Wesentlichen dadurch, dass in dem Aufnahmeraum 112 des Zellgehäuses 106 zwei Kompensationselemente 212 angeordnet sind, welche jeweils innerhalb eines Zellwickel 110 der galvanischen Zelle 102 angeordnet sind.

Günstig kann es dabei sein, wenn Wickellagen eines jeweiligen Zellwickels 110 um jeweils ein Kompensationselement 212 herum gewickelt sind.

Das Kompensationselement 212 ist vorzugsweise im Wesentlichen parallel zu einer Mittelebene des jeweiligen Zellwickels 110 angeordnet.

Das Kompensationselement 212 weist parallel zu der Wickelrichtung 124 des Zellwickels 110 vorzugsweise eine Breite 216 auf, welche im Wesentlichen der Breite des Zwischenbereichs 122 des Zellwickels 110 entspricht.

Vorzugsweise kann durch Herumwickeln von Wickellagen eines jeweiligen Zellwickels 110 um jeweils ein Kompensationselement 212 verhindert werden, dass die Wickellagen unmittelbar im Bereich einer gemeinsamen Wickellinie 120 umgelenkt werden.

Insbesondere kann durch Herumwickeln von Wickellagen eines jeweiligen Zellwickels 110 um jeweils ein Kompensationselement 212 ein Umlenkradius vergrößert werden.

Vorzugsweise beträgt ein Umlenkradius in einem Umlenkbereich 118 eines Zellwickels 110 mindestens ungefähr 0,5 mm, insbesondere mindestens ungefähr 1 mm, beispielsweise mindestens 1,5 mm.

Vorzugsweise kann dabei eine Lebensdauer der galvanischen Zelle verlängert werden.

Günstig kann es ferner sein, wenn mittels des innerhalb eines Zellwickels 110 angeordneten Kompensationselements 212 ein Wachstum des jeweiligen Zellwickels 110, insbesondere in einer senkrecht zu einer Mittelebene des Zellwickels 110 verlaufenden Richtung, derart ausgleichbar ist, dass die galvanische Zelle 102 am Lebensdauerende derselben in der senkrecht zu der Mittelebene des Zellwickels 110 verlaufenden Richtung im Wesentlichen eine Höhe 148 aufweist, welche der Höhe der galvanischen Zelle 148 in einem Auslieferungszustand derselben entspricht.

Im Übrigen stimmt die in Fig. 45 dargestellte Ausführungsform der galvanischen Zelle 102 hinsichtlich Aufbau und Funktion mit der in Fig. 43 dargestellten Ausführungsform einer galvanischen Zelle 102 überein, so dass auf deren vorstehende Beschreibung insoweit Bezug genommen wird.

Besondere Ausführungsformen sind die folgenden:
Ausführungsform 1:
   Galvanische Zelle (102), welche Folgendes umfasst:,
      - einen oder mehrere Zellwickel (110);
      - ein Zellgehäuse (106), welches einen Aufnahmeraum (122) zurAufnahme des einen oder der mehreren Zellwickel (110) umfasst,
      wobei der eine oder die mehreren Zellwickel (110) in dem Aufnahmeraum (122) des Zellgehäuses (106) aufgenommen sind und
   wobei das Zellgehäuse (106) ein oder mehrere Abstandshalterelemente (126) umfasst oder bildet.
Ausführungsform 2:
   Galvanische Zelle nach Ausführungsform 1, dadurch gekennzeichnet, dass das Zellgehäuse (106) der galvanischen Zelle (102) an einer Hauptseite (114) des Zellgehäuses (106), insbesondere an beiden Hauptseiten (114) des Zellgehäuses (106), jeweils einen oder mehrere Abstandshalterbereiche (196) und einen Mittelbereich (198) umfasst, wobei der eine oder die mehreren Abstandshalterbereiche (196) senkrecht zu einer Mittelebene eines Zellwickels (110) der galvanischen Zelle (102) von dem Mittelbereich (198) weg ragen und jeweils ein Abstandshalterelement (126) bilden.
Ausführungsform 3:
   Galvanische Zelle nach Ausführungsform 1 oder 2, dadurch gekennzeichnet, dass der eine oder die mehreren Zellwickel (110) der galvanischen Zelle (102) zwei Umlenkbereiche (118) umfasst, in welchen Wickellagen des jeweiligen Zellwickels (110) umgelenkt sind, wobei die Wickellagen in einem jeweiligen Umlenkbereich (118) eine gemeinsame Wickellinie (120) aufweisen, und/oder dass der eine oder die mehreren Zellwickel (110) der galvanischen Zelle (102) einen zwischen den zwei Umlenkbereichen (118) angeordneten Zwischenbereich (122) umfassen.
Ausführungsform 4:
   Galvanische Zelle nach Ausführungsform 3, dadurch gekennzeichnet, dass eine Zellgehäusewandung (136) des Zellgehäuses (106) der galvanischen Zelle (102) in dem Zwischenbereich (122) eines Zellwickels (110) der galvanischen Zelle (102) an dem Zellwickel (110) anliegt.
Ausführungsform 5:
   Galvanische Zelle nach Ausführungsform 3 oder 4, dadurch gekennzeichnet, dass eine Zellgehäusewandung (132) des Zellgehäuses (106) der galvanischen Zelle (102) in dem Umlenkbereich (118) eines Zellwickels (110) der galvanischen Zelle (102) nicht an dem Zellwickel (110) anliegt.
Ausführungsform 6:
   Galvanische Zelle nach einer der Ausführungsformen 2 bis 5, dadurch gekennzeichnet, dass der eine oder die mehreren Abstandshalterbereiche (196) an einem Randbereich, insbesondere an einem ringförmig geschlossenen Randbereich, einer jeweiligen Hauptseite (114) des Zellgehäuses (106) einer jeweiligen galvanischen Zelle (106) angeordnet sind.
Ausführungsform 7:
   Galvanische Zelle nach einer der Ausführungsformen 1 bis 6, dadurch gekennzeichnet, dass das Zellgehäuse (106) der galvanischen Zelle (102) an beiden Hauptseiten (114) im Wesentlichen konkav ausgebildet ist.
Ausführungsform 8:
   Galvanische Zelle nach einer der Ausführungsformen 1 bis 6, dadurch gekennzeichnet, dass das Zellgehäuse (106) der galvanischen Zelle (102) an einer Hauptseite (114) im Wesentlichen konkav und an einer Hauptseite (114) im Wesentlichen im Wesentlichen konvex ausgebildet ist.
Ausführungsform 9:
   Galvanische Zelle nach einer der Ausführungsformen 1 bis 8, dadurch gekennzeichnet, dass das Zellgehäuse (106) der galvanischen Zelle (102) ein metallisches Material umfasst oder durch dieses gebildet wird, beispielsweise Aluminium.
Ausführungsform 10:
   Batteriemodul (100), umfassend zwei oder mehr als zwei galvanische Zellen (102) nach einer der Ausführungsformen 1 bis 9.
Ausführungsform 11:
   Batteriemodul (100) nach Ausführungsform 10, dadurch gekennzeichnet, dass Zellgehäuse (106) zweier benachbarter galvanischer Zellen (102) im Bereich der durch das Zellgehäuse (106) der galvanischen Zellen (102) gebildeten Abstandshalterelemente (126) unmittelbar aneinander anliegen.
Ausführungsform 12:
   Batteriemodul (100) nach Ausführungsform 10 oder 11, dadurch gekennzeichnet, dass Zellgehäuse (106) zweier benachbarter galvanischer Zellen (102) derart ausgebildet sind, dass Zellgehäusewandungen (132) der zwei benachbarten galvanischen Zellen (102) mittels der durch die Zellgehäuse (106) gebildeten Abstandshalterelemente (126) in einem zumindest abschnittsweise, vorzugsweise in einem ringförmig geschlossenen, durch die Abstandshalterelemente (126) begrenzten Zwischenraum (202) voneinander beabstandet angeordnet sind.
Ausführungsform 13:
   Batteriemodul nach Ausführungsform 12, dadurch gekennzeichnet, dass in dem Zwischenraum (202) ein oder mehrere Zusatzelemente (204) angeordnet sind, beispielsweise ein oder mehrere Kompensationselemente (206), ein oder mehrere Propagationsschutzelemente (208), ein oder mehrere Sensorelemente (209) und/oder ein oder mehrere Temperierelemente (210).
Ausführungsform 14:
   Batteriemodul nach einem der Ansprüche 10 bis 13, dadurch gekennzeichnet, dass zwei benachbarte galvanische Zellen (102) mittels eines oder mehrerer durch das Zellgehäuse (106) der galvanischen Zellen (102) gebildeter Abstandshalterelemente (126) in einer Stapelrichtung (104) des Batteriemoduls (100) in einer eindeutigen Ausrichtung relativ zueinander positioniert oder positionierbar sind.
Ausführungsform 15:
   Galvanische Zelle (102), welche Folgendes umfasst:
      - einen oder mehrere Zellwickel (110);
      - ein Zellgehäuse (106), welches einen Aufnahmeraum (112) zur Aufnahme des einen oder der mehreren Zellwickel (110) umfasst;
      - ein oder mehrere Kompensationselemente (212),
   wobei der eine oder die mehreren Zellwickel (110) in dem Aufnahmeraum (112) des Zellgehäuses (106) aufgenommen sind und wobei das eine oder die mehreren Kompensationselemente (212) in dem Aufnahmeraum (112) des Zellgehäuses (106) angeordnet sind.
Ausführungsform 16:
   Galvanische Zelle nach Ausführungsform 15, dadurch gekennzeichnet, dass das eine oder die mehreren Kompensationselemente (212) komprimierbar sind, insbesondere senkrecht zu einer Hauptseite (114) des Zellgehäuses (106) und/oder senkrecht zu einer Mittelebene eines Zellwickels (110) der galvanischen Zelle (102).
Ausführungsform 17:
   Galvanische Zelle nach Ausführungsform 15 oder 16, dadurch gekennzeichnet, dass das eine oder die mehreren Kompensationselemente (212) in einem Auslieferungszustand der galvanischen Zelle (102) senkrecht zu einer Mittelebene eines Zellwickels (110) der galvanischen Zelle (102) eine Dicke (214) derart aufweisen, dass das eine oder die mehreren innerhalb des Zellgehäuses (106) der galvanischen Zelle (102) angeordneten Kompensationselemente (212) und innerhalb des Zellgehäuses (106) angeordnete Zellwickel (110) einen Aufnahmeraum (112) des Zellgehäuses senkrecht zu der Mittelebene des Zellwickels (110) der galvanischen Zelle (102) im Wesentlichen vollständig ausfüllen.
Ausführungsform 18:
   Galvanische Zelle nach einer der Ausführungsformen 15 bis 17, dadurch gekennzeichnet, dass das eine oder die mehreren Kompensationselemente (212) ein komprimierbares Material umfassen oder aus einem komprimierbaren Material gebildet sind.
Ausführungsform 19:
   Galvanische Zelle nach Ausführungsform 18, dadurch gekennzeichnet, dass das komprimierbare Material ein Schaummaterial ist.
Ausführungsform 20:
   Galvanische Zelle nach einer der Ausführungsformen 15 bis 19, dass ein oder mehrere der in dem Aufnahmeraum (112) des Zellgehäuses (106) angeordneten Kompensationselemente (212) zwischen zwei benachbarten Zellwickeln (110) der galvanischen Zelle (102) angeordnet sind.
Ausführungsform 21:
   Galvanische Zelle nach einer der Ausführungsformen 15 bis 20, dadurch gekennzeichnet, dass ein oder mehrere der in dem Aufnahmeraum (112) des Zellgehäuses (106) angeordneten Kompensationselemente (212) zwischen einer Zellgehäusewandung (136) des Zellgehäuses (106) und einem Zellwickel (110) der galvanischen Zelle (102) angeordnet sind, insbesondere bezogen auf eine senkrecht zu einer Mittelebene des Zellwickels (110) verlaufende Richtung.
Ausführungsform 22:
   Galvanische Zelle nach einer der Ausführungsformen 16 bis 21, dadurch gekennzeichnet, dass zwischen Zellgehäusewandungen (132) zweier Hauptseiten (114) des Zellgehäuses (106) der galvanischen Zelle (102) und einem oder mehreren innerhalb des Zellgehäuses (106) angeordneten Zellwickeln (110) jeweils ein oder mehrere Kompensationselemente (212) angeordnet sind.
Ausführungsform 23:
   Galvanische Zelle nach einer der Ausführungsformen 20 bis 22, dadurch gekennzeichnet, dass ein zwischen zwei benachbarten Zellwickeln (110) der galvanischen Zellen (102) angeordnetes Kompensationselement (212) und/oder ein zwischen einer Zellgehäusewandung (132) des Zellgehäuses (106) und einem Zellwickel (110) der galvanischen Zelle (102) angeordnetes Kompensationselement (212) parallel zu einer Wickelrichtung (124) des Zellwickels (110) eine Breite aufweist (216), welche mindestens ungefähr der Breite eines Zwischenbereichs (122) des Zellwickels (110) entspricht.
Ausführungsform 24:
   Galvanische Zelle nach einer der Ausführungsformen 15 bis 24, dadurch gekennzeichnet, dass ein oder mehrere der in dem Aufnahmeraum (112) des Zellgehäuses (106) angeordneten Kompensationselemente (212) innerhalb eines oder mehrerer Zellwickel (110) der galvanischen Zelle (102) angeordnet sind.
Ausführungsform 25:
   Galvanische Zelle nach Ausführungsform 24, dadurch gekennzeichnet, dass ein innerhalb eines Zellwickels (110) angeordnetes Kompensationselement (212) der galvanischen Zelle (102) im Wesentlichen parallel zu einer Mittelebene des jeweiligen Zellwickels (110) angeordnet ist.
Ausführungsform 26:
   Galvanische Zelle nach Ausführungsform 24 oder 25, dadurch gekennzeichnet, dass ein innerhalb eines Zellwickels (110) angeordnetes Kompensationselement (212) der galvanischen Zelle (102) parallel zu einer Wickelrichtung (124) des Zellwickels (110) eine Breite (216) aufweist, welche im Wesentlichen der Breite eines Zwischenbereichs (122) des Zellwickels (110) entspricht.
Ausführungsform 27:
   Galvanische Zelle nach einer der Ausführungsformen 15 bis 26, dadurch gekennzeichnet, dass ein oder mehrere der in dem Aufnahmeraum (112) des Zellgehäuses (106) angeordneten Kompensationselemente (212) in einer parallel zu einer gemeinsamen Wickellinie (120) eines Zellwickels (110) verlaufenden Richtung eine Höhe aufweisen, welche im Wesentlichen einer Höhe des einen oder der mehreren Zellwickel (110) der galvanischen Zelle (102) entspricht.
Ausführungsform 28:
   Batteriemodul (100), wobei das Batteriemodul (100) Folgendes umfasst:
   zwei oder mehr als zwei galvanische Zellen (102) nach einer der Ausführungsformen 15 bis 27.
Ausführungsform 29:
   Batteriemodul (100), wobei das Batteriemodul (100) Folgendes umfasst:
      - zwei oder mehr als zwei galvanische Zellen (102), welche jeweils einen oder mehrere Zellwickel (110) umfassen;
      - ein oder mehrere Abstandshalterelemente (126),
   wobei jeweils ein oder mehrere Abstandshalterelemente (126) zwischen zwei benachbarten galvanischen Zellen (102) angeordnet sind.
Ausführungsform 30:
   Batteriemodul nach Ausführungsform 29, dadurch gekennzeichnet, dass ein jeweiliger Zellwickel (110) der galvanischen Zellen (102) des Batteriemoduls (100) zwei Umlenkbereiche (118) umfasst, in welchen Wickellagen des jeweiligen Zellwickels (110) umgelenkt sind, wobei die Wickellagen in einem jeweiligen Umlenkbereich (118) eine gemeinsame Wickellinie (120) aufweisen.
Ausführungsform 31:
   Batteriemodul nach Ausführungsform 30, dadurch gekennzeichnet, dass das eine oder die mehreren Abstandshalterelemente (126) jeweils derart angeordnet und/oder ausgebildet sind, dass in einer Stapelrichtung (104) des Batteriemoduls (100) mittels der Abstandshalterelemente (126) eine Krafteinleitung in den einen oder die mehreren Zellwickel (110) einer jeweiligen galvanischen Zelle (102) vermeidbar ist, insbesondere im Bereich einer Wickellinie (120) eines jeweiligen Umlenkbereichs (118) des einen oder der mehreren Zellwickel (110).
Ausführungsform 32:
   Batteriemodul nach einer der Ausführungsformen 29 bis 31, dadurch gekennzeichnet, dass ein Kraftfluss zwischen einander benachbarten galvanischen Zellen (102) in einer Stapelrichtung (104) des Batteriemoduls (100) ausschließlich oder zu mindestens ungefähr 75 %, insbesondere zu mindestens ungefähr 85 %, vorzugsweise zu mindestens ungefähr 95 %, über das eine oder die mehreren Abstandshalterelemente (126) erfolgt.
Ausführungsform 33:
   Batteriemodul nach einer der Ausführungsformen 29 bis 32, dadurch gekennzeichnet, dass die galvanischen Zellen (102) prismatische Zellen, insbesondere im Wesentlichen quaderförmige Zellen, sind.
Ausführungsform 34:
   Batteriemodul nach einer der Ausführungsformen 29 bis 33, dadurch gekennzeichnet, dass eine jeweilige galvanische Zelle (102) jeweils ein Zellgehäuse (106) umfasst, in welchem der eine oder die mehreren Zellwickel (110) einer jeweiligen galvanischen Zelle (102) angeordnet sind.
Ausführungsform 35:
   Batteriemodul nach einer der Ausführungsformen 29 bis 34, dadurch gekennzeichnet, dass zwischen Zellgehäusen (106) zweier benachbarter galvanischer Zellen (102) jeweils ein oder mehrere Abstandshalterelemente (126) angeordnet sind.
Ausführungsform 36:
   Batteriemodul nach Ausführungsform 35, dadurch gekennzeichnet, dass ein oder mehrere Abstandshalterelemente (126), welche zwischen Zellgehäusen (106) zweier benachbarter galvanischer Zellen (102) angeordnet sind, an einer Hauptseite (114) der jeweiligen Zellgehäuse (106) angeordnet sind.
Ausführungsform 37:
   Batteriemodul nach Ausführungsform 35 oder 36, dadurch gekennzeichnet, dass ein oder mehrere zwischen zwei Zellgehäusen (106) zweier benachbarter galvanischer Zellen (102) angeordnete Abstandshalterelemente (126) jeweils ein Rahmenelement (134) und/oder ein Zwischenelement (168) umfassen oder bilden.
Ausführungsform 38:
   Batteriemodul nach Ausführungsform 37, dadurch gekennzeichnet, dass ein jeweiliges Rahmenelement (134) einen von dem Rahmenelement (134) und den zwei benachbarten Zellgehäusen (106) umgebenen Innenraum (138) zumindest bereichsweise, beispielsweise mindestens zweiseitig, begrenzt.
Ausführungsform 39:
   Batteriemodul nach Ausführungsform 37 oder 38, dadurch gekennzeichnet, dass ein jeweiliges Rahmenelement (134) Folgendes umfasst:
   - zwei Stützstege (140), welche parallel zueinander und/oder parallel zu einer gemeinsamen Wickellinie (120) eines Umlenkbereichs (118) eines Zellwickels (110) einer galvanischen Zelle (102) angeordnet sind; und/oder
   - einen oder mehrere Verbindungsstege (142), wobei die zwei Stützstege (140) mittels des einen oder der mehreren Verbindungsstege (142) verbunden sind.
Ausführungsform 40:
   Batteriemodul nach einer der Ausführungsformen 37 bis 39, dadurch gekennzeichnet, dass ein jeweiliges Rahmenelement (134) ringförmig geschlossen ausgebildet ist.
Ausführungsform 41:
   Batteriemodul nach Ausführungsform 39 oder 40, dadurch gekennzeichnet, dass die zwei Stützstege (140) und/oder der eine oder die mehreren Verbindungsstege (142) quer, insbesondere senkrecht, zu einer Haupterstreckungsrichtung derselben eine im Wesentlichen konstante Breite (144) aufweisen.
Ausführungsform 42:
   Batteriemodul nach Ausführungsform 41, dadurch gekennzeichnet, dass die Breite (144) der zwei Stützstege (140) im Wesentlichen der Breite (144) des einen oder der mehreren Verbindungsstege (142) entspricht.
Ausführungsform 43:
   Batteriemodul nach Ausführungsform 41, dadurch gekennzeichnet, dass die Breite (144) der zwei Stützstege (140) von der Breite (144) des einen oder der mehreren Verbindungsstege (142) verschieden ist.
Ausführungsform 44:
   Batteriemodul nach einer der Ausführungsformen 41 bis 43, dadurch gekennzeichnet, dass die Breite (144) der zwei Stützstege (140) ungefähr einer Summe einer Wandstärke (152) einer Zellgehäusewandung (132) eines Zellgehäuses (106) einer galvanischen Zelle (102), eines Abstands (150) eines Zellwickels (110) zu der Zellgehäusewandung (132) des Zellgehäuses (106) und einer Breite (154) eines Umlenkbereichs (118) eines Zellwickels (110) entspricht.
Ausführungsform 45:
   Batteriemodul nach einer der Ausführungsformen 39 bis 44, dadurch gekennzeichnet, dass eine Projektion eines jeweiligen Stützstegs (140) eines Rahmenelements (134), insbesondere eines an einem Zellgehäuse (106) einer galvanischen Zellen (102) anliegenden Bereichs des Stützstegs (140), entlang der Stapelrichtung (104) auf eine senkrecht zu der Stapelrichtung (104) angeordnete Projektionsebene einen Abstand von einer Projektion einer jeweiligen gemeinsamen Wickellinie (120) eines Umlenkbereichs (118) eines Zellwickels (110) einer galvanischen Zelle (102) aufweist.
Ausführungsform 46:
   Batteriemodul nach einer der Ausführungsformen 39 bis 45, dadurch gekennzeichnet, dass die Stützstege (140) des Rahmenelements (134) und/oder die Verbindungsstege (142) des Rahmenelements (134) in einer parallel zu einer Stapelrichtung (104) des Batteriemoduls (100) verlaufenden Richtung eine konstante Dicke (146) aufweisen.
Ausführungsform 47:
   Batteriemodul nach einer der Ausführungsformen 39 bis 45, dadurch gekennzeichnet, dass die Stützstege (140) des Rahmenelements (134) und/oder die Verbindungsstege (142) des Rahmenelements (134) in einer parallel zu einer Stapelrichtung (104) des Batteriemoduls (100) verlaufenden Richtung eine lokal variierende Dicke (146) aufweisen.
Ausführungsform 48:
   Batteriemodul nach einer der Ausführungsformen 38 bis 47, dadurch gekennzeichnet, dass das Zwischenelement (168) in dem Innenraum (138) angeordnet ist.
Ausführungsform 49:
   Batteriemodul nach einer der Ausführungsformen 37 bis 48, dadurch gekennzeichnet, dass das Rahmenelement (134) einteilig oder mehrteilig, beispielsweise zweiteilig, ausgebildet ist.
Ausführungsform 50:
   Batteriemodul nach einer der Ausführungsformen 37 bis 49, dadurch gekennzeichnet, dass zwischen Zellgehäusen (106) zweier benachbarter galvanischer Zellen (102) jeweils zwei Abstandshalterelemente (126), insbesondere zwei Rahmenelemente (134), angeordnet sind.
Ausführungsform 51:
   Batteriemodul nach einer der Ausführungsformen 37 bis 50, dadurch gekennzeichnet, dass das Rahmenelement (134) mit dem Zwischenelement (168) zumindest bereichsweise verbunden ist, insbesondere stoffschlüssig.
Ausführungsform 52:
   Batteriemodul nach einer der Ausführungsformen 37 bis 51, dadurch gekennzeichnet, dass das Rahmenelement (134) und das Zwischenelement (168) voneinander verschiedene Materialien umfassen oder aus voneinander verschiedenen Materialien gebildet sind.
Ausführungsform 53:
   Batteriemodul nach einer der Ausführungsformen 37 bis 52, dadurch gekennzeichnet, dass das Zwischenelement (168) ein verformbares Kompensationselement (170) bildet.
Ausführungsform 54:
   Batteriemodul nach Ausführungsform 53, dadurch gekennzeichnet, dass das Kompensationselement (170) parallel zu einer Stapelrichtung (104) des Batteriemoduls (100) komprimierbar ist.
Ausführungsform 55:
   Batteriemodul nach Ausführungsform 53 oder 54, dadurch gekennzeichnet, dass das Kompensationselement (170) ein oder mehrere Verformungselemente (184) umfasst.
Ausführungsform 56:
   Batteriemodul nach einer der Ausführungsformen 37 bis 55, dadurch gekennzeichnet, dass ein Randbereich (182) eines Abstandshalterelements (126), insbesondere ein ringförmig geschlossener Randbereich (182), mehrlagig ausgebildet ist, wobei der mehrlagige Randbereich (182) ein Rahmenelement (134) bildet.
Ausführungsform 57:
   Batteriemodul nach einer der Ausführungsformen 37 bis 56, dadurch gekennzeichnet, dass ein jeweiliges Abstandshalterelement (126), insbesondere ein jeweiliges Rahmenelement (134) und/oder ein jeweiliges Zwischenelement (168), ein metallisches Material, ein Papiermaterial oder ein Kunststoffmaterial umfassen oder aus diesem gebildet sind.
Ausführungsform 58:
   Batteriemodul nach einer der Ausführungsformen 37 bis 57, dadurch gekennzeichnet, dass ein Kraftfluss zwischen einander benachbarten galvanischen Zellen (102) in einer Stapelrichtung (104) des Batteriemoduls (100) ausschließlich oder zu mindestens ungefähr 75 %, insbesondere zu mindestens ungefähr 85 %, vorzugsweise zu mindestens ungefähr 95 %, über das Rahmenelement (134) des einen oder der mehreren Abstandshalterelemente (126) erfolgt.
Ausführungsform 59:
   Batteriemodul nach einer der Ausführungsformen 35 bis 58, dadurch gekennzeichnet, dass ein zwischen Zellgehäusen (106) zweier benachbarter galvanischer Zellen (102) angeordnetes Abstandshalterelement (126), insbesondere ein Rahmenelement (134), jeweils mit den Zellgehäusen (106) der zwei benachbarten galvanischen Zellen (102) stoffschlüssig verbunden, insbesondere verklebt, ist.
Ausführungsform 60:
   Batteriemodul nach Ausführungsform 59, dadurch gekennzeichnet, dass das zwischen Zellgehäusen (106) zweier benachbarter galvanischer Zellen (102) angeordnete Abstandshalterelement (126), insbesondere ein Rahmenelement (134) des Abstandshalterelements (126), jeweils mittels einer Klebefolie (136), welche jeweils zwischen einer Hauptseite (114) eines Zellgehäuses (106) einer jeweiligen galvanischen Zelle (102) und dem Abstandshalterelement (126), insbesondere dem Rahmenelement (134), angeordnet ist, mit den Zellgehäusen (106) der zwei benachbarten galvanischen Zellen (102) verklebt ist.
Ausführungsform 61:
   Batteriemodul nach einer der Ausführungsformen 35 bis 60, dadurch gekennzeichnet, dass sämtliche zwischen jeweils zwei Zellgehäusen (106) zweier benachbarter galvanischer Zellen (102) angeordnete Abstandshalterelemente (126) des Batteriemoduls (100) identisch ausgebildet sind.
Ausführungsform 62:
   Batteriemodul nach einer der Ausführungsformen 37 bis 61, dadurch gekennzeichnet, dass das Rahmenelement (134) und/oder das Zwischenelement (168) jeweils ein Temperierelement (178) umfassen oder bilden.
Ausführungsform 63:
   Batteriemodul nach einer der Ausführungsformen 29 bis 62, dadurch gekennzeichnet, dass das Batteriemodul (100) ein Batteriemodulgehäuse umfasst, in welchem die galvanischen Zellen (102) des Batteriemoduls angeordnet sind.
Ausführungsform 64:
   Verfahren zum Anbringen von Abstandshalterelementen (126) an einer galvanischen Zelle (102), wobei das Verfahren Folgendes umfasst:
   - Bereitstellen einer galvanischen Zelle (102), welche einen oder mehrere Zellwickel (110) umfasst;
   - Aufbringen eines oder mehrerer Abstandshalterelemente (126) aus einem gießfähigen, spritzfähigen und/oder druckfähigen Material (195) auf ein Zellgehäuse (106) der galvanischen Zelle (102).
Ausführungsform 65:
   Verfahren nach Ausführungsform 64, dadurch gekennzeichnet, dass das eine oder die mehreren Abstandshalterelemente (126) mittels eines oder mehrerer der folgenden Aufbringverfahren auf das Zellgehäuse der galvanischen Zelle (102) aufgebracht werden:
   - mittels eines Gießverfahrens;
   - mittels eines Spritzverfahrens;
   - mittels eines Druckverfahrens.
Ausführungsform 66:
   Verfahren nach Ausführungsform 65, dadurch gekennzeichnet, dass das eine oder die mehreren Abstandshalterelemente (102) mittels eines oder mehrerer der folgenden Druckverfahren auf das Zellgehäuse (106) der galvanischen Zelle (102) aufgebracht werden:
   - mittels eines Siebdruckverfahrens;
   - mittels eines Schablonendruckverfahrens.
Ausführungsform 67:
   Verfahren nach einer der Ausführungsformen 64 bis 66 dadurch gekennzeichnet, dass das gießfähige, spritzfähige und/oder druckfähige Material (195) ein Grundmaterial und in dem Grundmaterial angeordnete Abstandshalterpartikel umfasst.
Ausführungsform 68:
   Verfahren nach einer der Ausführungsformen 64 bis 67, dadurch gekennzeichnet, dass ein oder mehrere Propagationsschutzelemente (208) und/oder ein oder mehrere Kompensationselemente (170) aus einem gießfähigen, spritzfähigen und/oder druckfähigen Material (195) auf das Zellgehäuse (106) der galvanischen Zelle (102) aufgebracht werden.
Ausführungsform 69:
   Verfahren nach einer der Ausführungsformen 64 bis 68, dadurch gekennzeichnet, dass das eine oder die mehreren Abstandhalterelemente (126) mit einer Applikationsvorrichtung auf das Zellgehäuse (106) der galvanischen Zelle (102) aufgebracht werden.
Ausführungsform 70:
   Verfahren nach einer der Ausführungsformen 64 bis 69, dadurch gekennzeichnet, dass das eine oder die mehreren Abstandshalterelemente (126) mit einer lokal variierenden Dicke auf das Zellgehäuse (106) der galvanischen Zelle (102) aufgebracht werden.
Ausführungsform 71:
   Verfahren nach einer der Ausführungsformen 64 bis 70, dadurch gekennzeichnet, dass das eine oder die mehreren Abstandshalterelemente (126) mittelbar oder unmittelbar auf das Zellgehäuse (106) der galvanischen Zelle (102) aufgebracht werden.
Ausführungsform 72:
   Verfahren nach einer der Ausführungsformen 64 bis 71, dadurch gekennzeichnet, dass nacheinander mehrere Schichten des gießfähigen, spritzfähigen und/oder druckfähigen Materials (195) auf das Zellgehäuse (106) der galvanischen Zelle (102) aufgebracht werden.
Ausführungsform 73:
   Verfahren nach einer der Ausführungsformen 64 bis 72, dadurch gekennzeichnet, dass das gießfähige, spritzfähige und/oder druckfähige Material (195) Polyurethan und/oder Silikon umfasst oder durch dieses gebildet wird.
Ausführungsform 74:
   Verfahren nach einer der Ausführungsformen 64 bis 73, dadurch gekennzeichnet, dass als Abstandshalterelemente (126) eine Wulst (197) und/oder Noppen (188) auf das Zellgehäuse (106) der galvanischen Zelle (102) aufgebracht, beispielsweise aufgespritzt, werden.
Ausführungsform 75:
   Verfahren nach einer der Ausführungsformen 64 bis 74, dadurch gekennzeichnet, dass das gießfähige, spritzfähige und/oder druckfähige Material () durch eine Schablone auf das Zellgehäuse (106) der galvanischen Zelle (102) aufgebracht wird.
Ausführungsform 76:
   Verfahren zum Herstellen eines Batteriemoduls (100), wobei das Verfahren Folgendes umfasst:
   - Bereitstellen von zwei oder mehr als zwei galvanischen Zellen (102), an welchen Abstandshalterelemente (126) durch ein Verfahren nach einer der Ausführungsformen 64 bis 75 angebracht sind;
   - Stapeln der galvanischen Zellen (102) entlang einer Stapelrichtung (104).

Insgesamt können galvanische Zellen 102 und/oder Batteriemodule 100, welche mehrere galvanische Zellen 102 umfassen, bereitgestellt werden, die eine erhöhte Lebensdauer aufweisen und die insbesondere einfach und kostengünstig herstellbar sind.

## Patentansprüche

1. Verfahren zum Anbringen von Abstandshalterelementen (126) an einer galvanischen Zelle (102), wobei das Verfahren Folgendes umfasst:
- Bereitstellen einer galvanischen Zelle (102), welche einen oder mehrere Zellwickel (110) umfasst;
- Aufbringen eines oder mehrerer Abstandshalterelemente (126) aus einem gießfähigen, spritzfähigen und/oder druckfähigen Material (195) auf ein Zellgehäuse (106) der galvanischen Zelle (102),
wobei das eine oder die mehreren Abstandshalterelemente (126) mittels eines oder mehrerer der folgenden Aufbringverfahren auf das Zellgehäuse der galvanischen Zelle (102) aufgebracht werden:
- mittels eines Gießverfahrens;
- mittels eines Spritzverfahrens;
- mittels eines Druckverfahrens,
wobei das eine oder die mehreren Abstandhalterelemente (126) mit einer Applikationsvorrichtung auf das Zellgehäuse (106) der galvanischen Zelle (102) aufgebracht werden.

2. Verfahren nach Anspruch 1, **dadurch gekennzeichnet, dass** das eine oder die mehreren Abstandshalterelemente (102) mittels eines oder mehrerer der folgenden Druckverfahren auf das Zellgehäuse (106) der galvanischen Zelle (102) aufgebracht werden:
- mittels eines Siebdruckverfahrens;
- mittels eines Schablonendruckverfahrens.

3. Verfahren nach einem der Ansprüche 1 oder 2, **dadurch gekennzeichnet, dass** das gießfähige, spritzfähige und/oder druckfähige Material (195) ein Grundmaterial und in dem Grundmaterial angeordnete Abstandshalterpartikel umfasst.

4. Verfahren nach einem der Ansprüche 1 bis 3, **dadurch gekennzeichnet, dass** ein oder mehrere Propagationsschutzelemente (208) und/oder ein oder mehrere Kompensationselemente (170) aus einem gießfähigen, spritzfähigen und/oder druckfähigen Material (195) auf das Zellgehäuse (106) der galvanischen Zelle (102) aufgebracht werden.

5. Verfahren nach einem der Ansprüche 1 bis 4, **dadurch gekennzeichnet, dass** das eine oder die mehreren Abstandshalterelemente (126) mit einer lokal variierenden Dicke auf das Zellgehäuse (106) der galvanischen Zelle (102) aufgebracht werden.

6. Verfahren nach einem der Ansprüche 1 bis 5, **dadurch gekennzeichnet, dass** das eine oder die mehreren Abstandshalterelemente (126) mittelbar oder unmittelbar auf das Zellgehäuse (106) der galvanischen Zelle (102) aufgebracht werden.

7. Verfahren nach einem der Ansprüche 1 bis 6, **dadurch gekennzeichnet, dass** nacheinander mehrere Schichten des gießfähigen, spritzfähigen und/oder druckfähigen Materials (195) auf das Zellgehäuse (106) der galvanischen Zelle (102) aufgebracht werden.

8. Verfahren nach einem der Ansprüche 1 bis 7, **dadurch gekennzeichnet, dass** das gießfähige, spritzfähige und/oder druckfähige Material (195) Polyurethan und/oder Silikon umfasst oder durch dieses gebildet wird.

9. Verfahren nach einem der Ansprüche 1 bis 8, **dadurch gekennzeichnet, dass** als Abstandshalterelemente (126) eine Wulst (197) und/oder Noppen (188) auf das Zellgehäuse (106) der galvanischen Zelle (102) aufgebracht, beispielsweise aufgespritzt, werden.

10. Verfahren nach einem der Ansprüche 1 bis 9, **dadurch gekennzeichnet, dass** das gießfähige, spritzfähige und/oder druckfähige Material (195) durch eine Schablone auf das Zellgehäuse (106) der galvanischen Zelle (102) aufgebracht wird.

11. Verfahren zum Herstellen eines Batteriemoduls (100), wobei das Verfahren Folgendes umfasst:
- Bereitstellen von zwei oder mehr als zwei galvanischen Zellen (102), an welchen Abstandshalterelemente (126) durch ein Verfahren nach einem der Ansprüche 1 bis 10 angebracht sind;
- Stapeln der galvanischen Zellen (102) entlang einer Stapelrichtung (104).

## Claims

1. Method for attaching spacer elements (126) to a galvanic cell (102), the method comprising the following:
- providing a galvanic cell (102), which comprises one or more cell rolls (110);
- applying one or more spacer elements (126) of a pourable, sprayable and/or printable material (195) to a cell housing (106) of the galvanic cell (102),
wherein the one or more spacer elements (126) is/are applied to the cell housing of the galvanic cell (102) by means of one or more of the following application processes:
- by means of a pouring process;
- by means of a spraying process;
- by means of a printing process,
wherein the one or more spacer elements (126) is/are applied to the cell housing (106) of the galvanic cell (102) by an application device.

2. Method according to Claim 1, **characterized in that** the one or more spacer elements (102) is/are applied to the cell housing (106) of the galvanic cell (102) by means of one or more of the following printing processes:
- by means of a screen printing process;
- by means of a stencil printing process.

3. Method according to either of Claims 1 and 2, **characterized in that** the pourable, sprayable and/or printable material (195) comprises a base material and spacer particles arranged in the base material.

4. Method according to one of Claims 1 to 3, **characterized in that** one or more propagation protection elements (208) and/or one or more compensation elements (170) of a pourable, sprayable and/or printable material (195) is/are applied to the cell housing (106) of the galvanic cell (102).

5. Method according to one of Claims 1 to 4, **characterized in that** the one or more spacer elements (126) is/are applied to the cell housing (106) of the galvanic cell (102) with a locally varying thickness.

6. Method according to one of Claims 1 to 5, **characterized in that** the one or more spacer elements (126) is applied to the cell housing (106) of the galvanic cell (102) indirectly or directly.

7. Method according to one of Claims 1 to 6, **characterized in that** a number of layers of the pourable, sprayable and/or printable material (195) are applied one after the other to the cell housing (106) of the galvanic cell (102).

8. Method according to one of Claims 1 to 7, **characterized in that** the pourable, sprayable and/or printable material (195) comprises polyurethane and/or silicone or is formed by it or them.

9. Method according to one of Claims 1 to 8, **characterized in that** a bead (197) and/or a nub (188) is/are applied to the cell housing (106) of the galvanic cell (102), for example sprayed on, as spacer elements (126).

10. Method according to one of Claims 1 to 9, **characterized in that** the pourable, sprayable and/or printable material (195) is applied to the cell housing (106) of the galvanic cell (102) through a stencil.

11. Method for producing a battery module (100), the method comprising the following:
- providing two or more than two galvanic cells (102), to which spacer elements (126) have been attached by a method according to one of Claims 1 to 10;
- stacking the galvanic cells (102) along a stacking direction (104).

## Revendications

1. Procédé de fixation d'éléments d'espacement (126) sur une cellule galvanique (102), le procédé comprenant :
- la fourniture d'une cellule galvanique (102) qui comprend un ou plusieurs enroulements de cellule (110) ;
- l'application d'un ou plusieurs éléments d'espacement (126) constitués d'un matériau apte à être coulé, injecté et/ou imprimé (195) sur un boîtier de cellule (106) de la cellule galvanique (102),
lesdits un ou plusieurs éléments d'espacement (126) étant appliqués sur le boîtier de cellule de la cellule galvanique (102) au moyen d'un ou plusieurs des procédés d'application suivants :
- au moyen d'un procédé de coulée ;
- au moyen d'un procédé d'injection ;
- au moyen d'un procédé d'impression,
lesdits un ou plusieurs éléments d'espacement (126) étant appliqués sur le boîtier de cellule (106) de la cellule galvanique (102) à l'aide d'un dispositif d'application.

2. Procédé selon la revendication 1, **caractérisé en ce que** lesdits un ou plusieurs éléments d'espacement (102) sont appliqués sur le boîtier de cellule (106) de la cellule galvanique (102) au moyen d'un ou plusieurs des procédés d'impression suivants :
- au moyen d'un procédé de sérigraphie ;
- au moyen d'un procédé d'impression au pochoir.

3. Procédé selon l'une quelconque des revendications 1 ou 2, **caractérisé en ce que** le matériau apte à être coulé, injecté et/ou imprimé (195) comprend un matériau de base et des particules d'espacement disposées dans le matériau de base.

4. Procédé selon l'une quelconque des revendications 1 à 3, **caractérisé en ce qu'**un ou plusieurs éléments de protection contre la propagation (208) et/ou un ou plusieurs éléments de compensation (170) constitués d'un matériau apte à être coulé, injecté et/ou imprimé (195) sont appliqués sur le boîtier de cellule (106) de la cellule galvanique (102).

5. Procédé selon l'une quelconque des revendications 1 à 4, **caractérisé en ce que** lesdits un ou plusieurs éléments d'espacement (126) sont appliqués sur le boîtier de cellule (106) de la cellule galvanique (102) sur une épaisseur variant localement.

6. Procédé selon l'une quelconque des revendications 1 à 5, **caractérisé en ce que** lesdits un ou plusieurs éléments d'espacement (126) sont appliqués indirectement ou directement sur le boîtier de cellule (106) de la cellule galvanique (102).

7. Procédé selon l'une quelconque des revendications 1 à 6, **caractérisé en ce que** plusieurs couches successives du matériau apte à être coulé, injecté et/ou imprimé (195) sont appliquées sur le boîtier de cellule (106) de la cellule galvanique (102).

8. Procédé selon l'une quelconque des revendications 1 à 7, **caractérisé en ce que** le matériau apte à être coulé, injecté et/ou imprimé (195) comprend du polyuréthane et/ou de la silicone ou est constitué de celui-ci.

9. Procédé selon l'une quelconque des revendications 1 à 8, **caractérisé en ce qu'**un bourrelet (197) et/ou des picots (188) sont appliqués, par exemple projetés, sur le boîtier de cellule (106) de la cellule galvanique (102) en tant qu'éléments d'espacement (126).

10. Procédé selon l'une quelconque des revendications 1 à 9, **caractérisé en ce que** le matériau apte à être coulé, injecté et/ou imprimé (195) est appliqué sur le boîtier de cellule (106) de la cellule galvanique (102) au moyen d'un pochoir.

11. Procédé de production d'un module de batterie (100), le procédé comprenant :
- la fourniture de deux ou plus de deux cellules galvaniques (102) sur lesquelles des éléments d'espacement (126) sont fixés par un procédé selon l'une quelconque des revendications 1 à 10 ;
- l'empilement des cellules galvaniques (102) dans une direction d'empilement (104).
